# EUROPEAN PATENT APPLICATION

(11) **EP 4 149 099 A1**
(43) Date of publication of application: **15.03.2023**
(21) Application number: 22189321.7
(22) Date of filing: 08.08.2022
(51) Int. Cl.: H04M 15/00, H04W 4/24, H04L 45/00, H04W 28/02, H04L 47/10, H04L 47/24

(54) **TEMPORARY NETWORK LINK PERFORMANCE ELEVATION**

(30) Priority: 10.09.2021 US 202163242773 P; 21.06.2022 US 202217844969
(71) Applicant: INTEL Corporation, Santa Clara, CA 95054 (US)
(72) Inventor: SVENNEBRING, Jonas, 19143 Sollentuna (SE); SARKAR, Tirthendu, 560102 Bangalore (IN); CHARITIDIS, Theoharis, 16440 Stockholm (SE)
(74) Representative: Maiwald GmbH

(57) **Abstract**

Devices, systems, and methods for temporary link performance elevation are disclosed herein. In one embodiment, a link performance elevation (LPE) request is received. The LPE request is a request to temporarily boost performance of a network link between an endpoint and a service provider for a finite duration. Based on the LPE request, a temporary performance boost is activated for the network link at the start of the finite duration, and the temporary performance boost is deactivated for the network link at the end of the finite duration.

## Description

### CROSS-REFERENCE TO RELATED APPLICATION

This patent application claims the benefit of the filing date of U.S. Provisional Patent Application Serial No. 63/242,773, filed on September 10, 2021, and entitled "TEMPORAL NETWORK LINK PERFORMANCE ELEVATION," the contents of which are hereby expressly incorporated by reference.

### FIELD OF THE SPECIFICATION

This disclosure relates in general to the field of communication networks and systems, and more particularly, though not exclusively, to temporarily elevating the performance of network links.

### BACKGROUND

At times, the performance of a network can be insufficient to meet the demands of clients. For example, a client may engage in a service or activity with high bandwidth requirements (e.g., video streaming) and/or the network may experience a temporary drop in performance (e.g., during peak hours with heavy loads or in poor coverage areas), which may result in the network performance being insufficient for the client's desired activity. Typically, if the client desires better performance, the client must purchase a long-term or permanent subscription to a higher service tier, even if the client only needs higher performance in limited scenarios.

### BRIEF DESCRIPTION OF THE DRAWINGS

The present disclosure is best understood from the following detailed description when read with the accompanying figures. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.
**FIG. 1** illustrates a communication system with a link performance elevation (LPE) service in accordance with certain embodiments.
**FIG. 2** illustrates an example of the interface for LPE requests in a communication system.
**FIG. 3** illustrates an example of quality of service (QoS) flows in a 5G network that can be leveraged for LPE requests.
**FIG. 4** illustrates an example business model flowchart for an LPE service.
**FIGS. 5A-C** illustrate an example of a one-time LPE subscription over a specified time frame.
**FIGS. 6A-C** illustrate examples of various QoS performance patterns that can be provided by an LPE service.
**FIG. 7** illustrates a flowchart for processing LPE requests in accordance with certain embodiments.
**FIG. 8** illustrates an example edge computing environment in accordance with various embodiments.
**FIG. 9** illustrates an example of infrastructure equipment in accordance with various embodiments.
**FIG. 10** illustrates an example of a platform in accordance with various embodiments.
**FIG. 11** depicts a block diagram for an example Multi-access Edge Computing (MEC) system architecture according to various embodiments.
**FIG. 12** illustrates an example embodiment of a system that leverages link performance prediction (LPP) technology.
**FIG. 13** illustrates example logical components and interaction points of an LPP service (LPPS) in accordance with various embodiments.
**FIG. 14** illustrates an example software distribution platform to distribute software.

### EMBODIMENTS OF THE DISCLOSURE

At times, the performance of a network can be insufficient to meet the demands of clients. For example, a client may engage in a service or activity with high bandwidth requirements (e.g., video streaming) and/or the network may experience a temporary drop in performance (e.g., during peak hours with heavy loads or in poor coverage areas), which may result in the network performance being insufficient for the client's desired activity. Typically, if the client desires better performance, the client must purchase a long-term or permanent subscription to a higher service tier, even if the client only needs higher performance in limited scenarios.

Accordingly, this disclosure presents embodiments of a link performance elevation (LPE) service, which allows users of a network to request an elevated link performance on demand, such as when the default bandwidth is insufficient to fulfill their needs. For example, an LPE request may seek a short-term elevation of link performance (e.g., as opposed to a long-term or permanent subscription-based priority level) based on some incentive, such as a monetary or credit-based incentive. Moreover, in response to the request, the elevated link performance may be fulfilled by increasing the priority of the network link, such as by increasing certain quality of service (QoS) parameters for traffic sent over the link. Alternatively, in some embodiments, the request may seek to temporarily reduce the link performance, for example, in exchange for a reduced cost, which may be referred to as a link performance reduction (LPR) or link performance adjustment (LPA) request.

This disclosure presents examples of the interface and network parameters for enabling LPE requests from both clients (e.g., user equipment (UE)) and service providers (e.g., media streaming services and other web services), along with examples of the business and incentive agreement models for the LPE service.

In particular, this solution not only allows clients (e.g., end users) to request elevated link performance (e.g., performance boosts), but also allows service providers to request elevated link performance on behalf of their customers. For example, a shopping service (e.g., Amazon) can boost the network performance for its customers to enable them to finalize purchases. Similarly, a content provider can boost the network performance for its premium subscribers to guarantee them enough bandwidth for certain services, such as 4K streaming.

This solution provides numerous advantages. For example, this solution enables clients (or a service provider) to request improved performance for various network metrics, which makes it possible for clients to experience stable performance on their respective devices/platforms. As an example, a client can interface with a scheduler to request one of several pre-defined available performance plans, and in response, the scheduler returns a price for the request, which the client can then accept or decline. In this manner, the LPE service provides customers with the option of having the network operate more favorably on their devices/platforms, while also allowing network operators to receive a new stream of revenue as infrastructure deployment costs continuously increase.

Further, the LPE service can also be used in conjunction with link performance prediction (LPP) technology. For example, the LPE service can leverage link performance predictions to proactively request elevated link performance, provide more accurate pricing, and so forth. In some embodiments, LPP uses state of the art machine learning techniques and a comprehensive set of historical and real-time data feeds to dynamically predict the quality of any given radio access network (RAN) link, which enables application-level behavior to be optimized based on the predictions. In this manner, LPP can be used to improve the performance of applications that rely on wireless networks (e.g., 4G/5G cellular networks) by making them more aware of the underlying network behavior (e.g., bandwidth, latency, capacity, coverage holes, and so forth) while also providing forward-looking predictions on how individual connections or links will change over time. For example, LPP can provide estimations of current link capacity and predictions of how that will change in the near-term or mid-term future, and applications and services can then adapt their task behaviors to stay within the given link capacity in order to provide the best possible user experience, such as by taking precautions to compensate for coverage holes or obstructions and/ortaking advantage of areas with strong coverage (e.g., areas within range of high-performing 5G millimeter wave (mmWave) cells).

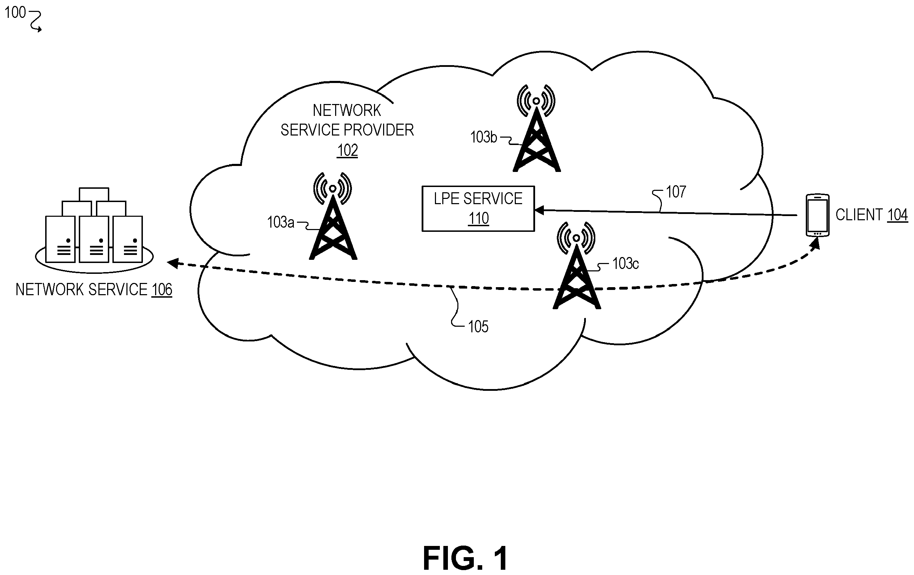

**FIG. 1** illustrates a communication system 100 with a link performance elevation (LPE) service 110 in accordance with certain embodiments. In the illustrated embodiment, the LPE service 110 enables a requested temporary change in a network service provider 102 (e.g., wireless/cellular service provider, Internet service provider, or other communications service provider (CoSP)) to provide improved quality of service (QoS) for a connection 105 between a client 104 (e.g., endpoint or end user) and a network service 106 (e.g., content provider) according to specified requirement(s). For example, the client 104 or another entity (e.g., the network service 106 or the network service provider 102) may send an LPE request 107 to the LPE service 110 to request a temporary performance boost for the network connection 105 based on specified QoS metrics. The client 104 can be any endpoint device, such as a mobile device (e.g., smartphone, tablet), computer, television, game console, and so forth, which may be connected to the network service provider 102 via a wired and/or wireless interface.

The request 107 and subsequent link performance elevation typically come with some form of cost. The temporary nature of the boosted performance can be tied to a shorter time period (e.g., a few minutes or an hour), a session (e.g., the duration of a shopping session or a movie clip), or a location (e.g., activity in a particular area and/or within a radio cell of a particular base station 103a-c), among other examples. QoS refers to network metrics that are desirable for a client 104 and affect the overall experience when accessing a network 102 (e.g., the Internet), such as uplink or downlink bandwidth, latency, consistency therein, and so forth.

Network determinism and the ability to provide a certain target QoS to a customer is a trend for the evolution of 5G networks, as devices utilizing the network are projected to be more diverse. Enterprise customers also benefit from this solution, as it can be used to increase the performance on their respective platforms.

With many new applications utilizing mobile networks on the horizon, utilizing the network on a more application-specific level becomes increasingly important. For example, a customer utilizing cloud gaming can benefit from having lower latency on their mobile device, thus enhancing their gaming experience. Another example is that a large web-based shopping service (e.g., Amazon) can benefit from allocating network resources so their customers can consistently reach their web page. Subscription services such as video streaming (e.g., Netflix) can benefit by ensuring that premium paying customers receive the higher quality that they paid for even if the respective service agreement (SA) would not typically support that at a given time in a given area, thereby increasing customer satisfaction and the likelihood that they remain on the premium subscription. A more mission critical application, such as vehicle traffic management or remote surgery, may require the network performance to be consistent.

Currently, service providers are unable to provide these types of targeted QoS levels to specific users or network connections on a short-term or temporary basis. Accordingly, this disclosure presents various embodiments of a link performance elevation (LPE) service that enables temporary boosts in network performance for specific network connections (e.g., between endpoints/service providers) to achieve targeted QoS levels requested for those connections. The performance boost may be any increase, large or small, in the actual or expected QoS of the network link (e.g., based on applicable QoS metrics). In particular, various examples of the interface, network implementation, and pricing model for LPE requests are presented in the following sections.

### LPE Interface

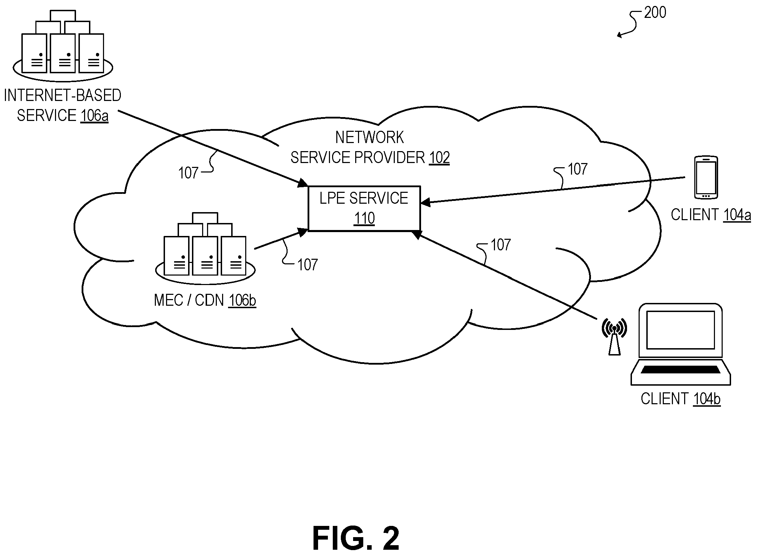

**FIG. 2** illustrates an example of the interface for link performance elevation (LPE) requests 107 in a communication system 200. In particular, the interface into the LPE service 110 can originate from one or multiple requestors, including clients 104a-b, network services 106a-b, and/or network service providers 102.

Examples of requesting entities include, but are not limited to:
1. a client device (e.g., mobile device 104a, laptop 104b), including:
   a. an application running on the client;
   b. a web application in a browser on the client;
   c. an operating system on the client;
   d. driver or firmware in the client (e.g., from the modem domain);
   e. a device/computer connected through a client that acts as a Wi-Fi access point (AP), Bluetooth, or other wireless interface (e.g., client 104b); and/or
   f. a device/computer connected through a client over USB, Ethernet, or other wired interface;
2. a service provider 106a (e.g., provider of an Internet-based or web-based service, such as a content provider); and/or
3. an intra-service provider (SP) 106b (e.g., provider of a multi-access edge computing (MEC) or content delivery network (CDN) service).

The LPE service 110 can be located at one or several locations, such as:
1. a stand-alone central or distributed service in a CoSP network 102;
2. as part of a base station (xNB);
3. at the edge in a MEC; and/or
4. in a Radio Intelligent Controller (RIC).

In some embodiments, the interface may be implemented as part of a specification (e.g., 3GPP or IEEE 802 (Wi-Fi)) or carried over standard Internet protocols (e.g., TCP/IP, UDP/IP, QUICC/IP). In some embodiments, for example, the interface may be implemented as a HTTP(S) RESTful-based protocol.

The LPE service 110 in turn connects to the Radio Access Network (RAN), Core Network, MEC, and/or CDN services, and also potentially to non-CoSP based services (e.g., cloud services) to tune the required QoS parameters, as described further in the follow section.

### LPE Network Implementation

Examples of QoS parameters/metrics that can be tuned and/or negotiated through LPE requests include:
1. bandwidth / throughput;
2. latency / transit delay;
3. consistency;
4. priority;
5. protection;
6. residual error rate; and
7. resilience.

Network-related actions or functions that may be leveraged to tune these QoS parameters include:
1. supporting dedicated bandwidth;
2. improving loss characteristics;
3. avoiding and managing network congestion;
4. shaping network traffic; and
5. setting traffic priorities across the network.

For example, the configuration of the network and/or network traffic can be adjusted to achieve the requisite QoS parameter(s) for a particular LPE request. In this manner, the requested performance boost for an LPE request can be activated by adjusting the relevant network configuration parameters, which causes the performance of the link to increase (e.g., as measured based on applicable QoS metrics).

The pricing can also be dynamically adjusted based on the particular QoS architecture employed, including those defined by standards organizations such as the Internet Engineering Task Force (IETF)).

For example, Integrated Services (IntServ) uses the Resource Reservation Protocol (RSVP) to explicitly signal the QoS needs of an application's traffic along the devices in the end-to-end path through the network. If every network device along the path can reserve the necessary bandwidth, the originating application can begin transmitting. When IntServ is requested by a UE, pricing will be higher since resource reservations have to be made at all network components (e.g., edge, core). Live streaming is an example of a typical use case for IntServ.

As another example, Differentiated Services (DiffServ) focuses on aggregated and provisioned QoS. Instead of signaling an application's QoS requirements, DiffServ uses a DiffServ Code Point (DSCP) in the IP header to indicate the required QoS levels.

Other examples of network configuration parameters, features, and functions that can potentially be leveraged to accommodate an LPE request include the number of hops on a link, traffic classifications, scheduling priorities, congestion management, congestion avoidance, shaping, and other standards-based QoS frameworks (e.g., 5G QoS flow management).

Regarding the number of hops, packets can be routed through the network via different paths with different numbers of hops based on dynamically negotiated prices. As an example, for real-time gaming use cases, packets may be routed only one or two hops away from the UE to meet the response time constraints for real-time games in the cloud gaming context.

Regarding traffic classifications, traffic can be classified at different layers of the network stack by multiple parameters based on dynamic negotiation:
- Layer 2 - Based on 802.1Q Class of Service (CoS) bits, Multiprotocol Label Switching Experimental Values (MPLS EXP);
- Layer 3 - Based on IP Precedence (IPP), Differentiated Services Code Points (DSCP), IP Explicit Congestion Notification (ECN), source/destination IP address, and so forth;
- Layer 4 - Based on L4 protocol (TCP/UDP), source/destination ports; and/or
- Layer 7 - Based on application signatures.

Regarding scheduling, whenever the receive (Rx) rate exceeds the transmission (Tx) rate of a network resource, congestion occurs. As a result, various scheduling-based techniques can be leveraged to reduce or avoid congestion, such as congestion management, congestion avoidance, shaping, and so forth.

Regarding congestion management, buffers (e.g., queues) are typically allocated for traffic with varying levels of priority so that high-priority packets can be scheduled sooner than low-priority packets. Thus, in some embodiments, queues can be allocated dynamically based on price negotiated classifications associated with LPE requests.

Moreover, congestion avoidance can be leveraged by dropping certain packets early, such as packets that have been classified as "low cost" pursuant to the dynamic price negotiations.

Further, shaping can be leveraged to delay excess traffic above a price-negotiated rate. For example, a buffer can be used to hold packets and shape the flow when the data rate of the source is higher than expected.

### LPE using 5G QoS Flows

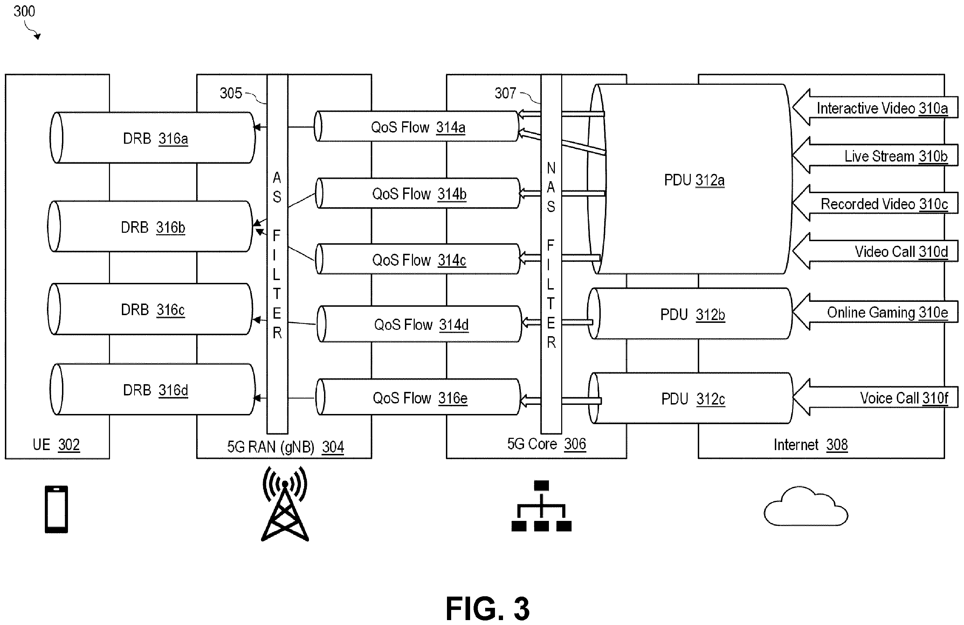

Other standards-based QoS frameworks can also be leveraged for LPE requests, such as 5G QoS flows. For example, **FIG. 3** illustrates an example of QoS flows in a 5G network 300 that can be leveraged for LPE requests. As shown in FIG. 3, data streams/packets 310a-f transmitted between the backend data network 308 and the user equipment (UE) devices 302 are mapped to various QoS flows 315a-e to provide the requisite QoS levels for the respective streams 310a-f. In the illustrated example, the data streams 310a-f include an interactive video 310a, a live stream 310b, a recorded video 310c, a video call 310d, online gaming 310e, and a voice call 310f.

Moreover, in the 5G New Radio (NR) standard, QoS is enforced at the QoS flow level. For example, packets 310a-f are mapped to QoS flows 314a-e by non-access stratum (NAS) filters 307 in the 5G core 306, and QoS flows 314a-e are mapped to data radio bearers (DRBs) 316a-d by access stratum (AS) filters 305 in the 5G radio access network (RAN) 304 (which includes wireless base stations or gNodeBs (gNBs)).

For each QoS flow 314a-e, packets are classified and marked using QoS flow identifiers (QFls). The 5G QoS flows 314a-e are mapped to data radio bearers (DRBs) 316a-d in the access network 304 by the access stratum (AS) filter(s) 305.

The 5G QoS architecture supports the following QoS flow types:
1. Guaranteed Bit Rate (GBR) QoS flow: requires guaranteed flow bit rate;
2. Non-GBR QoS flow: does not require guaranteed flow bit rate; and
3. Delay critical QoS flow for mission critical: guaranteed flow bit rate and/lor low latency/delay.

The 5G network can provide the UE 302 with one or more QoS flow descriptions 314 associated with a protocol data unit (PDU) session 312 during the PDU session establishment or at the PDU session modification. Each QoS flow 314 may include the following information:
1. A 5G QoS identifier (5QI);
2. An allocation and retention priority (ARP);
3. For a GBR QoS Flow:
   a) Guaranteed Flow Bit Rate (GFBR) for both uplink and downlink;
   b) Maximum Flow Bit Rate (MFBR) for both uplink and downlink;
   c) Maximum Packet Loss Rate for both uplink and downlink;
   d) Delay Critical Resource Type; and/or
   e) Notification Control;
4. For a Non-GBR QoS Flow:
   a) Reflective QoS Attribute (RQA);
   b) Session aggregate maximum bit rate (AMBR); and/or
   c) UE AMBR.

For example, the 5G Core 306 establishes one or more PDU sessions 312a-c for each UE 302, which provides end-to-end user plane connectivity between the UE 302 and the data network 308 (e.g., the Internet) for transmission of the relevant data streams/packets 310. The 5G RAN 304 establishes at least one data radio bearer (DRB) 316 along with the PDU session 312, and additional DRB(s) 316 for QoS flow(s) 314 of that PDU session 312 can be subsequently configured for each UE 302. Moreover, the 5G RAN 304 maps packets 310 belonging to different PDU sessions 312 to different DRBs 316.

The 5G RAN 304 and 5G Core 306 ensure quality of service (QoS) by mapping packets 310 to appropriate QoS flows 314 and DRBs 316 through a two-step mapping of internet protocol (IP) flows 310 to QoS flows 314 (e.g., via non-access stratum (NAS) filter 307) and from QoS flows 314 to DRBs 316 (e.g., via access stratum (AS) filter 305). In some embodiments, this association can be configured dynamically to accommodate LPE requests, as described throughout this disclosure. For example, based on requested QoS levels and price negotiations for LPE requests, the mapping of flows in the 5G network 300 (e.g., data streams/packets 310, PDUs 312, QoS flows 314, and/or DRBs 316) may be performed dynamically to achieve the negotiated QoS levels for certain flows.

### LPE using Content Delivery Networks

Content delivery networks (CDNs) can also be leveraged for LPE requests. Content delivery networks augment the end-to-end transport network by distributing on it a variety of intelligent applications employing techniques designed to optimize content delivery, such as web caching, server load balancing, request routing, and content services.

Web caches store popular content on servers that have the greatest demand for the content requested. These shared network appliances reduce bandwidth requirements, reduce server load, and improve the client response times for content stored in the cache. Web caches are populated based on requests from users (pull caching) or based on preloaded content disseminated from content servers (push caching). Thus, in some embodiments, content delivery networks, servers, and/or caches can be utilized or configured to help achieve the requisite QoS levels for LPE requests. In these embodiments, the price of an LPE request can be differentially negotiated based on various considerations, including whether the requested content is already cached or needs to be obtained from remote servers, among other considerations.

### Business/Pricing Models

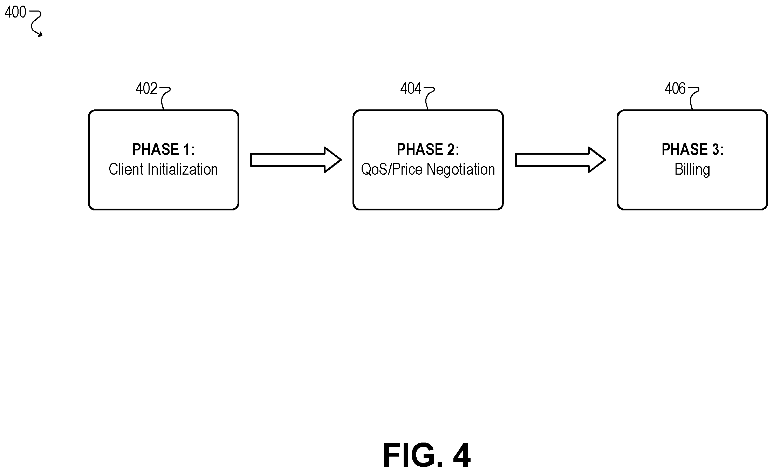

**FIG. 4** illustrates an example business model flowchart 400 for a link performance elevation (LPE) service. There are many potential business models for LPE, which can generally be divided into three phases, as shown in flowchart 400. In the first phase 402, a client initializes a connection with the communications service provider (CoSP) and may request a price for certain QoS option(s). In the second phase 404, a negotiation takes place between the CoSP and the client. For example, the CoSP may evaluate the request and propose a price, which the client may accept or decline. In some cases, the client may request a price for a particular QoS option from the CoSP over many iterations until the client finally accepts the price. Finally, in the third phase 406, the CoSP issues a bill to the client based on the previously-agreed upon pricing reached during the negotiation phase. In some cases, for example, the price may be determined based on a price agreement (e.g., a fixed price) and/or based on the end result (e.g., the actual QoS that was delivered to the client). Further, in some cases, when the client only makes use of the boosted network link for part of the duration in which it is available, the full negotiated price may be charged, or a pro-rata price may be charged based on actual usage.

A first-hand implementation example is where, upon a requested QoS option from the client, the CoSP bills the client based on a tariff. This scenario can be referred to as the client having a price agreement with the CoSP. Another possibility is that the client requests a QoS option from the CoSP, the CoSP provides the client with an upper bound cost estimate (P), and the CoSP ultimately bills the client based on the outcome of the client's experienced QoS. This scenario can be referred to as the client having a QoS confirmation with the CoSP.

In reality, networks are volatile and, for the most part, non-deterministic in the different metrics. As a result, the target QoS for an LPE request can be some pre-defined interval on each QoS metric that has been selected to be increased. In this manner, the expectation is that a certain percentage of the measured values for each QoS metric will be within the specified interval.

Table 1 provides an example of a tariff-based pricing model for various LPE options/plans, where each option (e.g., 1 to n) corresponds to a certain combination of QoS parameters and an associated price. For example, each QoS metric is discretized into nonoverlapping intervals, where Bᵢ, Cᵢ, and Lᵢ each represent a particular range of performance for bandwidth (e.g., megabits per second (Mbps)), consistency (e.g., average packet loss), and latency (e.g., round trip time (RTT)), respectively. As an example, B₁ may represent bandwidth ranging from 0-100 Mbps (e.g., B₁ = 0-100 Mbps). Moreover, Pᵢ represents the price for a particular combination of bandwidth, consistency, and latency. In some cases, the pricing/tariff may be based on a conventional statistical approach, such as the generalized linear model (GLM) method or any other suitable method(s) (e.g., pricing in GLM P = *γ*₀Π*γᵢ.* where *γᵢ* is associated with a cell value from a respective column). In this manner, a customer (e.g., a client/end user or service provider) can request a particular QoS option, which specifies the expected performance for the various QoS metrics, along with an associated price, as shown in Table 1.

**Table 1: Tariff-based LPE pricing model based on bandwidth, consistency, and latency**

| **Option** | **Bandwidth (Mbps)** | **Consistency (average packet loss)** | **Latency (RTT)** | **Price** |
|---|---|---|---|---|
| 1 | B₁ | C₁ | L₁ | P₁ |
| 2 | B₂ | C₁ | L₁ | P₂ |
| ... | ... | ... | ... | ... |
| k | B₁ | C₂ | L₁ | Pₖ |
| ... | ... | ... | ... | ... |
| n | Bₙ | Cₙ | Lₙ | Pₙ |

Building on the tariff model in Table 1, the pricing model can also consider network congestion or load as an additional variable to achieve more accurate pricing. As shown in Table 2, for example, the pricing options can include a metric for the projected network congestion (Congᵢ), which may be obtained through link performance predictions or another network analysis API. For example, if the congestion is projected to be within some higher interval (e.g., Cong₂, where Cong₂ > Cong₁), the price may increase since fewer clients can be supported with the desired QoS, thus compensating for the omitted customers.

**Table 2: Tariff-based LPE pricing model based on bandwidth, consistency, latency, and network congestion**

| **Option** | **Bandwidth (Mbps)** | **Consistency (average packet loss)** | **Latency (RTT)** | **Congestion/Load (RAN)** | **Price** |
|---|---|---|---|---|---|
| 1 | B₁ | C₁ | L₁ | Cong₁ | P₁ |
| 2 | B₁ | C₁ | L₁ | Cong₂ | P₂ |
| 3 | B₂ | C₁ | L₁ | Cong₁ | P₃ |
| ... | ... | ... | ... | ... | ... |
| k | B₁ | C₂ | L₁ | Cong₁ | Pₖ |
| ... | ... | ... | ... | ... | ... |
| n | Bn | Cn | Ln | Congn | Pn |

Moreover, various types of subscriptions can be offered, such as recurring subscriptions, one-time subscriptions, and so forth. A recurring subscription covers the case where the client is billed on a monthly basis and can be based on some time quota in which the increased performance is utilized. The requested QoS option can also be scheduled to be activated (i) during a fixed timeframe, and/or (ii) only for certain types of traffic or activity, such as when the client is using a particular application, protocol, or service (e.g., video streaming, secure https connections). These can be considered in both the recurring and the one-time subscription cases.

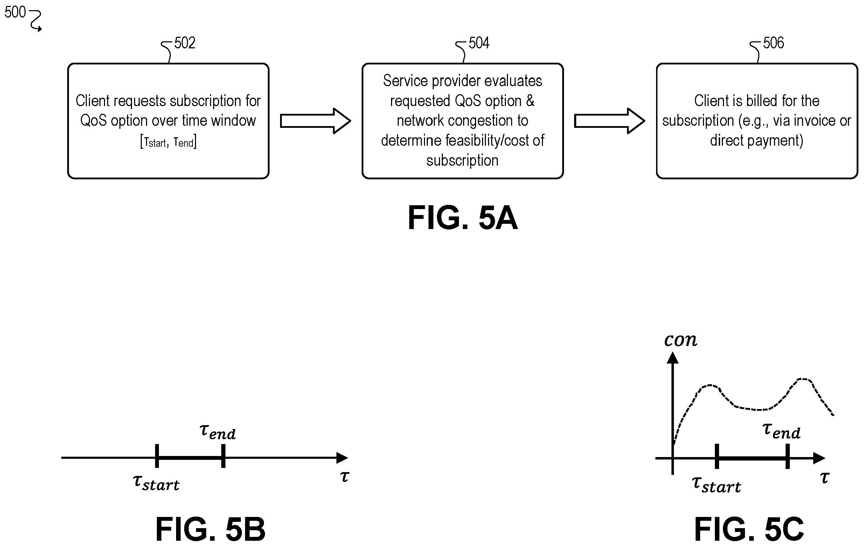

**FIGS. 5A-C** illustrate an example of a one-time LPE subscription over a specified time frame. In particular, FIG. 5A illustrates a flowchart 500 for a one-time LPE subscription, and FIGS. 5B-C illustrate graphs of the active time frame with and without reference to network congestion. The flowchart begins at block 502, where a client requests a subscription for a particular QoS option over time window [τₛₜₐᵣₜ, τ_{end}]. At block 504, the communications service provider (CoSP) evaluates the requested QoS option-and optionally the projected network congestion-to determine the feasibility and cost of the subscription. At block 506, the client is charged/billed for the subscription (e.g., via invoice or direct payment).

Further, a client can specify a network/RAN related parameter, such as a network location where the chosen performance option will be valid. Location can be specified by a set of distinct cell IDs, some geographical boundary, and/or any other suitable approach depending on the client's needs. Having this as a parameter would mitigate delivery of the requested QoS to the client for the CoSP and consequently affect the pricing.

The price can also be dictated by the ability to offload traffic to different parts of the network (e.g., base stations and other network resources), such as when driving a vehicle through a portion of the network with strong performance (e.g., an area covered by 5G millimeter waves (mmWave) or another high-performing radio interface). For example, if video content is being streamed, the downlink traffic can be scheduled to be offloaded to a less congested base station given that the client UE is physically moving.

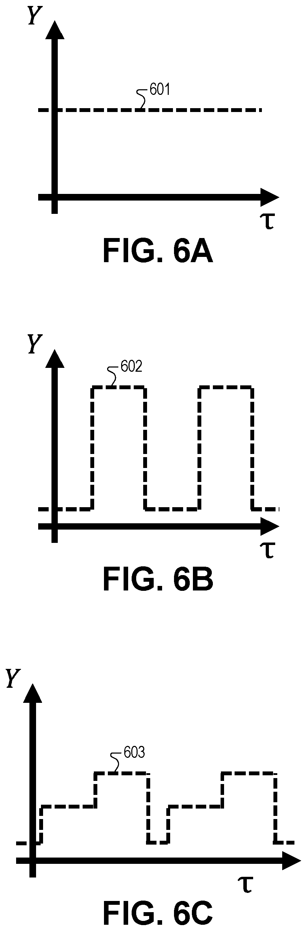

Another pricing aspect that the CoSP can account for is in terms of the network load profile/pattern. The requested QoS can be manifested in some pattern rather than as a fixed value. For example, **FIGS. 6A-C** illustrate different patterns of performance 601-603 that can be provided over a time window for a particular QoS metric (Y), each of which may be priced differently. In pattern 601, the QoS metric is allocated at a constant level throughout the entire time window. In patterns 602 and 603, however, the QoS metric is allocated in various periodic patterns over the time window. Further, non-periodic patterns may also be used. In some cases, for example, these patterns may reflect the actual behavior of certain applications more accurately, and thus may be beneficial for certain use cases. In this pricing scenario, the intensity and overall longevity of the allocated QoS directly affects the pricing.

Below some high level examples are presented to account for different realizations of the business model. The covered cases for the model are divided into "price agreement" and "QoS confirmation" model types (e.g., as described above), and the models are presented in order based on their complexity (e.g., from simple to more complex).

### Price Agreement Model 1:

1. Client request a certain QoS option from the CoSP.
2. CoSP evaluates the request and applies the requested QoS option to the client.
3. Client is billed according to the CoSP's pricing model.

### Price Agreement Model 2:

1. Client requests price for a certain QoS option from CoSP.
2. CoSP evaluates the request and responds with a price.
3. Client can repeat steps 1-2 until client accepts the price.
4. Client requests a certain QoS option from the CoSP.
5. CoSP evaluates the request and applies the QoS.
6. Client is billed according to CoSP's pricing model.

### Price Agreement Model 3:

1. Client requests price for a certain QoS option from CoSP.
2. CoSP evaluates the request and responds with price.
3. Client can repeat steps 1-2 until client accepts the price.
4. Client requests a certain QoS from CoSP.
5. CoSP evaluates the request and applies the scheduled QoS option.
6. CoSP sends feedback to client if agreement will not be fulfilled at agreed time or price/quality.
7. CoSP bills client according to pricing model.

### Price Agreement Model 4:

1. QoS contracts are offered to a client at a price determined by the CoSP.
2. Client requests a feed of QoS contracts, at a certain price defined by "the market."
3. A client can buy a contract, which guarantees a specified QoS from the CoSP.
4. CoSP may offer new contracts and/or modify existing contracts.

### QoS Confirmation Model 1:

1. Client request a certain QoS option based on an implicit or explicit pricing model from the CoSP.
2. CoSP evaluates the request and applies the QoS to the client.
3. The final outcome of the QoS is evaluated by CoSP and client is billed according to the experienced QoS versus what was previously agreed upon.

### QoS Confirmation Model 2:

1. Client requests price for a certain QoS option from CoSP.
2. CoSP evaluates the request and responds with a price.
3. Client can repeat steps 1-2 until client accepts the price.
4. CoSP evaluates the request and applies the requested QoS option.
5. The final outcome of the QoS is evaluated by CoSP and client is billed according to the experienced QoS versus what was previously agreed upon.

### QoS Confirmation Model 3:

1. Client requests price for a certain QoS option from CoSP.
2. CoSP evaluates the request and responds with a price.
3. Client can repeat steps 1-2 until client accepts the price.
4. CoSP evaluates the request and applies the requested QoS option.
5. CoSP sends feedback to client if agreement will not be fulfilled at the agreed time, price, and/or quality of service level.
6. The final outcome of the QoS is evaluated by CoSP and client is billed according to the experienced QoS versus what was previously agreed upon.

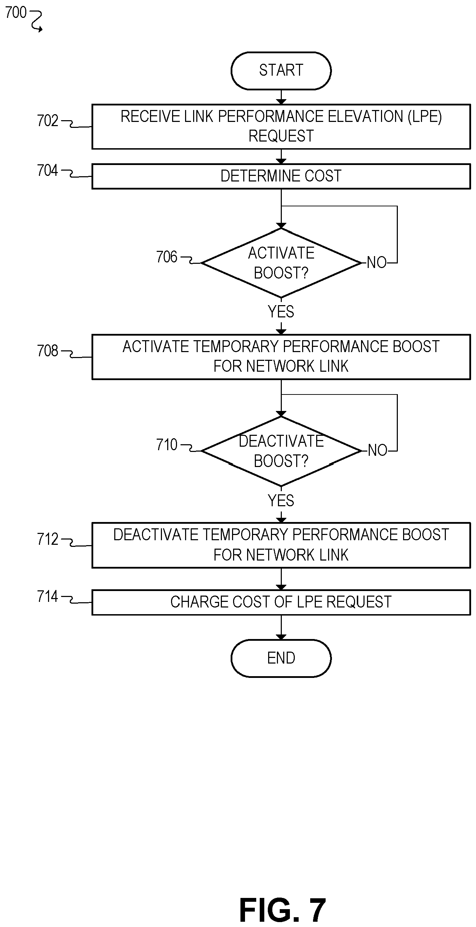

**FIG. 7** illustrates a flowchart 700 for processing link performance elevation (LPE) requests in accordance with certain embodiments. In some embodiments, flowchart 700 may be performed and/or implemented by the computing devices, systems, and platforms described throughout this disclosure.

In some embodiments, for example, flowchart 700 may be performed by one or more network devices (e.g., with processing circuitry, interface circuitry, memory, storage, antennas, etc.) in a communication network to temporarily boost performance of network links between endpoints and service providers. The performance boost may be any increase, large or small, in the actual or expected QoS of the network link (e.g., based on applicable QoS metrics). In some embodiments, the network device(s) may include one or more link performance elevation (LPE) servers and/or other network nodes in the network. The communication network may include wireless and/or wired network(s), such as a radio access network (RAN) or cellular network with one or more radio/cellular/wireless base stations. A network link may include wireless and/or wired link(s) in the network between an endpoint and a service provider.

An endpoint may include an end user, an end user device, a user device, an endpoint device, a user equipment (UE) device, a mobile device, a mobile phone, a mobile station, a tablet, a wearable device, a laptop, a personal computer, television, game console, a camera, a server, a data center, a roadside unit, equipment, or infrastructure, among other examples.

A service provider may include a network service provider, an Internet service provider, a cellular service provider, a content delivery network, a media streaming service, a video streaming service, an online gaming service, a video call service, a voice call service, a web service, an edge service, a cloud service, an edge server, a cloud server, or a data center, among other examples.

The flowchart begins at block 702 by receiving a link performance elevation (LPE) request, which is a request to temporarily boost performance of a network link between an endpoint and a service provider for a finite or defined duration. In some cases, for example, the LPE request may be received from the endpoint or the service provider. Moreover, the temporary performance boost may include a temporary increase in one or more quality of service (QoS) parameters, metrics, and/or key performance indicators (KPIs) for the network link, such as bandwidth/throughput (e.g., uplink or downlink), latency, consistency, priority, protection, residual error rate, transit delay, and/or resilience, among other examples.

Further, the temporary performance boost may have a finite or defined duration, such as a duration based on time, location, data consumption or other network usage metrics, and so forth. In some embodiments, for example, the temporary performance boost may have a temporal and/or spatial duration, or a data consumption limit, among other examples.

The temporal duration may include a time period (e.g., time of day, minutes, hours, days, weeks, months) or a session duration (e.g., the duration of an activity or session, such as streaming a movie), among other examples.

The spatial duration may be based on a location of the endpoint. For example, the spatial duration may include a period or duration in which the endpoint is located at or within a particular geographical area or location, such as an attraction of interest (e.g., public park, building), a government-defined geography or geopolitical boundary (e.g., street, zip code, city, state, country), and/or a radio cell of a network (e.g., a coverage area of one or more wireless base stations), among other examples.

The data consumption limit may define a maximum volume of traffic or an amount of bandwidth that may be consumed for data transfers, such that the elevated link performance is deactivated once the specified volume of data has been transferred using the elevated link.

The flowchart then proceeds to block 704 to determine and/or negotiate a cost for the LPE request (e.g., as described throughout this disclosure).

The flowchart then proceeds to block 706 to determine whether to activate/enable the temporary performance boost. For example, the temporary performance boost may be activated at the start of its finite or defined duration, such as the start of a temporal and/or spatial duration, and/or immediately upon processing the LPE request. If the defined duration has not yet started, however, the flowchart loops back through block 706 until reaching or detecting the start of the defined duration. For example, if a temporal duration is scheduled to begin, and/or if the endpoint enters the defined spatial boundaries associated with a spatial duration, it may be determined that the temporary performance boost should be activated.

The flowchart then proceeds to block 708 to activate/enable the temporary performance boost at the start of the finite/defined duration. In some embodiments, for example, a network configuration may be adjusted to activate the temporary performance boost (e.g., to achieve the temporary increase in the one or more quality of service (QoS) parameters for the network link between the endpoint and the service provider). For example, adjusting the relevant network configuration parameters causes the performance of the link to increase (e.g., as measured based on applicable QoS metrics), thus "activating" the requested performance boost for the LPE request.

For example, the network configuration may include one or more network configuration parameters, such as a number of hops for traffic on the network link, a traffic classification for the traffic on the network link, a scheduling priority for the traffic on the network link, a guaranteed flow bit rate (GFBR) for the traffic on the network link, and/or a delay critical GFBR for the traffic on the network link, among other examples. Moreover, in some embodiments, one or more of these network configuration parameters may be adjusted to achieve the temporary increase in the specified QoS parameters. In some embodiments, an actual and/or predicted link performance of the network link may also be considered when adjusting the network configuration to achieve the requested performance boost or QoS.

The flowchart then proceeds to block 710 to determine whether to deactivate/disable the temporary performance boost. For example, the temporary performance boost may be deactivated at the end of its finite/defined duration, such as when a temporal duration expires/lapses, the endpoint exits the defined geographical boundaries of a spatial duration, and/or a data consumption limit is reached, among other examples. If the defined duration is still active or ongoing, however, the flowchart loops back through block 710 until reaching or detecting the end of the defined duration.

The flowchart then proceeds to block 712 to deactivate/disable the temporary performance boost at the end of the finite/defined duration. In some embodiments, for example, the network configuration may be adjusted to deactivate the temporary increase in the one or more quality of service (QoS) parameters for the network link between the endpoint and the service provider. For example, the network configuration parameter(s) that were adjusted to activate the temporary performance boost at block 708 may be once again adjusted to deactivate the temporary performance boost.

The flowchart then proceeds to block 714 to bill/charge the determined cost of the request (e.g., as determined at block 704) to the requesting entity, such as the endpoint or the service provider. In some cases, however, if the negotiated link elevation or performance increase is unsuccessful (e.g., the actual link performance fails to meet the requested QoS specified in the LPE request based on measured key performance indicators (KPIs)), the cost may not be billed or may otherwise be reduced. In some cases, when the boosted network link is only used for part of the duration in which it is available, the requesting entity may be charged (i) for the full duration of the performance boost or (ii) pro rata based on actual usage.

At this point, the flowchart may be complete. In some embodiments, however, the flowchart may restart and/or certain blocks may be repeated. For example, in some embodiments, the flowchart may restart at block 702 to continue receiving and processing LPE requests.

### Example Computing Embodiments

The following sections present examples of various computing embodiments that may be used to implement the link performance elevation (LPE) solution described throughout this disclosure. In particular, any of the devices, systems, or functionality described in the preceding sections may be implemented using the embodiments described below.

### Edge Computing

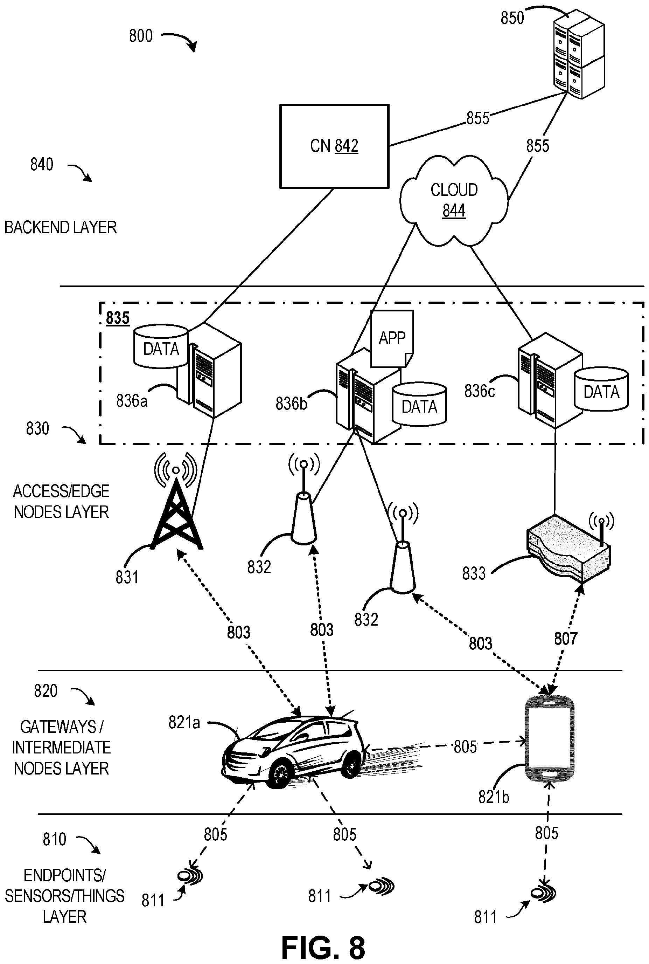

**FIG. 8** illustrates an example edge computing environment 800 in accordance with various embodiments. FIG. 8 specifically illustrates the different layers of communication occurring within the environment 800, starting from endpoint sensors or things layer 810 (e.g., operating in an Internet of Things (loT) network topology) comprising one or more loT devices 811 (also referred to as edge endpoints 810 or the like); increasing in sophistication to gateways or intermediate node layer 820 comprising one or more user equipment (UEs) 821a and 821b (also referred to as intermediate nodes 820 or the like), which facilitate the collection and processing of data from endpoints 810; increasing in processing and connectivity sophistication to access node layer 830 (or "edge node layer 830") comprising a plurality of network access nodes (NANs) 831, 832, and 833 (collectively referred to as "NANs 831-833" or the like) and a plurality of edge compute nodes 836a-c (collectively referred to as "edge compute nodes 836" or the like) within an edge computing system 835; and increasing in connectivity and processing sophistication to a backend layer 810 comprising core network (CN) 842 and cloud 844. The processing at the backend layer 810 may be enhanced by network services as performed by a remote application server 850 and/or other cloud services. Some or all of these elements may be equipped with or otherwise implement some or all aspects of the LPP embodiments discussed infra.

The environment 800 is shown to include end-user devices, such as intermediate nodes 820 and endpoints 810, which are configured to connect to (or communicatively couple with) one or more multiple communication networks (also referred to as "access networks," "radio access networks," or the like) based on different access technologies (or "radio access technologies" or "RATs") for accessing application services. These access networks may include one or more of NANs 831, 832, and/or 833. The NANs 831-833 are arranged to provide network connectivity to the end-user devices via respective links 803, 807 between the individual NANs and the one or more UEs 811, 821.

As examples, the communication networks and/or access technologies may include cellular technology such as LTE, MuLTEfire, and/or NR/5G (e.g., as provided by Radio Access Network (RAN) node 831 and/or RAN nodes 832), WiFi or wireless local area network (WLAN) technologies (e.g., as provided by access point (AP) 833 and/or RAN nodes 832), and/or the like. Different technologies exhibit benefits and limitations in different scenarios, and application performance in different scenarios becomes dependent on the choice of the access networks (e.g., WiFi, LTE, etc.) and the used network and transport protocols (e.g., Transfer Control Protocol (TCP), User Datagram Protocol (UDP), QUIC (sometimes referred to as "Quick UDP Internet Connections"), Stream Control Transmission Protocol (SCTP), Resource Reservation Protocol (RSVP), Virtual Private Network (VPN), Multi-Path TCP (MPTCP), Bidirectional-streams Over Synchronous HTTP (BOSH), Generic Routing Encapsulation (GRE), GeoNetworking protocol, Basic Transport Protocol (BTP), etc.).

The intermediate nodes 820 include UE 821a and UE 821b (collectively referred to as "UE 821" or "UEs 821"). In this example, the UE 821a is illustrated as a vehicle UE, and UE 821b is illustrated as a smartphone (e.g., handheld touchscreen mobile computing device connectable to one or more cellular networks). However, these UEs 821 may comprise any mobile or non-mobile computing device, such as tablet computers, wearable devices, PDAs, pagers, desktop computers, laptop computers, wireless handsets, unmanned vehicles or drones, and/or any type of computing device including a wireless communication interface.

The endpoints 810 include UEs 811, which may be loT devices (also referred to as "loT devices 811"), which are uniquely identifiable embedded computing devices (e.g., within the Internet infrastructure) that comprise a network access layer designed for low-power loT applications utilizing short-lived UE connections. The loT devices 811 are any physical or virtualized, devices, sensors, or "things" that are embedded with hardware and/or software components that enable the objects, devices, sensors, or "things" capable of capturing and/or recording data associated with an event, and capable of communicating such data with one or more other devices over a network with little or no user intervention. As examples, loT devices 811 may be abiotic devices such as autonomous sensors, gauges, meters, image capture devices, microphones, light emitting devices, audio emitting devices, audio and/or video playback devices, electro-mechanical devices (e.g., switch, actuator, etc.), EEMS, ECUs, ECMs, embedded systems, microcontrollers, control modules, networked or "smart" appliances, MTC devices, M2M devices, and/or the like. The loT devices 811 can utilize technologies such as M2M or MTC for exchanging data with an MTC server (e.g., a server 850), an edge server 836 and/or edge computing system 835, or device via a PLMN, ProSe or D2D communication, sensor networks, or loT networks. The M2M or MTC exchange of data may be a machine-initiated exchange of data.

The loT devices 811 may execute background applications (e.g., keep-alive messages, status updates, etc.) to facilitate the connections of the loT network. Where the loT devices 811 are, or are embedded in, sensor devices, the loT network may be a WSN. An loT network describes an interconnecting loT UEs, such as the loT devices 811 being connected to one another over respective direct links 805. The loT devices may include any number of different types of devices, grouped in various combinations (referred to as an "loT group") that may include loT devices that provide one or more services for a particular user, customer, organizations, etc. A service provider (e.g., an owner/operator of server 850, CN 842, and/or cloud 844) may deploy the loT devices in the loT group to a particular area (e.g., a geolocation, building, etc.) in order to provide the one or more services. In some implementations, the loT network may be a mesh network of loT devices 811, which may be termed a fog device, fog system, or fog, operating at the edge of the cloud 844. The fog involves mechanisms for bringing cloud computing functionality closer to data generators and consumers wherein various network devices run cloud application logic on their native architecture. Fog computing is a system-level horizontal architecture that distributes resources and services of computing, storage, control, and networking anywhere along the continuum from cloud 844 to Things (e.g., loT devices 811). The fog may be established in accordance with specifications released by the OFC, the OCF, among others. In some embodiments, the fog may be a tangle as defined by the IOTA foundation.

The fog may be used to perform low-latency computation/aggregation on the data while routing it to an edge cloud computing service (e.g., edge nodes 830) and/or a central cloud computing service (e.g., cloud 844) for performing heavy computations or computationally burdensome tasks. On the other hand, edge cloud computing consolidates human-operated, voluntary resources, as a cloud. These voluntary resource may include, inter-alia, intermediate nodes 820 and/or endpoints 810, desktop PCs, tablets, smartphones, nano data centers, and the like. In various implementations, resources in the edge cloud may be in one to two-hop proximity to the loT devices 811, which may result in reducing overhead related to processing data and may reduce network delay.

In some embodiments, the fog may be a consolidation of loT devices 811 and/or networking devices, such as routers and switches, with high computing capabilities and the ability to run cloud application logic on their native architecture. Fog resources may be manufactured, managed, and deployed by cloud vendors, and may be interconnected with high speed, reliable links. Moreover, fog resources reside farther from the edge of the network when compared to edge systems but closer than a central cloud infrastructure. Fog devices are used to effectively handle computationally intensive tasks or workloads offloaded by edge resources.

In embodiments, the fog may operate at the edge of the cloud 844. The fog operating at the edge of the cloud 844 may overlap or be subsumed into an edge network 830 of the cloud 844. The edge network of the cloud 844 may overlap with the fog, or become a part of the fog. Furthermore, the fog may be an edge-fog network that includes an edge layer and a fog layer. The edge layer of the edge-fog network includes a collection of loosely coupled, voluntary and human-operated resources (e.g., the aforementioned edge compute nodes 836 or edge devices). The Fog layer resides on top of the edge layer and is a consolidation of networking devices such as the intermediate nodes 820 and/or endpoints 810 of FIG. 8.

Data may be captured, stored/recorded, and communicated among the loT devices 811 (or, for example, among the intermediate nodes 820 and/or endpoints 810 that have direct links 805 with one another as shown by FIG. 8). Analysis of the traffic flow and control schemes may be implemented by aggregators that are in communication with the loT devices 811 and each other through a mesh network. The aggregators may be a type of loT device 811 and/or network appliance. In the example of FIG. 8, the aggregators may be edge nodes 830, or one or more designated intermediate nodes 820 and/or endpoints 810. Data may be uploaded to the cloud 844 via the aggregator, and commands can be received from the cloud 844 through gateway devices that are in communication with the IoT devices 811 and the aggregators through the mesh network. Unlike the traditional cloud computing model, in some implementations, the cloud 844 may have little or no computational capabilities and only serves as a repository for archiving data recorded and processed by the fog. In these implementations, the cloud 844 centralized data storage system and provides reliability and access to data by the computing resources in the fog and/or edge devices. Being at the core of the architecture, the Data Store of the cloud 844 is accessible by both Edge and Fog layers of the aforementioned edge-fog network.

As mentioned previously, the access networks provide network connectivity to the end-user devices 820, 810 via respective NANs 831-833. The access networks may be Radio Access Networks (RANs) such as an NG RAN or a 5G RAN for a RAN that operates in a 5G/NR cellular network, an E-UTRAN for a RAN that operates in an LTE or 4G cellular network, or a legacy RAN such as a UTRAN or GERAN for GSM or CDMA cellular networks. The access network or RAN may be referred to as an Access Service Network for WiMAX implementations. In some embodiments, all or parts of the RAN may be implemented as one or more software entities running on server computers as part of a virtual network, which may be referred to as a cloud RAN (CRAN), Cognitive Radio (CR), a virtual baseband unit pool (vBBUP), and/or the like. In these embodiments, the CRAN, CR, or vBBUP may implement a RAN function split, wherein one or more communication protocol layers are operated by the CRAN/CR/vBBUP and other communication protocol entities are operated by individual RAN nodes 831, 832. This virtualized framework allows the freed-up processor cores of the NANs 831, 832 to perform other virtualized applications, such as virtualized applications for LPP embodiments discussed herein.

The UEs 821, 811 may utilize respective connections (or channels) 803, each of which comprises a physical communications interface or layer. The connections 803 are illustrated as an air interface to enable communicative coupling consistent with cellular communications protocols, such as 3GPP LTE, 5G/NR, Push-to-Talk (PTT) and/or PTT over cellular (POC), UMTS, GSM, CDMA, and/or any of the other communications protocols discussed herein. In some embodiments, the UEs 811, 821 and the NANs 831-833 communicate data (e.g., transmit and receive) data over a licensed medium (also referred to as the "licensed spectrum" and/or the "licensed band") and an unlicensed shared medium (also referred to as the "unlicensed spectrum" and/or the "unlicensed band"). To operate in the unlicensed spectrum, the UEs 811, 821 and NANs 831-833 may operate using LAA, enhanced LAA (eLAA), and/or further eLAA (feLAA) mechanisms. The UEs 821, 811 may further directly exchange communication data via respective direct links 805, which may be LTE/NR Proximity Services (ProSe) link or PC5 interfaces/links, or WiFi based links or a personal area network (PAN) based links (e.g., IEEE 802.15.4 based protocols including ZigBee, IPv6 over Low power Wireless Personal Area Networks (6LoWPAN), WirelessHART, MiWi, Thread, etc.; WiFi-direct; Bluetooth/Bluetooth Low Energy (BLE) protocols).

The UEs 811, 821 are capable of measuring various signals or determining/identifying various signal/channel characteristics. Signal measurement may be performed for cell selection, handover, network attachment, testing, and/or other purposes. The measurements collected by the UEs 811, 821 may include one or more of the following: a bandwidth (BW), network or cell load, latency, jitter, round trip time (RTT), number of interrupts, out-of-order delivery of data packets, transmission power, bit error rate, bit error ratio (BER), Block Error Rate (BLER), packet loss rate, packet reception rate (PRR), signal-to-noise ratio (SNR), signal-to-noise and interference ratio (SINR), signal-plus-noise-plus-distortion to noise-plus-distortion (SINAD) ratio, peak-to-average power ratio (PAPR), Reference Signal Received Power (RSRP), Received Signal Strength Indicator (RSSI), Reference Signal Received Quality (RSRQ), GNSS timing of cell frames for UE positioning for E-UTRAN or 5G/NR (e.g., a timing between a NAN 831-833 reference time and a GNSS-specific reference time for a given GNSS), GNSS code measurements (e.g., The GNSS code phase (integer and fractional parts) of the spreading code of the ith GNSS satellite signal), GNSS carrier phase measurements (e.g., the number of carrier-phase cycles (integer and fractional parts) of the ith GNSS satellite signal, measured since locking onto the signal; also called Accumulated Delta Range (ADR)), channel interference measurement, thermal noise power measurement, received interference power measurement, and/or other like measurements. The RSRP, RSSI, and/or RSRQ measurements may include RSRP, RSSI, and/or RSRQ measurements of cell-specific reference signals, channel state information reference signals (CSI-RS), and/or synchronization signals (SS) or SS blocks for 3GPP networks (e.g., LTE or 5G/NR) and RSRP, RSSI, and/or RSRQ measurements of various beacon, FILS discovery frames, or probe response frames for IEEE 802.11 WLAN/WiFi networks. Other measurements may be additionally or alternatively used, such as those discussed in 3GPP TS 36.214 v15.4.0, 3GPP TS 38.215, IEEE 802.11, Part 11: "Wireless LAN Medium Access Control (MAC) and Physical Layer (PHY) specifications, IEEE Std.", and/or the like. The same or similar measurements may be measured or collected by the NANs 831-833.

The UE 821b is shown to be configured to access an access point (AP) 833 via a connection 807. In this example, the AP 833 is shown to be connected to the Internet without connecting to the CN 842 of the wireless system. The connection 807 can comprise a local wireless connection, such as a connection consistent with any IEEE 802.11 protocol, wherein the AP 833 would comprise a wireless fidelity (WiFi^{®}) router. In embodiments, the UEs 821 and loT devices 811 can be configured to communicate using suitable communication signals with each other or with any of the AP 833 over a single or multicarrier communication channel in accordance with various communication techniques, such as, but not limited to, an orthogonal frequency division multiplexing (OFDM) communication technique, a single-carrier frequency division multiple access (SC-FDMA) communication technique, and/or the like, although the scope of the embodiments is not limited in this respect. The communication technique may include a suitable modulation scheme such as Complementary Code Keying (CCK); Phase-Shift Keying (PSK) such as Binary PSK (BPSK), Quadrature PSK (QPSK), Differential PSK (DPSK), etc.; or Quadrature Amplitude Modulation (QAM) such as M-QAM; and/or the like.

The one or more NANs 831 and 832 that enable the connections 803 may be referred to as "RAN nodes" or the like. The RAN nodes 831, 832 may comprise ground stations (e.g., terrestrial access points) or satellite stations providing coverage within a geographic area (e.g., a cell). The RAN nodes 831, 832 may be implemented as one or more of a dedicated physical device such as a macrocell base station, and/or a low power base station for providing femtocells, picocells or other like cells having smaller coverage areas, smaller user capacity, or higher bandwidth compared to macrocells. In this example, the RAN node 831 is embodied as a NodeB, evolved NodeB (eNB), or a next generation NodeB (gNB), and the RAN nodes 832 are embodied as relay nodes, distributed units, or Road Side Unites (RSUs). Any other type of NANs can be used.

Any of the RAN nodes 831, 832 can terminate the air interface protocol and can be the first point of contact for the UEs 821 and loT devices 811. In some embodiments, any of the RAN nodes 831/832 can fulfill various logical functions for the RAN including, but not limited to, RAN function(s) (e.g., radio network controller (RNC) functions and/or NG-RAN functions) for radio resource management, admission control, uplink and downlink dynamic resource allocation, radio bearer management, data packet scheduling, etc. In embodiments, the UEs 811, 821 can be configured to communicate using OFDM communication signals with each other or with any of the NANs 831, 832 over a multicarrier communication channel in accordance with various communication techniques, such as, but not limited to, an OFDMA communication technique (e.g., for downlink communications) and/or an SC-FDMA communication technique (e.g., for uplink and ProSe or sidelink communications), although the scope of the embodiments is not limited in this respect.

For most cellular communication systems, the RAN function(s) operated by the RAN or individual NANs 831-832 organize downlink transmissions (e.g., from any of the RAN nodes 831, 832 to the UEs 811, 821) and uplink transmissions (e.g., from the UEs 811, 821 to RAN nodes 831, 832) into radio frames (or simply "frames") with 10 millisecond (ms) durations, where each frame includes ten 1 ms subframes. Each transmission direction has its own resource grid that indicate physical resource in each slot, where each column and each row of a resource grid corresponds to one symbol and one subcarrier, respectively. The duration of the resource grid in the time domain corresponds to one slot in a radio frame. The resource grids comprises a number of resource blocks (RBs), which describe the mapping of certain physical channels to resource elements (REs). Each RB may be a physical RB (PRB) or a virtual RB (VRB) and comprises a collection of REs. An RE is the smallest time-frequency unit in a resource grid. The RNC function(s) dynamically allocate resources (e.g., PRBs and modulation and coding schemes (MCS)) to each UE 811, 821 at each transmission time interval (TTI). A TTI is the duration of a transmission on a radio link 803, 805, and is related to the size of the data blocks passed to the radio link layer from higher network layers.

The area or region to be supplied with wireless network service or connectivity by the NAN 831-833 is divided into cells, each of which have a pattern dependent on the physical characteristics (e.g., terrain, physical objects or obstacles, etc.) and radio transmission/reception characteristics. The cell patterns may be in the form of shapes, such as circles, hexagons, squares, or the like, having a size that varies depending, in part, on the radio transmission/reception characteristics. Each of these cells is assigned with multiple channels or frequency carriers that are provided by a respective NAN 831, 832, 833. The channels or frequencies used in one cell can be reused in other cells, provided that the same frequencies are not reused in adjacent cells, which would cause co-channel interference. For example, a first NAN 831 may provide an LTE cell in a frequency band (or overall cell bandwidth) of 600 MHz to 6 gigahertz (GHz) with channel BWs (or carrier BWs) of 1.4, 3, 5, 10, 15, or 20 megahertz (MHz) (depending on the duplex mode of the frequency band), which may be aggregated together to create a channel BW up to 100 MHz (in LTE-Advance) or up to 640 MHz (in LTE-Advanced Pro). In a second example, a second NAN 831 may provide a 5G/NR cell with a maximum carrier BW (or channel BW) of 100 MHz in frequency range 1 (FR1: 450 MHz to 6 GHz) or a maximum carrier BW (or channel BW) of 400 MHz in frequency range 2 (FR2: 24.25 GHz to 52.6 GHz) that can be aggregated with a maximum bandwidth of 800 MHz. In each of the aforementioned examples, the exact frequency band and the channel BWs that can be used may depend on the country and/or regulatory regime in which the NAN 833 is located.

A given cell has a certain amount of radio resources within its frequency band that can be allocated to individual UEs 811, 821. The amount of resources per cell may be expressed a number of PRBs per TTI, and the amount of available resources (e.g., non-occupied PRBs) depends on the traffic load of a cell. The amount of data that can be transmitted in a PRB depends in part on radio link quality. Radio link quality may also change based on UE 821, 811 mobility within a particular cell (referred to as "intra-cell mobility" or the like) and mobility between cells (referred to as "inter-cell mobility" or the like). Additionally, radio signal properties/characteristics are affected by interference from other radio signals and physical obstacles (e.g., tress, buildings, statues, etc.) blocking a line-of-sight (LoS) of radio transmitters or receivers. The amount of data that can be transmitted in a PRB affects the realized and/or perceived performance of a wireless network or a given link 803, 805, 807. In other words, the radio signal performance properties/characteristics impact the BW and/or network services that can be provided by individual cells and/or individual NANs 831-833, as well as the resource consumption of the UEs 811, 821 and the NANs 831-833 themselves. As discussed in more detail infra, the LPP technology discussed herein is used to predict future performance and/or characteristics of the wireless interfaces 803, 805, 807 based on various criteria.

The NANs 831/832 may be configured to communicate with one another via respective interfaces or links (not shown), such as an X2 interface for LTE implementations (e.g., when CN 842 is an Evolved Packet Core (EPC)), an Xn interface for 5G or NR implementations (e.g., when CN 842 is an Fifth Generation Core (5GC)), or the like. The NANs 831 and 832 are also communicatively coupled to CN 842. In embodiments, the CN 842 may be an evolved packet core (EPC) network, a NextGen Packet Core (NPC) network, a 5G core (5GC), or some other type of CN. The CN 842 may comprise a plurality of network elements, which are configured to offer various data and telecommunications services to customers/subscribers (e.g., users of UEs 821 and loT devices 811) who are connected to the CN 842 via a RAN. The components of the CN 842 may be implemented in one physical node or separate physical nodes including components to read and execute instructions from a machine-readable or computer-readable medium (e.g., a non-transitory machine-readable storage medium). In some embodiments, Network Functions Virtualization (NFV) may be utilized to virtualize any or all of the above-described network node functions via executable instructions stored in one or more computer-readable storage mediums (described in further detail infra). A logical instantiation of the CN 842 may be referred to as a network slice, and a logical instantiation of a portion of the CN 842 may be referred to as a network sub-slice. NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more CN 842 components/functions.

The CN 842 is shown to be communicatively coupled to an application server 850 and a network 850 via an IP communications interface 855. the one or more server(s) 850 comprise one or more physical and/or virtualized systems for providing functionality (or services) to one or more clients (e.g., UEs 821 and loT devices 811) over a network (e.g., cloud 844). The server(s) 850 may include various computer devices with rack computing architecture component(s), tower computing architecture component(s), blade computing architecture component(s), and/or the like. The server(s) 850 may represent a cluster of servers, a server farm, a cloud computing service, or other grouping or pool of servers, which may be located in one or more datacenters. The server(s) 850 may also be connected to, or otherwise associated with one or more data storage devices (not shown). Moreover, the server(s) 850 may include an operating system (OS) that provides executable program instructions for the general administration and operation of the individual server computer devices, and may include a computer-readable medium storing instructions that, when executed by a processor of the servers, may allow the servers to perform their intended functions. Suitable implementations for the OS and general functionality of servers are known or commercially available, and are readily implemented by persons having ordinary skill in the art. Generally, the server(s) 850 offer applications or services that use IP/network resources. As examples, the server(s) 850 may provide traffic management services, cloud analytics, content streaming services, immersive gaming experiences, social networking and/or microblogging services, and/or other like services. In addition, the various services provided by the server(s) 850 may include initiating and controlling software and/or firmware updates for applications or individual components implemented by the UEs 821 and loT devices 811. The server(s) 850 can also be configured to support one or more communication services (e.g., Voice-over-Internet Protocol (VoIP) sessions, PTT sessions, group communication sessions, social networking services, etc.) for the UEs 821 and loT devices 811 via the CN 842.

The cloud 844 may represent a cloud computing architecture/platform that provides one or more cloud computing services. Cloud computing refers to a paradigm for enabling network access to a scalable and elastic pool of shareable computing resources with self-service provisioning and administration on-demand and without active management by users. Computing resources (or simply "resources") are any physical or virtual component, or usage of such components, of limited availability within a computer system or network. Examples of resources include usage/access to, for a period of time, servers, processor(s), storage equipment, memory devices, memory areas, networks, electrical power, input/output (peripheral) devices, mechanical devices, network connections (e.g., channels/links, ports, network sockets, etc.), operating systems, virtual machines (VMs), software/applications, computerfiles, and/orthe like. Cloud computing provides cloud computing services (or cloud services), which are one or more capabilities offered via cloud computing that are invoked using a defined interface (e.g., an API or the like). Some capabilities of cloud 844 include application capabilities type, infrastructure capabilities type, and platform capabilities type. A cloud capabilities type is a classification of the functionality provided by a cloud service to a cloud service customer (e.g., a user of cloud 844), based on the resources used. The application capabilities type is a cloud capabilities type in which the cloud service customer can usethe cloud service provider's applications; the infrastructure capabilities type is a cloud capabilities type in which the cloud service customer can provision and use processing, storage or networking resources; and platform capabilities type is a cloud capabilities type in which the cloud service customer can deploy, manage and run customer-created or customer-acquired applications using one or more programming languages and one or more execution environments supported by the cloud service provider. Cloud services may be grouped into categories that possess some common set of qualities.

Some cloud service categories that the cloud 844 may provide include, for example, Communications as a Service (CaaS), which is a cloud service category involving real time interaction and collaboration services; Compute as a Service (CompaaS), which is a cloud service category involving the provision and use of processing resources needed to deploy and run software; Database as a Service (DaaS), which is a cloud service category involving the provision and use of database system management services; Data Storage as a Service (DSaaS), which is a cloud service category involving the provision and use of data storage and related capabilities; Firewall as a Service (FaaS), which is a cloud service category involving providing firewall and network traffic management services; Infrastructure as a Service (laaS), which is a cloud service category involving infrastructure capabilities type; Network as a Service (NaaS), which is a cloud service category involving transport connectivity and related network capabilities; Platform as a Service (PaaS), which is a cloud service category involving the platform capabilities type; Software as a Service (SaaS), which is a cloud service category involving the application capabilities type; Security as a Service, which is a cloud service category involving providing network and information security (infosec) services; and/or other like cloud services.

In some embodiments, the cloud 844 may represent a network such as the Internet, a local area network (LAN) or a wide area network (WAN) including proprietary and/or enterprise networks for a company or organization, or combinations thereof. The cloud 844 may be a network that comprises computers, network connections among the computers, and software routines to enable communication between the computers over network connections. In this regard, the cloud 844 comprises one or more network elements that may include one or more processors, communications systems (e.g., including network interface controllers, one or more transmitters/receivers connected to one or more antennas, etc.), and computer readable media. Examples of such network elements may include wireless access points (WAPs), home/business servers (with or without RF communications circuitry), routers, switches, hubs, radio beacons, base stations, picocell or small cell base stations, backbone gateways, and/or any other like network device. Connection to the cloud 844 may be via a wired or a wireless connection using the various communication protocols discussed infra. More than one network may be involved in a communication session between the illustrated devices. Connection to the cloud 844 may require that the computers execute software routines which enable, for example, the seven layers of the OSI model of computer networking or equivalent in a wireless (cellular) phone network. Cloud 844 may be used to enable relatively long-range communication such as, for example, between the one or more server(s) 850 and one or more UEs 821 and loT devices 811. In some embodiments, the cloud 844 may represent the Internet, one or more cellular networks, local area networks, or wide area networks including proprietary and/or enterprise networks, TCP/Internet Protocol (IP)-based network, or combinations thereof. In such embodiments, the cloud 844 may be associated with network operator who owns or controls equipment and other elements necessary to provide network-related services, such as one or more base stations or access points, one or more servers for routing digital data or telephone calls (e.g., a core network or backbone network), etc. The backbone links 855 may include any number of wired or wireless technologies, and may be part of a LAN, a WAN, or the Internet. In one example, the backbone links 855 are fiber backbone links that couple lower levels of service providers to the Internet, such as the CN 842 and cloud 844.

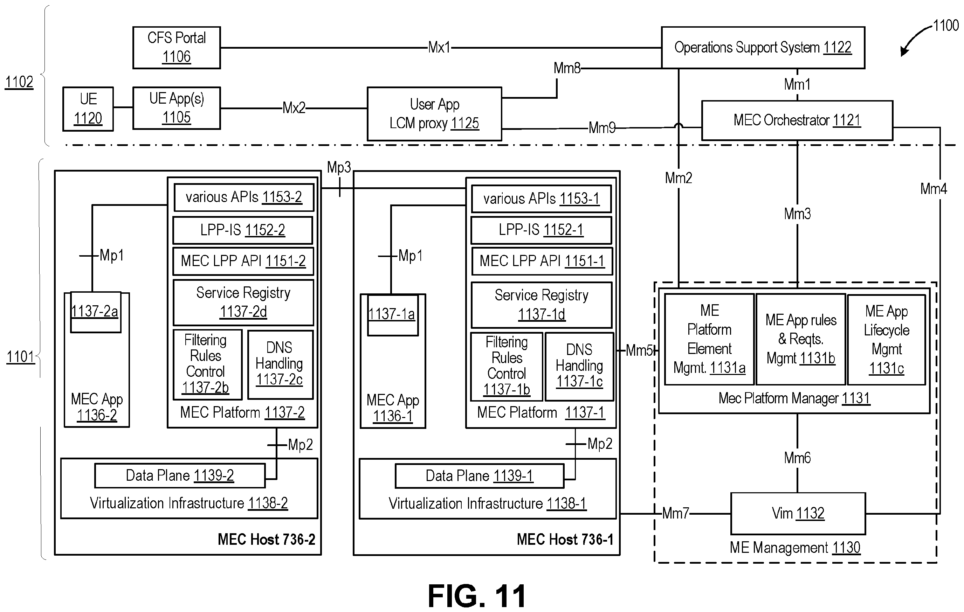

In embodiments, the edge compute nodes 836 may include or be part of an edge system 835 (or edge network 835). The edge system 835 includes a collection of edge compute nodes 836 and edge management systems (not shown by FIG. 8) necessary to run edge computing applications (e.g., MEC Apps 1136 of FIG. 11) within an operator network or a subset of an operator network. The edge compute nodes 836 may also be referred to as "edge hosts 836" or "edge servers 836." The edge servers 836 are physical computer systems that may include an edge platform (e.g., MEC platform 1137 of FIG. 11) and/or virtualization infrastructure (e.g., VI 1138 of FIG. 11), and provide compute, storage, and network resources to edge computing applications. Each of the edge servers 836 are disposed at an edge of a corresponding access network, and are arranged to provide computing resources and/or various services (e.g., computational task and/or workload offloading, cloud-computing capabilities, IT services, and other like resources and/or services as discussed herein) in relatively close proximity to intermediate nodes 820 and/or endpoints 810. The VI of the edge servers 836 provide virtualized environments and virtualized resources for the edge hosts, and the edge computing applications may run as VMs and/or application containers on top of the VI. One example implementation of the edge system 835 is a MEC system 835, which is discussed in more detail infra with respect to FIG. 11. It should be understood that the disclosed MEC systems and services deployment examples are only one illustrative example of edge computing systems/networks 835, and that the example embodiments discussed herein may be applicable to many other edge computing/networking technologies in various combinations and layouts of devices located at the edge of a network. Examples of such other edge computing/networking technologies that may implement the embodiments herein include Content Delivery Networks (CDNs) (also referred to as "Content Distribution Networks" or the like); Mobility Service Provider (MSP) edge computing and/or Mobility as a Service (MaaS) provider systems (e.g., used in AECC architectures); Nebula edge-cloud systems; Fog computing systems; Cloudlet edge-cloud systems; Mobile Cloud Computing (MCC) systems; Central Office Re-architected as a Datacenter (CORD), mobile CORD (M-CORD) and/or Converged Multi-Access and Core (COMAC) systems; and/or the like. Further, the techniques disclosed herein may relate to other loT edge network systems and configurations, and other intermediate processing entities and architectures may also be used to practice the embodiments herein.

As shown by FIG. 8, each of the NANs 831, 832, and 833 are co-located with edge compute nodes (or "edge servers") 836a, 836b, and 836c, respectively. These implementations may be small-cell clouds (SCCs) where an edge compute node 836 is co-located with a small cell (e.g., pico-cell, femto-cell, etc.), or may be mobile micro clouds (MCCs) where an edge compute node 836 is co-located with a macro-cell (e.g., an eNB, gNB, etc.). The edge compute node 836 may be deployed in a multitude of arrangements other than as shown by FIG. 8. In a first example, multiple NANs 831-833 are co-located or otherwise communicatively coupled with one edge compute node 836. In a second example, the edge servers 836 may be co-located or operated by RNCs, which may be the case for legacy network deployments, such as 3G networks. In a third example, the edge servers 836 may be deployed at cell aggregation sites or at multi-RAT aggregation points that can be located either within an enterprise or used in public coverage areas. In a fourth example, the edge servers 836 may be deployed at the edge of CN 842. These implementations may be used in follow-me clouds (FMC), where cloud services running at distributed data centers follow the UEs 821 as they roam throughout the network.

In any of the aforementioned embodiments and/or implementations, the edge servers 836 provide a distributed computing environment for application and service hosting, and also provide storage and processing resources so that data and/or content can be processed in close proximity to subscribers (e.g., users of UEs 821, 811) for faster response times The edge servers 836 also support multitenancy run-time and hosting environment(s) for applications, including virtual appliance applications that may be delivered as packaged VM images, middleware application and infrastructure services, content delivery services including content caching, mobile big data analytics, and computational offloading, among others. Computational offloading involves offloading computational tasks, workloads, applications, and/or services to the edge servers 836 from the UEs 811/821, CN 842, cloud 844, and/or server(s) 850, or vice versa. For example, a device application or client application operating in a UE 821/811 may offload application tasks or workloads to one or more edge servers 836. In another example, an edge server 836 may offload application tasks or workloads to one or more UE 821/811 (e.g., for distributed ML computation or the like).

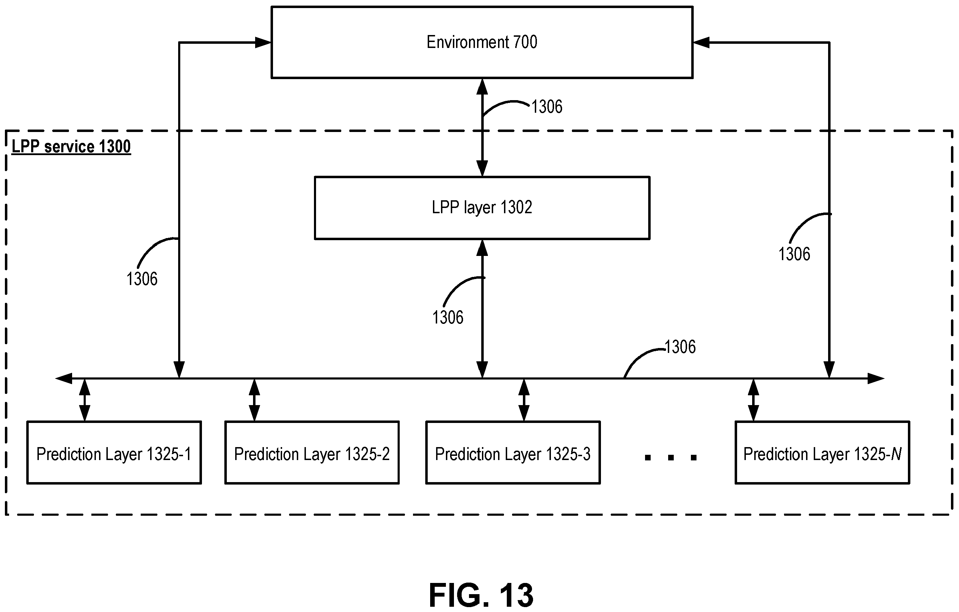

Various aspects of the LPP embodiments may be performed by one or more server(s) 850, by one or more NFs in the CN 842, by cloud 844 (or one or more cloud computing nodes within the cloud 844), and/or by one or more edge compute nodes 836. The collection or combination of systems or devices that perform the LPP embodiments discussed herein may be collectively referred to as an "LPP service," which is discussed in more detail with respect to FIG. 13.

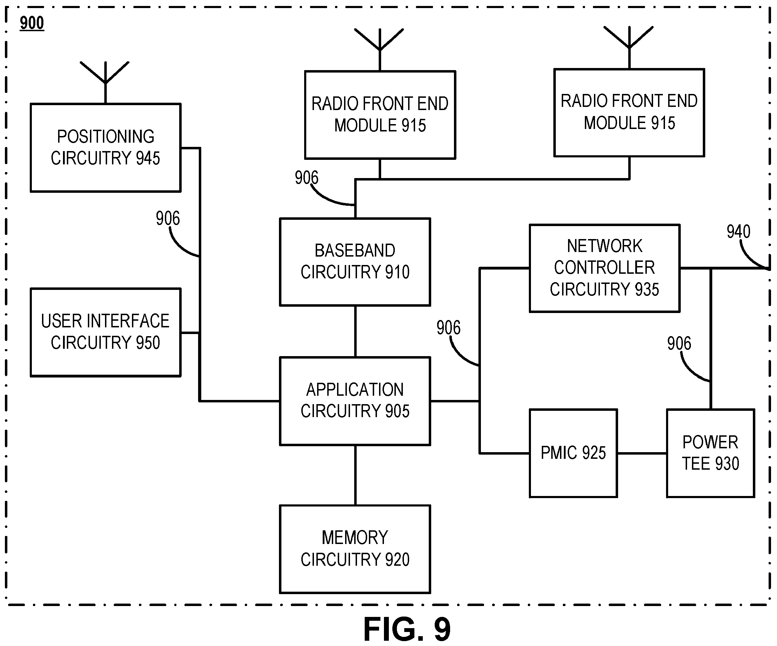

**FIG. 9** illustrates an example of infrastructure equipment 900 in accordance with various embodiments. The infrastructure equipment 900 (or "system 900") may be implemented as a base station, radio head, access network node (e.g., the edge nodes 830 shown of FIG. 8), edge compute nodes 836, server(s) 850, and/or any other element/device discussed herein. In other examples, the system 900 could be implemented in or by an intermediate node 820 or endpoint 810.

The system 900 includes application circuitry 905, baseband circuitry 910, one or more radio front end modules (RFEMs) 915, memory circuitry 920, power management integrated circuitry (PMIC) 925, power tee circuitry 930, network controller circuitry 935, network interface connector 940, positioning circuitry 945, and user interface 950. In some embodiments, the device 900 may include additional elements such as, for example, memory/storage, display, camera, sensor, or IO interface. In other embodiments, the components described below may be included in more than one device. For example, said circuitries may be separately included in more than one device for CRAN, CR, vBBU, or other like implementations.

Application circuitry 905 includes circuitry such as, but not limited to one or more processors (or processor cores), cache memory, and one or more of low drop-out voltage regulators (LDOs), interrupt controllers, serial interfaces such as SPI, I²C or universal programmable serial interface module, real time clock (RTC), timer-counters including interval and watchdog timers, general purpose IO, memory card controllers such as Secure Digital (SD) MultiMediaCard (MMC) or similar, Universal Serial Bus (USB) interfaces, Mobile Industry Processor Interface (MIPI) interfaces and Joint Test Access Group (JTAG) test access ports. The processors (or cores) of the application circuitry 905 may be coupled with or may include memory/storage elements and may be configured to execute instructions stored in the memory/storage to enable various applications or operating systems to run on the system 900. In some implementations, the memory/storage elements may be on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor(s) of application circuitry 905 may include, for example, one or more processor cores (CPUs), one or more application processors, one or more graphics processing units (GPUs), one or more reduced instruction set computing (RISC) processors, one or more Acorn RISC Machine (ARM) processors, one or more complex instruction set computing (CISC) processors, one or more digital signal processors (DSPs), one or more FPGAs, one or more programmable logic devices (PLDs), one or more ASICs, one or more microprocessors or controllers, or any suitable combination thereof. In some embodiments, the application circuitry 905 may comprise, or may be, a special-purpose processor/controller to operate according to the various embodiments herein. As examples, the processor(s) of application circuitry 905 may include one or more Intel Pentium^{®}, Core^{®}, or Xeon^{®} processor(s); Advanced Micro Devices (AMD) Ryzen^{®} processor(s), Accelerated Processing Units (APUs), or Epyc^{®} processors; ARM-based processor(s) licensed from ARM Holdings, Ltd. such as the ARM Cortex-A family of processors and the ThunderX2^{®} provided by Cavium^{™}, Inc.; a MIPS-based design from MIPS Technologies, Inc. such as MIPS Warrior P-class processors; and/or the like. In some embodiments, the system 900 may not utilize application circuitry 905, and instead may include a special-purpose processor/controller to process IP data received from an EPC or 5GC, for example.

In some implementations, the application circuitry 905 may include one or more hardware accelerators, which may be microprocessors, programmable processing devices, or the like. The one or more hardware accelerators may include, for example, computer vision (CV) and/or deep learning (DL) accelerators. As examples, the programmable processing devices may be one or more field-programmable gate arrays (FPGAs); PLDs (e.g., complex PLDs (CPLDs), high-capacity PLDs (HCPLDs), etc.) and the like; ASICs such as structured ASICs and the like; programmable SoCs (PSoCs); and/or the like. In such implementations, the circuitry of application circuitry 905 may comprise logic blocks or logic fabric, and other interconnected resources that may be programmed to perform various functions, such as the procedures, methods, functions, etc. of the various embodiments discussed herein. In such embodiments, the circuitry of application circuitry 905 may include memory cells (e.g., erasable programmable read-only memory (EPROM), electrically erasable programmable read-only memory (EEPROM), flash memory, static memory (e.g., static random access memory (SRAM), anti-fuses, etc.)) used to store logic blocks, logic fabric, data, etc. in look-up-tables (LUTs) and the like.

In some implementations, such as implementations where subsystems of the edge nodes 830, intermediate nodes 820, and/or endpoints 810 of FIG. 8 are individual software agents or AI agents, each agent is implemented in a respective hardware accelerator that are configured with appropriate bit stream(s) or logic blocks to perform their respective functions. In these implementations, processor(s) and/or hardware accelerators of the application circuitry 905 may be specifically tailored for operating the agents and/or for machine learning functionality, such as a cluster of AI GPUs, tensor processing units (TPUs) developed by Google^{®} Inc., a Real Al Processors (RAPs^{™}) provided by AlphalCs^{®}, Nervana^{™} Neural Network Processors (NNPs) provided by Intel^{®} Corp., Intel^{®} Movidius^{™} Myriad^{™} X Vision Processing Unit (VPU), NVIDIA^{®} PX^{™} based GPUs, the NM500 chip provided by General Vision^{®}, Hardware 3 provided by Tesla^{®}, Inc., an Epiphany^{™} based processor provided by Adapteva^{®}, or the like. In some embodiments, the hardware accelerator may be implemented as an Al accelerating co-processor, such as the Hexagon 685 DSP provided by Qualcomm^{®}, the PowerVR 2NX Neural Net Accelerator (NNA) provided by Imagination Technologies Limited^{®}, the Neural Engine core within the Apple^{®} A11 or A12 Bionic SoC, the Neural Processing Unit within the HiSilicon Kirin 970 provided by Huawei^{®}, and/or the like.

The baseband circuitry 910 may be implemented, for example, as a solder-down substrate including one or more integrated circuits, a single packaged integrated circuit soldered to a main circuit board or a multi-chip module containing two or more integrated circuits. The baseband circuitry 910 includes one or more processing devices (e.g., baseband processors) to carry out various protocol and radio control functions. Baseband circuitry 910 may interface with application circuitry of system 900 for generation and processing of baseband signals and for controlling operations of the RFEMs 915. The baseband circuitry 910 may handle various radio control functions that enable communication with one or more radio networks via the RFEMs 915. The baseband circuitry 910 may include circuitry such as, but not limited to, one or more single-core or multi-core processors (e.g., one or more baseband processors) or control logic to process baseband signals received from a receive signal path of the RFEMs 915, and to generate baseband signals to be provided to the RFEMs 915 via a transmit signal path. In various embodiments, the baseband circuitry 910 may implement a real-time OS (RTOS) to manage resources of the baseband circuitry 910, schedule tasks, etc. Examples of the RTOS may include Operating System Embedded (OSE)^{™} provided by Enea^{®}, Nucleus RTOS^{™} provided by Mentor Graphics^{®}, Versatile Real-Time Executive (VRTX) provided by Mentor Graphics^{®}, ThreadX^{™} provided by Express Logic^{®}, FreeRTOS, REX OS provided by Qualcomm^{®}, OKL4 provided by Open Kernel (OK) Labs^{®}, or any other suitable RTOS, such as those discussed herein.

Although not shown by FIG. 9, in one embodiment, the baseband circuitry 910 includes individual processing device(s) to operate one or more wireless communication protocols (e.g., a "multi-protocol baseband processor" or "protocol processing circuitry") and individual processing device(s) to implement physical layer (PHY) functions. In this embodiment, the protocol processing circuitry operates or implements various protocol layers/entities of one or more wireless communication protocols. In a first example, the protocol processing circuitry may operate LTE protocol entities and/or 5G/NR protocol entities when the RFEMs 915 are cellular radiofrequency communication system, such as millimeter wave (mmWave) communication circuitry or some other suitable cellular communication circuitry. In the first example, the protocol processing circuitry would operate MAC, RLC, PDCP, SDAP, RRC, and NAS functions. In a second example, the protocol processing circuitry may operate one or more IEEE-based protocols when the RFEMs 915 are WiFi communication system. In the second example, the protocol processing circuitry would operate WiFi MAC and LLC functions. The protocol processing circuitry may include one or more memory structures (not shown) to store program code and data for operating the protocol functions, as well as one or more processing cores (not shown) to execute the program code and perform various operations using the data. The protocol processing circuitry provides control functions for the baseband circuitry 910 and/or RFEMs 915. The baseband circuitry 910 may also support radio communications for more than one wireless protocol.

Continuing with the aforementioned embodiment, the baseband circuitry 910 includes individual processing device(s) to implement PHY including HARQ functions, scrambling and/or descrambling, (en)coding and/or decoding, layer mapping and/or de-mapping, modulation symbol mapping, received symbol and/or bit metric determination, multi-antenna port pre-coding and/or decoding which may include one or more of space-time, space-frequency or spatial coding, reference signal generation and/or detection, preamble sequence generation and/or decoding, synchronization sequence generation and/or detection, control channel signal blind decoding, radio frequency shifting, and other related functions. etc. The modulation/demodulation functionality may include Fast-Fourier Transform (FFT), precoding, or constellation mapping/demapping functionality. The (en)coding/decoding functionality may include convolution, tail-biting convolution, turbo, Viterbi, or Low Density Parity Check (LDPC) coding. Embodiments of modulation/demodulation and encoder/decoder functionality are not limited to these examples and may include other suitable functionality in other embodiments.

User interface circuitry 950 may include one or more user interfaces designed to enable user interaction with the system 900 or peripheral component interfaces designed to enable peripheral component interaction with the system 900. User interfaces may include, but are not limited to, one or more physical or virtual buttons (e.g., a reset button), one or more indicators (e.g., light emitting diodes (LEDs)), a physical keyboard or keypad, a mouse, a touchpad, a touchscreen, speakers or other audio emitting devices, microphones, a printer, a scanner, a headset, a display screen or display device, etc. Peripheral component interfaces may include, but are not limited to, a nonvolatile memory port, a universal serial bus (USB) port, an audio jack, a power supply interface, etc.

The radio front end modules (RFEMs) 915 may comprise a millimeter wave (mmWave) RFEM and one or more sub-mmWave radio frequency integrated circuits (RFICs). In some implementations, the one or more sub-mmWave RFICs may be physically separated from the mmWave RFEM. The RFICs may include connections to one or more antennas or antenna arrays, and the RFEM may be connected to multiple antennas. In alternative implementations, both mmWave and sub-mmWave radio functions may be implemented in the same physical RFEM 915, which incorporates both mmWave antennas and sub-mmWave. The antenna array comprises one or more antenna elements, each of which is configured convert electrical signals into radio waves to travel through the air and to convert received radio waves into electrical signals. For example, digital baseband signals provided by the baseband circuitry 910 is converted into analog RF signals (e.g., modulated waveform) that will be amplified and transmitted via the antenna elements of the antenna array including one or more antenna elements (not shown). The antenna elements may be omnidirectional, direction, or a combination thereof. The antenna elements may be formed in a multitude of arranges as are known and/or discussed herein. The antenna array may comprise microstrip antennas or printed antennas that are fabricated on the surface of one or more printed circuit boards. The antenna array may be formed in as a patch of metal foil (e.g., a patch antenna) in a variety of shapes, and may be coupled with the RF circuitry using metal transmission lines or the like.

The memory circuitry 920 may include one or more of volatile memory including dynamic random access memory (DRAM) and/or synchronous dynamic random access memory (SDRAM), and nonvolatile memory (NVM) including high-speed electrically erasable memory (commonly referred to as Flash memory), phase change random access memory (PRAM), magnetoresistive random access memory (MRAM), etc., and may incorporate the three-dimensional (3D) cross-point (XPOINT) memories from Intel^{®} and Micron^{®}. Memory circuitry 920 may be implemented as one or more of solder down packaged integrated circuits, socketed memory modules and plug-in memory cards.

The memory circuitry 920 is configured to store computational logic (or "modules") in the form of software, firmware, or hardware commands to implement the techniques described herein. The computational logic or modules may be developed using a suitable programming language or development tools, such as any programming language or development tool discussed herein. The computational logic may be employed to store working copies and/or permanent copies of programming instructions for the operation of various components of appliance infrastructure equipment 900, an operating system of infrastructure equipment 900, one or more applications, and/or for carrying out the embodiments discussed herein. The computational logic may be stored or loaded into memory circuitry 920 as instructions for execution by the processors of the application circuitry 905 to provide or perform the functions described herein. The various elements may be implemented by assembler instructions supported by processors of the application circuitry 905 or high-level languages that may be compiled into such instructions. The permanent copy of the programming instructions may be placed into persistent storage devices of memory circuitry 920 in the factory during manufacture, or in the field through, for example, a distribution medium (not shown), through a communication interface (e.g., from a distribution server), and/or over-the-air (OTA).

In some embodiments, the infrastructure equipment 900 may be a NAN 831-833 that is configured to collect data for the LPP services 1300 discussed herein. In these embodiments, the memory circuitry 920 may store one or more applications and/or software components including program code, instructions, modules, assemblies, packages, protocol stacks, software engine(s), firmware, etc., which when running on the infrastructure equipment 900 (e.g., executed by application circuitry 905), collect spatial-temporal data, and provides this information to one or more prediction layers 1305 in the LPPS 1300 via a suitable backhaul link via network controller circuitry 935 and network interface connector 940. As discussed in more detail infra, the spatial-temporal data such as operational parameters of the system 900, signal measurements, and/or other like data as discussed herein, may be accessed using suitable APIs, Application Binary Interfaces (ABIs), middleware, drivers, configuration files, trusted application(s), etc., for accessing measurement data and/or other like information from the baseband circuitry and/or from network functions in the CN 842. For example, these APIs, drivers, etc., may access measurement data of measurements directly measured by the infrastructure equipment 900, measurements collected by UEs 811, 821 during minimization drive tests (MDTs), and/or measurement data collected by UEs 811, 821 and/or the infrastructure equipment 900 measurements performed by the UEs 811, 821 for other purposes, such as measurements taken for cell selection, handovers, and/or the like. In another example, one or more APIs may be used to collect network load information from the CN 842 (or one or more NFs within the CN 842 or the like). In some embodiments, these applications, components, plug-ins, firmware, etc., may also subscribe to the LPPS 1300 to receive LPP notifications or "hints" from the LPPS 1300.

In other embodiments, the infrastructure equipment 900 may be a server computer system that is configured to operate one or more prediction layers 1325-1 to 1325-N and/orthe LPPS layer 1302 of FIG. 13. In these embodiments, the memory circuitry 920 may store one or more applications and/or software components including program code, instructions, modules, assemblies, packages, protocol stacks, software engine(s), firmware, etc., which when running on the infrastructure equipment 900 (e.g., executed by application circuitry 905), perform various functions of the one or more prediction layers 1325-1 to 1325-N and/or the LPPS layer 1302.

The PMIC 925 may include voltage regulators, surge protectors, power alarm detection circuitry, and one or more backup power sources such as a battery or capacitor. The power alarm detection circuitry may detect one or more of brown out (under-voltage) and surge (over-voltage) conditions. The power tee circuitry 930 may provide for electrical power drawn from a network cable to provide both power supply and data connectivity to the infrastructure equipment 900 using a single cable.

The network controller circuitry 935 provides connectivity to a network using a standard network interface protocol such as Ethernet, Ethernet over GRE Tunnels, Ethernet over Multiprotocol Label Switching (MPLS), or some other suitable protocol, such as those discussed herein. Network connectivity may be provided to/from the infrastructure equipment 900 via network interface connector 940 using a physical connection, which may be electrical (commonly referred to as a "copper interconnect"), optical, or wireless. The network controller circuitry 935 may include one or more dedicated processors and/or FPGAs to communicate using one or more of the aforementioned protocols. In some implementations, the network controller circuitry 935 may include multiple controllers to provide connectivity to other networks using the same or different protocols. In various embodiments, the network controller circuitry 935 enables communication with associated equipment and/or with a backend system (e.g., server(s) 830 of FIG. 8), which may take place via a suitable gateway device.

The positioning circuitry 945 includes circuitry to receive and decode signals transmitted/broadcasted by a positioning network of a global navigation satellite system (GNSS). Examples of navigation satellite constellations (or GNSS) include United States' Global Positioning System (GPS), Russia's Global Navigation System (GLONASS), the European Union's Galileo system, China's BeiDou Navigation Satellite System, a regional navigation system or GNSS augmentation system (e.g., Navigation with Indian Constellation (NAVIC), Japan's Quasi-Zenith Satellite System (QZSS), France's Doppler Orbitography and Radio-positioning Integrated by Satellite (DORIS), etc.), or the like. The positioning circuitry 945 comprises various hardware elements (e.g., including hardware devices such as switches, filters, amplifiers, antenna elements, and the like to facilitate OTA communications) to communicate with components of a positioning network, such as navigation satellite constellation nodes. In some embodiments, the positioning circuitry 945 may include a Micro-Technology for Positioning, Navigation, and Timing (Micro-PNT) IC that uses a master timing clock to perform position tracking/estimation without GNSS assistance. The positioning circuitry 945 may also be part of, or interact with, the baseband circuitry 910 and/or RFEMs 915 to communicate with the nodes and components of the positioning network. The positioning circuitry 945 may also provide position data and/or time data to the application circuitry 905, which may use the data to synchronize operations with various other infrastructure equipment, or the like.

The components shown by FIG. 9 may communicate with one another using interface circuitry 906 or interconnect (IX) 906, which may include any number of bus and/or interconnect (IX) technologies such as industry standard architecture (ISA), extended ISA (EISA), inter-integrated circuit (I²C), an serial peripheral interface (SPI), point-to-point interfaces, power management bus (PMBus), peripheral component interconnect (PCI), PCI express (PCIe), Intel^{®} Ultra Path Interface (UPI), Intel^{®} Accelerator Link (IAL), Intel^{®} Common Express Link (CXL), Common Application Programming Interface (CAPI), OpenCAPI^{™}, Intel^{®} QuickPath interconnect (QPI), Ultra Path Interconnect (UPI), Intel^{®} Omni-Path Architecture (OPA) IX, RapidIO^{™} system IXs, Cache Coherent Interconnect for Accelerators (CCIX), Gen-Z Consortium IXs, Open Coherent Accelerator Processor Interface (OpenCAPI) IX, a HyperTransport interconnect, NVLink provided by NVIDIA^{®}, and/or any number of other IX technologies. The IX technology may be a proprietary bus, for example, used in an SoC based system., and/or any number of other IX technologies.

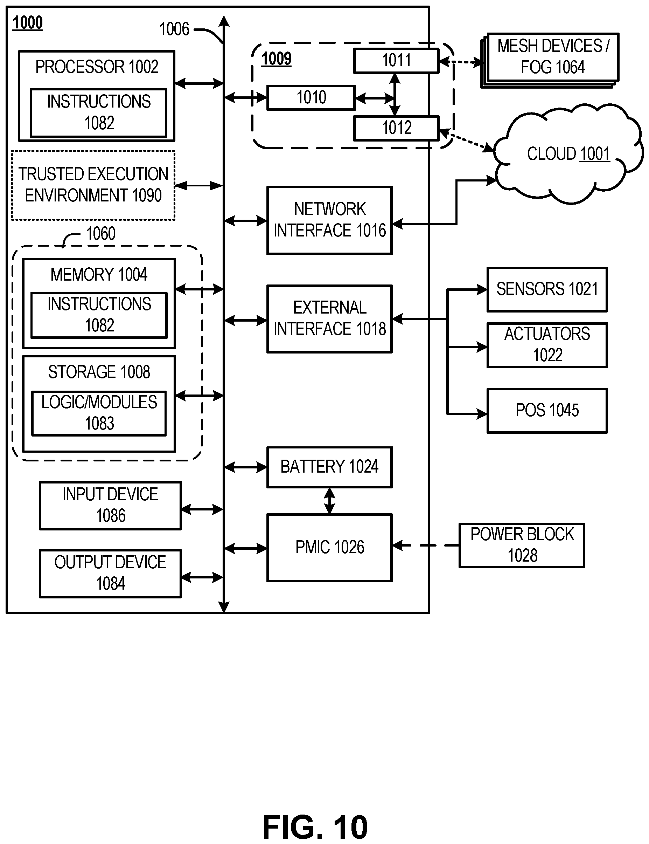

**FIG. 10** illustrates an example of a platform 1000 (also referred to as "system 1000," "device 1000," "appliance 1000," or the like) in accordance with various embodiments. In embodiments, the platform 1000 may be suitable for use as intermediate nodes 820 and/or endpoints 810 of FIG. 8, and/or any other element/device discussed herein with regard any other figure shown and described herein. Platform 1000 may also be implemented in or as a server computer system or some other element, device, or system discussed herein. The platform 1000 may include any combinations of the components shown in the example. The components of platform 1000 may be implemented as integrated circuits (ICs), portions thereof, discrete electronic devices, or other modules, logic, hardware, software, firmware, or a combination thereof adapted in the computer platform 1000, or as components otherwise incorporated within a chassis of a larger system. The example of FIG. 10 is intended to show a high level view of components of the computer platform 1000. However, some of the components shown may be omitted, additional components may be present, and different arrangement of the components shown may occur in other implementations.

The platform 1000 includes processor circuitry 1002. The processor circuitry 1002 includes circuitry such as, but not limited to one or more processor cores and one or more of cache memory, low drop-out voltage regulators (LDOs), interrupt controllers, serial interfaces such as serial peripheral interface (SPI), inter-integrated circuit (I²C) or universal programmable serial interface circuit, real time clock (RTC), timer-counters including interval and watchdog timers, general purpose input-output (IO), memory card controllers such as secure digital/multimedia card (SD/MMC) or similar, universal serial bus (USB) interfaces, mobile industry processor interface (MIPI) interfaces and Joint Test Access Group (JTAG) test access ports. In some implementations, the processor circuitry 1002 may include one or more hardware accelerators, which may be microprocessors, programmable processing devices (e.g., FPGA, ASIC, etc.), or the like. The one or more hardware accelerators may include, for example, computer vision, machine learning, and/or deep learning accelerators. In some implementations, the processor circuitry 1002 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor(s) of processor circuitry 1002 may include, for example, one or more processor cores (CPUs), one or more application processors, one or more graphics processing units (GPUs), one or more reduced instruction set computing (RISC) processors, one or more Acorn RISC Machine (ARM) processors, one or more complex instruction set computing (CISC) processors, one or more digital signal processors (DSP), one or more FPGAs, one or more PLDs, one or more ASICs, one or more baseband processors, one or more radio-frequency integrated circuits (RFIC), one or more microprocessors or controllers, or any suitable combination thereof. The processors (or cores) of the processor circuitry 1002 may be coupled with or may include memory/storage and may be configured to execute instructions stored in the memory/storage to enable various applications or operating systems to run on the platform 1000. In these embodiments, the processors (or cores) of the processor circuitry 1002 is configured to operate application software to provide a specific service to a user of the platform 1000. In some embodiments, the processor circuitry 1002 may be a special-purpose processor/controller to operate according to the various embodiments herein.

As examples, the processor circuitry 1002 may include an Intel^{®} Architecture Core^{™} based processor, such as a Quark^{™}, an Atom^{™}, an i3, an i5, an i7, an i9, or an MCU-class processor, Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Core Architecture, such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor circuitry 1002 may be a part of a system on a chip (SoC), System-in-Package (SiP), a multi-chip package (MCP), and/or the like, in which the processor circuitry 1002 and other components are formed into a single integrated circuit, or a single package, such as the Edison^{™} or Galileo^{™} SoC boards from Intel^{®} Corporation. Other examples of the processor circuitry 1002 are mentioned elsewhere in the present disclosure.

Additionally or alternatively, processor circuitry 1002 may include circuitry such as, but not limited to, one or more FPDs such as FPGAs and the like; PLDs such as CPLDs, HCPLDs, and the like; ASICs such as structured ASICs and the like; PSoCs; and the like. In such embodiments, the circuitry of processor circuitry 1002 may comprise logic blocks or logic fabric including and other interconnected resources that may be programmed to perform various functions, such as the procedures, methods, functions, etc. of the various embodiments discussed herein. In such embodiments, the circuitry of processor circuitry 1002 may include memory cells (e.g., EPROM, EEPROM, flash memory, static memory (e.g., SRAM, anti-fuses, etc.) used to store logic blocks, logic fabric, data, etc. in LUTs and the like.

The processor circuitry 1002 may communicate with system memory circuitry 1004 over an interconnect 1006 (e.g., a bus). Any number of memory devices may be used to provide for a given amount of system memory. As examples, the memory circuitry 1004 may be random access memory (RAM) in accordance with a Joint Electron Devices Engineering Council (JEDEC) design such as the DDR or mobile DDR standards (e.g., LPDDR, LPDDR2, LPDDR3, or LPDDR4), dynamic RAM (DRAM), and/or synchronous DRAM (SDRAM)). The memory circuitry 1004 may also include nonvolatile memory (NVM) such as high-speed electrically erasable memory (commonly referred to as "flash memory"), phase change RAM (PRAM), resistive memory such as magnetoresistive random access memory (MRAM), etc., and may incorporate three-dimensional (3D) cross-point (XPOINT) memories from Intel^{®} and Micron^{®}. The memory circuitry 1004 may also comprise persistent storage devices, which may be temporal and/or persistent storage of any type, including, but not limited to, non-volatile memory, optical, magnetic, and/or solid state mass storage, and so forth.

The individual memory devices of memory circuitry 1004 may be implemented as one or more of solder down packaged integrated circuits, socketed memory modules, and plug-in memory cards. The memory circuitry 1004 may be implemented as any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs. Memory circuitry 1004. In embodiments, the memory circuitry 1004 may be disposed in or on a same die or package as the processor circuitry 1002 (e.g., a same SoC, a same SiP, or soldered on a same MCP as the processor circuitry 1002).

To provide for persistent storage of information such as data, applications, operating systems (OS), and so forth, a storage circuitry 1008 may also couple to the processor circuitry 1002 via the interconnect 1006. In an example, the storage circuitry 1008 may be implemented via a solid-state disk drive (SSDD). Other devices that may be used for the storage circuitry 1008 include flash memory cards, such as SD cards, microSD cards, xD picture cards, and the like, and USB flash drives. In low power implementations, the storage circuitry 1008 may be on-die memory or registers associated with the processor circuitry 1002. However, in some examples, the storage circuitry 1008 may be implemented using a micro hard disk drive (HDD). Further, any number of new technologies may be used for the storage circuitry 1008 in addition to, or instead of, the technologies described, such resistance change memories, phase change memories, holographic memories, or chemical memories, among others.

The storage circuitry 1008 stores computational logic 1083 (or "modules 1083") in the form of software, firmware, or hardware commands to implement the techniques described herein. The computational logic 1083 may be employed to store working copies and/or permanent copies of computer programs, or data to create the computer programs, for the operation of various components of platform 1000 (e.g., drivers, etc.), an operating system of platform 1000, one or more applications, and/or for carrying out the embodiments discussed herein. The computational logic 1083 may be stored or loaded into memory circuitry 1004 as instructions 1082, or data to create the instructions 1082, for execution by the processor circuitry 1002 to provide the functions described herein. The various elements may be implemented by assembler instructions supported by processor circuitry 1002 or high-level languages that may be compiled into such instructions (e.g., instructions 1082, or data to create the instructions 1082). The permanent copy of the programming instructions may be placed into persistent storage devices of storage circuitry 1008 in the factory or in the field through, for example, a distribution medium (not shown), through a communication interface (e.g., from a distribution server (not shown)), or over-the-air (OTA).

The instructions 1082 and/or modules 1083 (also referred to as "program code" or "programming instructions") provided via the memory circuitry 1004 and/or the storage circuitry 1008 of FIG. 10 are embodied as one or more non-transitory computer readable storage media (NTCRSM) 1060 including program code, a computer program product or data to create the computer program, with the computer program or data, to direct the processor circuitry 1002 of platform 1000 to perform electronic operations in the platform 1000, and/or to perform a specific sequence or flow of actions, for example, as described with respect to the flowchart(s) and block diagram(s) of operations and functionality depicted by the other figures in this disclosure. In some embodiments, the programming instructions (or data to create the programming instructions) to be executed may be in a pre-configured form that may require configuration instructions to install or provision the programming instructions to an apparatus (such as any of the devices/components/systems described herein). When installed/provisioned, configured and executed, the programming instructions can complete or perform various programming operations associated with operating system functions, one or more applications, and/or aspects of the present disclosure (including various programming operations associated with the other figures in this disclosure.

In various embodiments, the instructions 1082 and/or modules 1083 may include, or may be, program code for one or more applications, components, plug-ins, firmware, etc., which when running on the system 1000, collect spatial-temporal data, and provides this information to one or more prediction layers 1305 in the LPPS 1300 via a suitable access network (e.g., a NAN 831, 832, 833 and CN842 or cloud 844). As discussed in more detail infra, the spatial-temporal data such as operational parameters of the system 1300, signal measurements, and/or other like data as discussed herein, which may be accessed using suitable APIs, drivers, etc., (e.g., a modem driver for accessing signal measurements and/or other like information from the modem 1010). In some embodiments, these applications, components, plug-ins, firmware, etc., may also subscribe to the LPPS 1300 to receive LPP notifications or "hints" from the LPPS 1300.

In alternate embodiments, programming instructions (or data to create the instructions) may be disposed on multiple NTCRSM 1060. In alternate embodiments, programming instructions (or data to create the instructions) may be disposed on computer-readable transitory storage media, such as, signals. The instructions embodied by a machine-readable medium may further be transmitted or received over a communications network using a transmission medium via a network interface device utilizing any one of a number of transfer protocols (e.g., HTTP). Any combination of one or more computer usable or computer readable medium(s) may be utilized. The computer-usable or computer-readable medium may be, for example but not limited to, one or more electronic, magnetic, optical, electromagnetic, infrared, or semiconductor systems, apparatuses, devices, or propagation media. For instance, the NTCRSM 1060 may be embodied by devices described for the storage circuitry 1008 and/or memory circuitry 1004. More specific examples (a non- exhaustive list) of a computer-readable medium would include the following: an electrical connection having one or more wires, a portable computer diskette, a hard disk, a random access memory (RAM), a read-only memory (ROM), an erasable programmable read-only memory (EPROM, Flash memory, etc.), an optical fiber, a portable compact disc read-only memory (CD-ROM), an optical storage device and/or optical disks, a transmission media such as those supporting the Internet or an intranet, a magnetic storage device, or any number of other hardware devices. Note that the computer-usable or computer-readable medium could even be paper or another suitable medium upon which the program (or data to create the program) is printed, as the program (or data to create the program) can be electronically captured, via, for instance, optical scanning of the paper or other medium, then compiled, interpreted, or otherwise processed in a suitable manner, if necessary, and then stored in a computer memory (with or without having been staged in or more intermediate storage media). In the context of this document, a computer-usable or computer-readable medium may be any medium that can contain, store, communicate, propagate, or transport the program (or data to create the program) for use by or in connection with the instruction execution system, apparatus, or device. The computer-usable medium may include a propagated data signal with the computer-usable program code (or data to create the program code) embodied therewith, either in baseband or as part of a carrier wave. The computer usable program code (or data to create the program) may be transmitted using any appropriate medium, including but not limited to wireless, wireline, optical fiber cable, RF, etc.

In various embodiments, the program code (or data to create the program code) described herein may be stored in one or more of a compressed format, an encrypted format, a fragmented format, a packaged format, etc. Program code (or data to create the program code) as described herein may require one or more of installation, modification, adaptation, updating, combining, supplementing, configuring, decryption, decompression, unpacking, distribution, reassignment, etc. in order to make them directly readable and/or executable by a computing device and/or other machine. For example, the program code (or data to create the program code) may be stored in multiple parts, which are individually compressed, encrypted, and stored on separate computing devices, wherein the parts when decrypted, decompressed, and combined form a set of executable instructions that implement the program code (the data to create the program code such as that described herein. In another example, the Program code (or data to create the program code) may be stored in a state in which they may be read by a computer, but require addition of a library (e.g., a dynamic link library), a software development kit (SDK), an application programming interface (API), etc. in order to execute the instructions on a particular computing device or other device. In another example, the program code (or data to create the program code) may need to be configured (e.g., settings stored, data input, network addresses recorded, etc.) before the program code (or data to create the program code) can be executed/used in whole or in part. In this example, the program code (or data to create the program code) may be unpacked, configured for proper execution, and stored in a first location with the configuration instructions located in a second location distinct from the first location. The configuration instructions can be initiated by an action, trigger, or instruction that is not co-located in storage or execution location with the instructions enabling the disclosed techniques. Accordingly, the disclosed program code (or data to create the program code) are intended to encompass such machine readable instructions and/or program(s) (or data to create such machine readable instruction and/or programs) regardless of the particular format or state of the machine readable instructions and/or program(s) when stored or otherwise at rest or in transit.

Computer program code for carrying out operations of the present disclosure (e.g., computational logic 1083, instructions 1082 discussed previously) may be written in any combination of one or more programming languages, scripting language, mark-up languages, and/or the like, such as Python, PyTorch, Ruby, Scala, Smalltalk, Java^{™}, C++, C#, the "C" programming language, the Go (or "Golang") programming language, JavaScript, Server-Side JavaScript (SSJS), JQuery, PHP, Pearl, Python, Ruby on Rails, Accelerated Mobile Pages Script (AMPscript), Mustache Template Language, Handlebars Template Language, Guide Template Language (GTL), PHP, Java and/or Java Server Pages (JSP), Node.js, ASP.NET, JAMscript, and/or the like; a markup language such as Hypertext Markup Language (HTML), Extensible Markup Language (XML), Efficient XML Interchange (EXI), Java Script Object Notion (JSON), Apex^{®}, Cascading Stylesheets (CSS), JavaServer Pages (JSP), MessagePack^{™}, Apache^{®} Thrift, Abstract Syntax Notation One (ASN.1), Google^{®} Protocol Buffers (protobuf), or the like; some other suitable programming languages including proprietary programming languages and/or development tools, or any other languages tools. The computer program code for carrying out operations of the present disclosure may also be written in any combination of the programming languages discussed herein. The program code may execute entirely on the system 1000, partly on the system 1000, as a stand-alone software package, partly on the system 1000 and partly on a remote computer or entirely on the remote computer or server. In the latter scenario, the remote computer may be connected to the system 1000 through any type of network, including a LAN or WAN, or the connection may be made to an external computer (e.g., through the Internet using an Internet Service Provider).

In an example, the instructions 1082 on the processor circuitry 1002 (separately, or in combination with the instructions 1082 and/or logic/modules 1083 stored in computer-readable storage media) may configure execution or operation of a trusted execution environment (TEE) 1090. The TEE 1090 operates as a protected area accessible to the processor circuitry 1002 to enable secure access to data and secure execution of instructions. In some embodiments, the TEE 1090 may be a physical hardware device that is separate from other components of the system 1000 such as a secure-embedded controller, a dedicated SoC, or a tamper-resistant chipset or microcontroller with embedded processing devices and memory devices. In other embodiments, the TEE 1090 may be implemented as secure enclaves, which are isolated regions of code and/or data within the memory of the system 1000. Only code executed within a secure enclave may access data within the same secure enclave, and the secure enclave may only be accessible using the secure application (which may be implemented by an application processor or a tamper-resistant microcontroller). Various implementations of the TEE 1090, and an accompanying secure area in the processor circuitry 1002 or the memory circuitry 1004 and/or storage circuitry 1008 may be provided, for instance, through use of Intel^{®} Software Guard Extensions (SGX) or ARM^{®} TrustZone^{®} hardware security extensions; a Desktop and mobile Architecture Hardware (DASH) compliant Network Interface Card (NIC), Intel^{®} Management/Manageability Engine, Intel^{®} Converged Security Engine (CSE) or a Converged Security Management/Manageability Engine (CSME), Trusted Execution Engine (TXE) provided by Intel^{®} each of which may operate in conjunction with Intel^{®} Active Management Technology (AMT) and/or Intel^{®} vPro^{™} Technology; AMD^{®} Platform Security coProcessor (PSP), AMD^{®} PRO A-Series Accelerated Processing Unit (APU) with DASH manageability, the IBM^{®} Crypto Express3^{®}, IBM^{®} 4807, 4808, 4809, and/or 4765 Cryptographic Coprocessors, IBM^{®} Baseboard Management Controller (BMC) with Intelligent Platform Management Interface (IPMI), Dell^{™} Remote Assistant Card II (DRAC II), integrated Dell^{™} Remote Assistant Card (iDRAC), and the like. Other aspects of security hardening, hardware roots-of-trust, and trusted or protected operations may be implemented in the device 1000 through the TEE 1090 and the processor circuitry 1002.

In other embodiments, the TEE 1090 may be implemented as secure enclaves, which are isolated regions of code and/or data within the processor and/or memory/storage circuitry of the system 1000. Only code executed within a secure enclave may access data within the same secure enclave, and the secure enclave may only be accessible using the secure application (which may be implemented by an application processor or a tamper-resistant microcontroller). Various implementations of the TEE 1090, and an accompanying secure area in the processor circuitry 1002 or the memory circuitry 1004 and/or storage circuitry 1008 may be provided, for instance, through use of Intel^{®} Software Guard Extensions (SGX), ARM^{®} TrustZone^{@} hardware security extensions, Keystone Enclaves provided by Oasis Labs^{™}, and/or the like. Other aspects of security hardening, hardware roots-of-trust, and trusted or protected operations may be implemented in the device 1000 through the TEE 1090 and the processor circuitry 1002. In some embodiments, the memory 1004 and/or storage 1008 may be divided into isolated user-space instances such as containers, partitions, virtual environments (VEs), etc. The isolated user-space instances may be implemented using a suitable OS-level virtualization technology such as Docker^{®} containers, Kubernetes^{®} containers, Solaris^{®} containers and/or zones, OpenVZ^{®} virtual private servers, DragonFly BSD^{®} virtual kernels and/or jails, chroot jails, and/or the like. Virtual machines could also be used in some implementations. In some embodiments, the memory 1004 and/or storage 1008 may be divided into one or more trusted memory regions for storing applications or software modules of the TEE 1090.

Although the instructions 1082 are shown as code blocks included in the memory circuitry 1004 and the computational logic 1083 is shown as code blocks in the storage circuitry 1008, it should be understood that any of the code blocks may be replaced with hardwired circuits, for example, built into an FPGA, ASIC, or some other suitable circuitry. For example, where processor circuitry 1002 includes (e.g., FPGA based) hardware accelerators as well as processor cores, the hardware accelerators (e.g., the FPGA cells) may be pre-configured (e.g., with appropriate bit streams) with the aforementioned computational logic to perform some or all of the functions discussed previously (in lieu of employment of programming instructions to be executed by the processor core(s)).

The memory circuitry 1004 and/or storage circuitry 1008 may store program code of an operating system (OS), which may be a general purpose OS or an OS specifically written for and tailored to the computing platform 1000. For example, the OS may be Unix or a Unix-like OS such as Linux e.g., provided by Red Hat Enterprise, Windows 10^{™} provided by Microsoft Corp.^{®}, macOS provided by Apple Inc.^{®}, or the like. In another example, the OS may be a mobile OS, such as Android^{®} provided by Google Inc.^{®}, iOS^{®} provided by Apple Inc.^{®}, Windows 10 Mobile^{®} provided by Microsoft Corp.^{®}, KaiOS provided by KaiOS Technologies Inc., or the like. In another example, the OS may be a real-time OS (RTOS), such as Apache Mynewt provided by the Apache Software Foundation^{®}, Windows 10 For IoT^{®} provided by Microsoft Corp.^{®}, Micro-Controller Operating Systems ("MicroC/OS" or "µC/OS") provided by Micrium^{®}, Inc., FreeRTOS, VxWorks^{®} provided by Wind River Systems, Inc.^{®}, PikeOS provided by Sysgo AG^{®}, Android Things^{®} provided by Google Inc.^{®}, QNX^{®} RTOS provided by BlackBerry Ltd., or any other suitable RTOS, such as those discussed herein.

The OS may include one or more drivers that operate to control particular devices that are embedded in the platform 1000, attached to the platform 1000, or otherwise communicatively coupled with the platform 1000. The drivers may include individual drivers allowing other components of the platform 1000 to interact or control various IO devices that may be present within, or connected to, the platform 1000. For example, the drivers may include a display driver to control and allow access to a display device, a touchscreen driver to control and allow access to a touchscreen interface of the platform 1000, sensor drivers to obtain sensor readings of sensor circuitry 1021 and control and allow access to sensor circuitry 1021, actuator drivers to obtain actuator positions of the actuators 1022 and/or control and allow access to the actuators 1022, a camera driver to control and allow access to an embedded image capture device, audio drivers to control and allow access to one or more audio devices. The OSs may also include one or more libraries, drivers, APIs, firmware, middleware, software glue, etc., which provide program code and/or software components for one or more applications to obtain and use the data from TEE 1090.

The components may communicate over the IX 1006. The IX 1006 may include any number of technologies, including ISA, extended ISA, I²C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, and/or any number of other IX technologies. The IX 1006 may be a proprietary bus, for example, used in a SoC based system.

The interconnect 1006 couples the processor circuitry 1002 to the communication circuitry 1009 for communications with other devices. The communication circuitry 1009 is a hardware element, or collection of hardware elements, used to communicate over one or more networks (e.g., cloud 1001) and/or with other devices (e.g., mesh devices/fog 1064). The communication circuitry 1009 includes baseband circuitry 1010 (or "modem 1010") and radiofrequency (RF) circuitry 1011 and 1012.

The baseband circuitry 1010 includes one or more processing devices (e.g., baseband processors) to carry out various protocol and radio control functions. Baseband circuitry 1010 may interface with application circuitry of platform 1000 (e.g., a combination of processor circuitry 1002, memory circuitry 1004, and/or storage circuitry 1008) for generation and processing of baseband signals and for controlling operations of the RF circuitry 1011 or 1012. The baseband circuitry 1010 may handle various radio control functions that enable communication with one or more radio networks via the RF circuitry 1011 or 1012. The baseband circuitry 1010 may include circuitry such as, but not limited to, one or more single-core or multicore processors (e.g., one or more baseband processors) or control logic to process baseband signals received from a receive signal path of the RF circuitry 1011 and/or 1012, and to generate baseband signals to be provided to the RF circuitry 1011 or 1012 via a transmit signal path. In various embodiments, the baseband circuitry 1010 may implement a real-time OS (RTOS) to manage resources of the baseband circuitry 1010, schedule tasks, etc. Examples of the RTOS may include Operating System Embedded (OSE)^{™} provided by Enea^{®}, Nucleus RTOS^{™} provided by Mentor Graphics^{®}, Versatile Real-Time Executive (VRTX) provided by Mentor Graphics^{®}, ThreadX^{™} provided by Express Logic^{®}, FreeRTOS, REX OS provided by Qualcomm^{®}, OKL4 provided by Open Kernel (OK) Labs^{®}, or any other suitable RTOS, such as those discussed herein.

Although not shown by FIG. 10, in one embodiment, the baseband circuitry 1010 includes individual processing device(s) to operate one or more wireless communication protocols (e.g., a "multi-protocol baseband processor" or "protocol processing circuitry") and individual processing device(s) to implement PHY functions. In this embodiment, the protocol processing circuitry operates or implements various protocol layers/entities of one or more wireless communication protocols. In a first example, the protocol processing circuitry may operate LTE protocol entities and/or 5G/NR protocol entities when the communication circuitry 1009 is a cellular radiofrequency communication system, such as millimeter wave (mmWave) communication circuitry or some other suitable cellular communication circuitry. In the first example, the protocol processing circuitry 1002 would operate MAC, RLC, PDCP, SDAP, RRC, and NAS functions. In a second example, the protocol processing circuitry may operate one or more IEEE-based protocols when the communication circuitry 1009 is WiFi communication system. In the second example, the protocol processing circuitry would operate WiFi MAC and LLC)functions. The protocol processing circuitry may include one or more memory structures (not shown) to store program code and data for operating the protocol functions, as well as one or more processing cores (not shown) to execute the program code and perform various operations using the data. The protocol processing circuitry provides control functions for the baseband circuitry 1010 and/or RF circuitry 1011 and 1012. The baseband circuitry 1010 may also support radio communications for more than one wireless protocol.

Continuing with the aforementioned embodiment, the baseband circuitry 1010 includes individual processing device(s) to implement PHY including HARQ functions, scrambling and/or descrambling, (en)coding and/or decoding, layer mapping and/or de-mapping, modulation symbol mapping, received symbol and/or bit metric determination, multi-antenna port pre-coding and/or decoding which may include one or more of space-time, space-frequency or spatial coding, reference signal generation and/or detection, preamble sequence generation and/or decoding, synchronization sequence generation and/or detection, control channel signal blind decoding, radio frequency shifting, and other related functions. etc. The modulation/demodulation functionality may include Fast-Fourier Transform (FFT), precoding, or constellation mapping/demapping functionality. The (en)coding/decoding functionality may include convolution, tail-biting convolution, turbo, Viterbi, or Low Density Parity Check (LDPC) coding. Embodiments of modulation/demodulation and encoder/decoder functionality are not limited to these examples and may include other suitable functionality in other embodiments.

The communication circuitry 1009 also includes RF circuitry 1011 and 1012 to enable communication with wireless networks using modulated electromagnetic radiation through a non-solid medium. Each of the RF circuitry 1011 and 1012 include a receive signal path, which may include circuitry to convert analog RF signals (e.g., an existing or received modulated waveform) into digital baseband signals to be provided to the baseband circuitry 1010. Each of the RF circuitry 1011 and 1012 also include a transmit signal path, which may include circuitry configured to convert digital baseband signals provided by the baseband circuitry 1010 to be converted into analog RF signals (e.g., modulated waveform) that will be amplified and transmitted via an antenna array including one or more antenna elements (not shown). The antenna array may be a plurality of microstrip antennas or printed antennas that are fabricated on the surface of one or more printed circuit boards. The antenna array may be formed in as a patch of metal foil (e.g., a patch antenna) in a variety of shapes, and may be coupled with the RF circuitry 1011 or 1012 using metal transmission lines or the like.

The RF circuitry 1011 (also referred to as a "mesh transceiver") is used for communications with other mesh or fog devices 1064. The mesh transceiver 1011 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of RF circuitry 1011, configured for a particular wireless communication protocol, may be used for the connections to the mesh devices 1064. For example, a WLAN unit may be used to implement WiFi^{™} communications in accordance with the IEEE 802.11 standard. In addition, wireless wide area communications, for example, according to a cellular or other wireless wide area protocol, may occur via a WWAN unit.

The mesh transceiver 1011 may communicate using multiple standards or radios for communications at different ranges. For example, the platform 1000 may communicate with close/proximate devices, e.g., within about 10 meters, using a local transceiver based on BLE, or another low power radio, to save power. More distant mesh devices 1064, e.g., within about 50 meters, may be reached over ZigBee or other intermediate power radios. Both communications techniques may take place over a single radio at different power levels, or may take place over separate transceivers, for example, a local transceiver using BLE and a separate mesh transceiver using ZigBee.

The RF circuitry 1012 (also referred to as a "wireless network transceiver," a "cloud transceiver," or the like) may be included to communicate with devices or services in the cloud 1001 via local or wide area network protocols. The wireless network transceiver 1012 includes one or more radios to communicate with devices in the cloud 1001. The cloud 1001 may be the same or similar to cloud 844 discussed previously. The wireless network transceiver 1012 may be a LPWA transceiver that follows the IEEE 802.15.4, or IEEE 802.15.4g standards, among others, such as those discussed herein. The platform 1000 may communicate over a wide area using LoRaWAN^{™} (Long Range Wide Area Network) developed by Semtech and the LoRa Alliance. The techniques described herein are not limited to these technologies, but may be used with any number of other cloud transceivers that implement long range, low bandwidth communications, such as Sigfox, and other technologies. Further, other communications techniques, such as time-slotted channel hopping, described in the IEEE 802.15.4 specification may be used.

In one example implementation, the communication circuitry 1009 may be, or may include, a software defined radio (SDR) in which RF operating parameters including, but not limited to, frequency range, modulation type, and/or output power can be set or altered by software, and/or the technique by which this is achieved. Additionally or alternatively, the communication circuitry 1009 may be, or may include, a software defined multiradio (SDMR), which is a device or technology where multiple radio technologies (or RATs) coexist and share their wireless transmission and/or reception capabilities, including but not limited to regulated parameters, by operating them under a common software system. In either of these example implementations, each of the transceivers 1011 and 1012 may be radio applications, which are software application executing in a SDR or SDMR. Radio applications are typically designed to use certain RF band(s) using agreed-to schemes for multiple access, modulation, channel and data coding, as well as control protocols for all radio layers needed to maintain user data links between adjacent radio equipment, which run the same radio application.

Any number of other radio communications and protocols may be used in addition to the systems mentioned for the mesh transceiver 1011 and wireless network transceiver 1012, as described herein. For example, the radio transceivers 1011 and 1012 may include an LTE or other cellular transceiver that uses spread spectrum (SPA/SAS) communications for implementing high-speed communications. Further, any number of other protocols may be used, such as WiFi^{®} networks for medium speed communications and provision of network communications. The transceivers 1011 and 1012 may include radios that are compatible with, and/or may operate according to any one or more of the following radio communication technologies and/or standards including but not limited to those discussed herein.

Network interface circuitry/controller (NIC) 1016 may be included to provide wired communication to the cloud 1001 or to other devices, such as the mesh devices 1064 using a standard network interface protocol. The standard network interface protocol may include Ethernet, Ethernet over GRE Tunnels, Ethernet over Multiprotocol Label Switching (MPLS), Ethernet over USB, or may be based on other types of network protocols, such as Controller Area Network (CAN), Local Interconnect Network (LIN), DeviceNet, ControlNet, Data Highway+, PROFIBUS, or PROFINET, among many others. Network connectivity may be provided to/from the platform 1000 via NIC 1016 using a physical connection, which may be electrical (e.g., a "copper interconnect") or optical. The physical connection also includes suitable input connectors (e.g., ports, receptacles, sockets, etc.) and output connectors (e.g., plugs, pins, etc.). The NIC 1016 may include one or more dedicated processors and/or FPGAs to communicate using one or more of the aforementioned network interface protocols. In some implementations, the NIC 1016 may include multiple controllers to provide connectivity to other networks using the same or different protocols. For example, the platform 1000 may include a first NIC 1016 providing communications to the cloud over Ethernet and a second NIC 1016 providing communications to other devices over another type of network.

The interconnect 1006 may couple the processor circuitry 1002 to an external interface 1018 (also referred to as "IO interface circuitry" or the like) that is used to connect external devices or subsystems. The external devices include, inter alia, sensor circuitry 1021, actuators 1022, and positioning circuitry 1045. The sensor circuitry 1021 may include devices, modules, or subsystems whose purpose is to detect events or changes in its environment and send the information (sensor data) about the detected events to some other a device, module, subsystem, etc. Examples of such sensors 1021 include, inter alia, inertia measurement units (IMU) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors); pressure sensors; barometric pressure sensors; gravimeters; altimeters; image capture devices (e.g., cameras); light detection and ranging (LiDAR) sensors; proximity sensors (e.g., infrared radiation detector and the like), depth sensors, ambient light sensors, ultrasonic transceivers; microphones; etc.

The external interface 1018 connects the platform 1000 to actuators 1022, allow platform 1000 to change its state, position, and/or orientation, or move or control a mechanism or system. The actuators 1022 comprise electrical and/or mechanical devices for moving or controlling a mechanism or system, and converts energy (e.g., electric current or moving air and/or liquid) into some kind of motion. The actuators 1022 may include one or more electronic (or electrochemical) devices, such as piezoelectric biomorphs, solid state actuators, solid state relays (SSRs), shape-memory alloy-based actuators, electroactive polymer-based actuators, relay driver integrated circuits (ICs), and/or the like. The actuators 1022 may include one or more electromechanical devices such as pneumatic actuators, hydraulic actuators, electromechanical switches including electromechanical relays (EMRs), motors (e.g., DC motors, stepper motors, servomechanisms, etc.), wheels, thrusters, propellers, claws, clamps, hooks, an audible sound generator, and/or other like electromechanical components. The platform 1000 may be configured to operate one or more actuators 1022 based on one or more captured events and/or instructions or control signals received from a service provider and/or various client systems.

The positioning circuitry 1045 includes circuitry to receive and decode signals transmitted/broadcasted by a positioning network of a global navigation satellite system (GNSS). Examples of navigation satellite constellations (or GNSS) include United States' Global Positioning System (GPS), Russia's Global Navigation System (GLONASS), the European Union's Galileo system, China's BeiDou Navigation Satellite System, a regional navigation system or GNSS augmentation system (e.g., Navigation with Indian Constellation (NAVIC), Japan's Quasi-Zenith Satellite System (QZSS), France's Doppler Orbitography and Radio-positioning Integrated by Satellite (DORIS), etc.), or the like. The positioning circuitry 1045 comprises various hardware elements (e.g., including hardware devices such as switches, filters, amplifiers, antenna elements, and the like to facilitate OTA communications) to communicate with components of a positioning network, such as navigation satellite constellation nodes. In some embodiments, the positioning circuitry 1045 may include a Micro-Technology for Positioning, Navigation, and Timing (Micro-PNT) IC that uses a master timing clock to perform position tracking/estimation without GNSS assistance. The positioning circuitry 1045 may also be part of, or interact with, the communication circuitry 1009 to communicate with the nodes and components of the positioning network. The positioning circuitry 1045 may also provide position data and/or time data to the application circuitry, which may use the data to synchronize operations with various infrastructure (e.g., radio base stations), for turn-by-turn navigation, or the like.

In some examples, various IO devices may be present within, or connected to, the platform 1000, which are referred to as input device circuitry 1086 and output device circuitry 1084 in FIG. 10. The input device circuitry 1086 and output device circuitry 1084 include one or more user interfaces designed to enable user interaction with the platform 1000 and/or peripheral component interfaces designed to enable peripheral component interaction with the platform 1000. Input device circuitry 1086 may include any physical or virtual means for accepting an input including, inter alia, one or more physical or virtual buttons (e.g., a reset button), a physical keyboard, keypad, mouse, touchpad, touchscreen, microphones, scanner, headset, and/or the like.

The output device circuitry 1084 may be included to show information or otherwise convey information, such as sensor readings, actuator position(s), or other like information. Data and/or graphics may be displayed on one or more user interface components of the output device circuitry 1084. Output device circuitry 1084 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Chrystal Displays (LCD), LED displays, quantum dot displays, projectors, etc.), with the output of characters, graphics, multimedia objects, and the like being generated or produced from the operation of the platform 1000. The output device circuitry 1084 may also include speakers or other audio emitting devices, printer(s), and/or the like. In some embodiments, the sensor circuitry 1021 may be used as the input device circuitry 1086 (e.g., an image capture device, motion capture device, or the like) and one or more actuators 1022 may be used as the output device circuitry 1084 (e.g., an actuator to provide haptic feedback or the like). In another example, near-field communication (NFC) circuitry comprising an NFC controller coupled with an antenna element and a processing device may be included to read electronic tags and/or connect with another NFC-enabled device. Peripheral component interfaces may include, but are not limited to, a non-volatile memory port, a universal serial bus (USB) port, an audio jack, a power supply interface, etc.

A battery 1024 may be coupled to the platform 1000 to power the platform 1000, which may be used in embodiments where the platform 1000 is not in a fixed location. The battery 1024 may be a lithium ion battery, a lead-acid automotive battery, or a metal-air battery, such as a zinc-air battery, an aluminum-air battery, a lithium-air battery, a lithium polymer battery, and/or the like. In embodiments where the platform 1000 is mounted in a fixed location, the platform 1000 may have a power supply coupled to an electrical grid. In these embodiments, the platform 1000 may include power tee circuitry to provide for electrical power drawn from a network cable to provide both power supply and data connectivity to the platform 1000 using a single cable.

Power management integrated circuitry (PMIC) 1026 may be included in the platform 1000 to track the state of charge (SoCh) of the battery 1024, and to control charging of the platform 1000. The PMIC 1026 may be used to monitor other parameters of the battery 1024 to provide failure predictions, such as the state of health (SoH) and the state of function (SoF) of the battery 1024. The PMIC 1026 may include voltage regulators, surge protectors, power alarm detection circuitry. The power alarm detection circuitry may detect one or more of brown out (under-voltage) and surge (over-voltage) conditions. The PMIC 1026 may communicate the information on the battery 1024 to the processor circuitry 1002 over the interconnect 1006. The PMIC 1026 may also include an analog-to-digital (ADC) convertor that allows the processor circuitry 1002 to directly monitor the voltage of the battery 1024 or the current flow from the battery 1024. The battery parameters may be used to determine actions that the platform 1000 may perform, such as transmission frequency, mesh network operation, sensing frequency, and the like. As an example, the PMIC 1026 may be a battery monitoring integrated circuit, such as an LTC5020 or an LTC2990 from Linear Technologies, an ADT7488A from ON Semiconductor of Phoenix Arizona, or an IC from the UCD90xxx family from Texas Instruments of Dallas, TX.

A power block 1028, or other power supply coupled to a grid, may be coupled with the PMIC 1026 to charge the battery 1024. In some examples, the power block 1028 may be replaced with a wireless power receiver to obtain the power wirelessly, for example, through a loop antenna in the platform 1000. A wireless battery charging circuit, such as an LTC5020 chip from Linear Technologies of Milpitas, California, among others, may be included in the PMIC 1026. The specific charging circuits chosen depend on the size of the battery 1024, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

**FIG. 11** depicts a block diagram for an example Multi-access Edge Computing (MEC) system architecture 1100 according to various embodiments. As mentioned previously, the edge compute nodes 836 of FIG. 8 may be implemented using MEC technologies depicted by FIG. 11. MEC offers application developers and content providers cloud-computing capabilities and an Information Technology (IT) service environment at the edge of the network. This environment is characterized by ultra-low latency and high bandwidth as well as real-time access to radio network information that can be leveraged by applications. MEC technology permits to flexible and rapid deployment of innovative applications and services towards mobile subscribers, enterprises and vertical segments. In particular, the MEC system 1100 allows applications to, inter alia, exchange data, provide data to aggregation points, and access to data in databases which provide an overview of the local situation derived from a multitude of sensors.

The illustrated logical connections between various entities of the MEC architecture 1100 may be access-agnostic and not dependent on a particular deployment. MEC enables implementation of MEC applications (MEC Apps) 1136-1 and 1136-2 (collectively referred to as "MEC Apps 1136" or the like) as software-only entities that run on top of a Virtualization Infrastructure (VI) 1138-1 and 1138-2 (collectively referred to as "VI 1138" or the like), which is located in or close to the network edge. A MEC app 1136 is an application that can be instantiated on a MEC host 836 within the MEC system 1100 and can potentially provide or consume MEC services 1137a. The term "user application" in the context of MEC refers to an MEA 1136 that is instantiated in the MEC system 1100 in response to a request from a user (e.g., UE 811, 821) via a device application. FIG. 11 shows the general entities involved, and these entities can be grouped into multi-access edge system level 1102, multi-access edge host level 1101, and network level entities (not shown). The multi-access edge host level 1101 includes a MEC host 836-1 and MEC host 836-2 (which may be the same or similar to the MEC servers 836 discussed previously, and are collectively referred to as "MEC host 836" or the like) and Multi-access Edge (ME) management 1130, which provide functionality to run MEC Apps 1136 within an operator network or a subset of an operator network. The multi-access edge system level 1102 includes multi-access edge system level management 1102, UE 1120 (which may be the same or similarto the intermediate nodes 820 and/or endpoints 810 discussed herein), and third party entities. The network level (not shown) includes various external network level entities, such as a 3GPP network (e.g., CN 842 of FIG. 8), a local area network (e.g., a LAN, WLAN, PAN, etc.), and an external network (e.g., CN 842 and/or cloud 844 of FIG. 8). The multi-access edge host level 1101 includes multi-access edge host level management and one or more MEC hosts 836. The multi-access edge host level management may include various components that handle the management of the multi-access edge specific functionality of a particular MEC platform 1137, MEC host 836, and the MEC Apps 1136 to be run. The MEC host 836 includes the MEC platform 1137, MEC Apps 1136, and VI 1138.

The MEC system 1100 includes three groups of reference points, including "Mp" reference points regarding the multi-access edge platform functionality; "Mm" reference points, which are management reference points; and "Mx" reference points, which connect MEC entities to external entities. The interfaces/reference points in the MEC system 1100 may include IP-based connections, and may be used to provide Representational State Transfer (REST or RESTful) services, and the messages conveyed using the reference points/interfaces may be in XML, HTML, JSON, or some other desired format, such as those discussed herein. A suitable Authentication, Authorization, and Accounting (AAA) protocol, such as the radius or diameter protocols, may also be used for communicating over the reference points/interfaces in other embodiments.

The MEC host 836 is an entity that contains an MEC platform 1137 and VI 1138 which provides compute, storage, and network resources for the purpose of running MEC Apps 1136. Each of the Vis 1138 includes a respective data plane (DP) 1139 (including DP 1139-1 and 1139-2) that executes respective traffic rules 1137-1b and 1137-2b (collectively referred to as "traffic rules 1137b") received by the MEC platform 1137, and routes the traffic among applications (e.g., MEC Apps 1136), MEC services 1137-1a and 1137-2a (collectively referred to as "MEC services 1137a"), DNS server/proxy (see e.g., via DNS handling entities 1137-1c and 1137-2c), 3GPP network, local networks, and external networks. The MEC DP 1138a may be connected with the (R)AN nodes 831 and CN 842 of FIG. 8, and/or may be connected with the AP 833 of FIG. 8 via a wider network, such as the internet, an enterprise network, or the like. The other entities depicted and/or discussed herein may be the same or similar as those discussed with regard to FIG.8.

The MEC platforms 1137-1 and 1137-2 (collectively referred to as "MEC platform 1137" or the like) within a MEC host 836 may be a collection of essential functionality required to run MEC Apps 1136 on a particular VI 1138 and enable them to provide and consume MEC services 1137a, and that can provide itself a number of MEC services 1137a. The MEC platform 1137 can also provide various services and/or functions, such as offering an environment where the MEC Apps 1136 can discover, advertise, consume and offer MEC services 1137a (discussed infra), including MEC services 1137a available via other platforms when supported. The MEC platform 1137 may be able to allow authorized MEC Apps 1136 to communicate with third party servers located in external networks. The MEC platform 1137 may receive traffic rules from the MEC platform manager 1131, applications, or services, and instruct the data plane accordingly (see e.g., Traffic Rules Control 1137b). The MEC platform 1137 may send instructions to the DP 1138 within the VI 1138 via the Mp2 reference point. The Mp2 reference point between the MEC platform 1137 and the DP 1138 of the VI 1138 may be used to instruct the DP 1138 on how to route traffic among applications, networks, services, etc. In some implementations, the MEC platform 1137 may translate tokens representing UEs XP01 in the traffic rules into specific IP addresses. The MEC platform 1137 also receives DNS records from the MEC platform manager 1131 and configures a DNS proxy/server accordingly. The MEC platform 1137 hosts MEC services 1137a including the multi-access edge services discussed infra, and provide access to persistent storage and time of day information. Furthermore, the MEC platform 1137 may communicate with other MEC platforms 1137 of other MEC servers 836 via the Mp3 reference point.

The VI 1138 may represent the totality of all hardware and software components which build up the environment in which MEC Apps 1136 and/or MEC platform 1137 are deployed, managed and executed. The VI 1138 may span across several locations, and the network providing connectivity between these locations is regarded to be part of the VI 1138. The physical hardware resources of the VI 1138 includes computing, storage and network resources that provide processing, storage and connectivity to MEC Apps 1136 and/or MEC platform 1137 through a virtualization layer (e.g., a hypervisor, VM monitor (VMM), or the like). The virtualization layer may abstract and/or logically partition the physical hardware resources of the MEC server 836 as a hardware abstraction layer. The virtualization layer may also enable the software that implements the MEC Apps 1136 and/or MEC platform 1137 to use the underlying VI 1138, and may provide virtualized resources to the MEC Apps 1136 and/or MEC platform 1137, so that the MEC Apps 1136 and/or MEC platform 1137 can be executed.

The MEC Apps 1136 are applications that can be instantiated on a MEC host 836 within the MEC system 1100 and can potentially provide or consume MEC services 1137a. The term "MEC service" refers to a service provided via a MEC platform 1137 either by the MEC platform 1137 itself or by a MEC App 1136. MEC Apps 1136 may run as VM on top of the VI 1138 provided by the MEC server 836, and can interact with the MEC platform 1137 to consume and provide the MEC services 1137a. The MEC Apps 1136 are instantiated on the VI 1138 of the MEC server 836 based on configuration or requests validated by the ME management 1130. The MEC Apps 1136 can also interact with the MEC platform 1137 to perform certain support procedures related to the lifecycle of the MEC Apps 1136, such as indicating availability, preparing relocation of user state, etc. The MEC Apps 1136 may have a certain number of rules and requirements associated to them, such as required resources, maximum latency, required or useful services, etc. These requirements may be validated by the ME management 1130, and can be assigned to default values if missing. MEC services 1137-1a and 1137-2a (collectively referred to as "MEC services "1137a" or the like) are services provided and/or consumed either by the MEC platform 1137 and/or MEC Apps 1136. The service consumers (e.g., MEC Apps 1136 and MEC platform 1137) may communicate with particular MEC services 1137a over individual APIs (including MEC LPP API 1151-1, 1151-2 and various APIs 1153-1, 1153-2 in FIG. 11). When provided by an application, a MEC service 1137a can be registered in a list of services in the service registries 1137-1d and 1137-2d (collectively referred to as "service registry 1137d" or the like) to a respective the MEC platform 1137 over the Mp1 reference point. Additionally, the MEC Apps 1136 can subscribe to one or more services 1137a for which it is authorized over the Mp1 reference point. In various embodiments, one or more MEC Apps 1136 are configured to collect data for the LPP services discussed herein (e.g., LPPS 1300 of FIG. 13). In these embodiments, the MEC platform 1137 may operate these MEC Apps 1136 to perform the various functionalities of the LPP layer 1302 (or LPP engine) and/or one or more prediction layers 1325-1 to 1325-N of FIG. 13, and/or perform the various functionalities of the embodiments discussed infra with respect to the other figures in this disclosure.

The MEC system 1100 may support a feature called *UserApps.* When the MEC system 1100 supports the feature *UserApps,* the ME management 1130 may support the instantiation of MEC Apps 1136 (or user applications) on multiple MEC hosts 836 following a single instantiation request, and when required by the operator in response to a request by the user. The application instance may need to fulfill a number of potential constraints predefined for the application 1105. Once instantiated, connectivity may be established between the UE 1120 and the application instance. Potential constraints may include latency, location, compute resources, storage resources, network capability, security conditions, and the like. As part of the user application (or MEC app 1136) instantiation, the MEC system 1100 will create an associated application context that the MEC system 1100 maintains for the lifetime of the user application (or MEC app 1136). The application context is a set of reference data about an application instance that is used to identify it, enable lifecycle management operations and associate it with its device application, The term "user context" in the context of MEC refers to application-specific runtime data maintained by a MEC app 1136, which is associated with a user of that application. The application context contains information specific to the application instance such as its unique identifier within the MEC system 1100 and the address (e.g., URI or the like) provided for clients (e.g., UE 1120) that are external to the MEC system 1100 to interact with the user application.

When the MEC system 1100 supports the feature *UserApps,* the system 1100 may, in response to a request by a user, support the establishment of connectivity between the UE 1120 and an instance of a specific MEC App 1136 fulfilling the requirements of the MEC App 1136 regarding the UE 1120. If no instance of the MEC App 1136 fulfilling these requirements is currently running, the multi-access edge system management may create a new instance of the application 1105 on a MEC host 836 that fulfils the requirements of the application 1105. Once instantiated, connectivity is established between the UE 1120 and the new MEC App 1136 instance. Requirements of the application can include latency, location, compute resources, storage resources, network capability, security conditions, and the like. When the MEC system 1100 supports the *UserApps* feature, the system 1100 may support the on-boarding of MEC Apps 1136 during the execution of an instantiation request, may allow the establishment of connectivity between the UE 1120 and a specific instance of an MEC App 1136, may support the capability to terminate the MEC App 1136 instance when no UE 1120 is connected to it anymore, and may support the termination of the MEC App 1136 running on multiple MEC servers 836 following a single termination request.

As shown by FIG. 11, the Mp1 reference point is between the MEC platform 1137 and the MEC Apps 1136. The Mp1 reference point may provide service registration 1137d, service discovery, and communication support for various services, such as the MEC services 1137-1a provided by MEC host 836-1 and MEC services 1137-2a provided by MEC host 836-2 (collectively referred to as "MEC services 1137a" or the like). In addition, the Mp1 interface may provide application availability, session state relocation support procedures, traffic rules and DNS rules activation, access to persistent storage and time of day information, and/or the like. The Mp1 reference point may be used for consuming and providing service specific functionality.

Examples of MEC services 1137a include Radio Network Information Service (RNIS), location services, and bandwidth management services. The RNIS, when available, provides authorized MEC Apps 1136 with radio network related information, and expose appropriate up-to-date radio network information to the MEC Apps 1136. The radio network information (RNI) may include, inter alia, radio network conditions, measurement and statistics information related to the user plane, information related to UEs 1120 served by the radio node(s) associated with the MEC host 836 (e.g., UE context and radio access bearers), changes on information related to UEs 1120 served by the radio node(s) associated with the MEC host 836, and/or the like. The RNI may be provided at the relevant granularity (e.g., per UE 1120, per cell, per period of time).

The service consumers (e.g., MEC Apps 1136 and MEC platform 1137) may communicate with the RNIS over an RNI API 1153 to obtain contextual information from a corresponding RAN. RNI may be provided to the service consumers via an access node (e.g., (R)AN nodes 831, 832, or AP 833 of FIG. 8). The RNI API 1153 may support both query and subscription (e.g., a pub/sub) based mechanisms that are used over a Representational State Transfer (RESTful) API 1153 or over a message broker of the MEC platform 1137 (not shown by FIG. 11). A MEC App 1136 may query information on a message broker via a transport information query procedure, wherein the transport information may be pre-provisioned to the MEC App 1136 via a suitable configuration mechanism. The various messages communicated via the RNI API 1153 may be in XML, JSON, Protobuf, or some other suitable format.

The RNI may be used by MEC Apps 1136 and MEC platform 1137 to optimize the existing services and to provide new types of services that are based on up to date information on radio conditions. As an example, a MEC App 1136 may use RNI to optimize current services such as video throughput guidance. In throughput guidance, a radio analytics MEC App 1136 may use MEC services to provide a backend video server with a near real-time indication on the throughput estimated to be available at the radio downlink interface in a next time instant. The throughput guidance radio analytics application 1136 computes throughput guidance based on the required radio network information it obtains from a multi-access edge service running on the MEC server 836. RNI may be also used by the MEC platform 1137 to optimize the mobility procedures required to support service continuity, such as when a certain MEC App 1136 requests a single piece of information using a simple request-response model (e.g., using RESTful mechanisms) while other MEC Apps 1136 subscribe to multiple different notifications regarding information changes (e.g., using a pub/sub mechanism and/or message broker mechanisms).

The location services (LS), when available, may provide authorized MEC Apps 1136 with location-related information, and expose such information to the MEC Apps 1136. With location related information, the MEC platform 1137 or one or more MEC Apps 1136 perform active device location tracking, location-based service recommendations, and/or other like services. The LS supports the location retrieval mechanism, e.g., the location is reported only once for each location information request. The LS supports a location subscribe mechanism, for example, the location is able to be reported multiple times for each location request, periodically or based on specific events, such as location change. The location information may include, inter alia, the location of specific UEs 1120 currently served by the radio node(s) associated with the MEC server 836, information about the location of all UEs 1120 currently served by the radio node(s) associated with the MEC server 836, information about the location of a certain category of UEs 1120 currently served by the radio node(s) associated with the MEC server 836, a list of UEs 1120 in a particular location, information about the location of all radio nodes currently associated with the MEC server 836, and/or the like. The location information may be in the form of a geolocation, a Global Navigation Satellite Service (GNSS) coordinate, a Cell identity (ID), and/or the like. The LS is accessible through the API defined in the Open Mobile Alliance (OMA) specification "RESTful Network API for Zonal Presence" OMA-TS-REST-NetAPI-ZonalPresence-V1-0-20160308-C. The Zonal Presence service utilizes the concept of "zone", where a zone lends itself to be used to group all radio nodes that are associated to a MEC host or MEC server 836, or a subset thereof, according to a desired deployment. In this regard, the OMA Zonal Presence API 1153 provides means for MEC Apps 1136 to retrieve information about a zone, the access points associated to the zones and the users that are connected to the access points. In addition, the OMA Zonal Presence API 1153, allows authorized application to subscribe to a notification mechanism, reporting about user activities within a zone. In various embodiments, a MEC server 836 may access location information or zonal presence information of individual UEs 1120 using the OMA Zonal Presence API 1153 to identify the relative location or positions of the UEs 1120.

The bandwidth management services (BWMS) provides for the allocation of bandwidth (BW) to certain traffic routed to and from MEC Apps 1136, and specify static/dynamic up/down BW resources, including BW size and BW priority. MEC Apps 1136 may use the BWMS to update/receive BW information to/from the MEC platform 1137. In some embodiments, different MEC Apps 1136 running in parallel on the same MEC server 836 may be allocated specific static, dynamic up/down BW resources, including BW size and BW priority. The BWMS includes a BW management (BWM) API 1153 to allowed registered applications to statically and/or dynamically register for specific BW allocations per session/application. The BWM API 1153 includes HTTP protocol bindings for BWM functionality using RESTful services or some other suitable API mechanism.

Referring back to FIG. 11, multi-access edge management comprises multi-access edge system level management and the multi-access edge host level management 1130. The ME management 1130 comprises the MEC platform manager 1131 and the VI manager (VIM) 1132, and handles the management of MEC-specific functionality of a particular MEC server 836 and the applications running on it. In some implementations, some or all of the multi-access edge management components may be implemented by one or more servers located in one or more data centers, and may use virtualization infrastructure that is connected with Network Functions Virtualization (NFV) infrastructure used to virtualize core network elements, or using the same hardware as the NFV infrastructure.

The MEC platform manager 1131 is responsible for managing the life cycle of applications including informing the multi-access edge orchestrator (MEC-O) 1121 of relevant application related events. The MEC platform manager 1131 may also provide MEP element management functions 1131a to the MEC platform 1137, manage MEC App rules and requirements 1131b including service authorizations, traffic rules, DNS configuration and resolving conflicts, and manage MEC App 1136 lifecycles (MEALC mgmt 1131c). The MEC platform manager 1131 may also receive virtualized resources fault reports and performance measurements from the VIM 1132 for further processing. The Mm5 reference point between the MEC platform manager 1131 and the MEC platform 1137 is used to perform platform configuration, configuration of the MEPE mgmt 1131a, the MERR mgmt 1131b, the MEALC mgmt 1131c, management of application relocation, etc.

The VIM 1132 may be an entity that allocates, manages and releases virtualized (compute, storage and networking) resources of the VI 1138, and prepares the VI 1138 to run a software image. To do so, the VIM 1132 may communicate with the VI 1138 over the Mm7 reference point between the VIM 1132 and the VI 1138. Preparing the VI 1138 may include configuring the VI 1138, and receiving/storing the software image. When supported, the VIM 1132 may provide rapid provisioning of applications, such as described in "Openstack++ for Cloudlet Deployments", available at http://reports-archive.adm.cs.cmu.edu/anon/2015/CMU-CS-15-123.pdf. The VIM 1132 may also collect and report performance and fault information about the virtualized resources, and perform application relocation when supported. For application relocation from/to external cloud environments, the VIM 1132 may interact with an external cloud manager to perform the application relocation, for example using the mechanism described in "Adaptive VM Handoff Across Cloudlets", and/or possibly through a proxy. Furthermore, the VIM 1132 may communicate with the MEC platform manager 1131 via the Mm6 reference point, which may be used to manage virtualized resources, for example, to realize the application lifecycle management. Moreover, the VIM 1132 may communicate with the MEC-O 1121 via the Mm4 reference point, which may be used to manage virtualized resources of the MEC server 836, and to manage application images. Managing the virtualized resources may include tracking available resource capacity, etc.

The multi-access edge system level management includes the MEC-O 1121 as a core component, which has an overview of the complete MEC system 1100. The MEC-O 1121 may maintain an overall view of the MEC system 1100 based on deployed multi-access edge hosts 836, available resources, available MEC services 1137a, and topology. The Mm3 reference point between the MEC-O 1121 and the MEC platform manager 1131 may be used for the management of the application lifecycle, application rules and requirements and keeping track of available MEC services 1137a. The MEC-O 1121 may communicate with the user application lifecycle management proxy (UALMP) 1125 via the Mm9 reference point in order to manage MEC Apps 1136 requested by UE application 1105.

The MEC-O 1121 may also be responsible for on-boarding of application packages, including checking the integrity and authenticity of the packages, validating application rules and requirements and if necessary adjusting them to comply with operator policies, keeping a record of on-boarded packages, and preparing the VIM(s) 1102 to handle the applications. The MEC-O 1121 may select appropriate MEC host(s) 1101 for application instantiation based on constraints, such as latency, available resources, and available services. The MEC-O 1121 may also trigger application instantiation and termination, as well as trigger application relocation as needed and when supported.

The Operations Support System (OSS) 1122 refers to the OSS of an operator that receives requests via the Customer Facing Service (CFS) portal 1106 (and over the Mx1 reference point) and from UE applications 1105 for instantiation or termination of MEC Apps 1136, and decides on the granting of these requests. The CFS portal 1106 (and the Mx1 interface) may be used by third-parties to request the MEC system 1100 to run applications 1106 in the MEC system 1100. Granted requests may be forwarded to the MEC-O 1121 for further processing. When supported, the OSS 1122 also receives requests from UE applications 1105 for relocating applications between external clouds and the MEC system 1100. The Mm2 reference point between the OSS 1122 and the MEC platform manager 1131 is used for the MEC platform manager 1131 configuration, fault and performance management. The Mm1 reference point between the MEC-O 1121 and the OSS 1122 is used for triggering the instantiation and the termination of multi-access edge applications 1136 in the MEC system 1100.

The UE app(s) 1105 (also referred to as "device applications" or the like) is one or more applications running in a device, computing system, etc. (e.g., UE 1120), that has the capability to interact with the MEC system 1100 via the user application lifecycle management proxy 1125. The UE app(s) 1105 may be, include, or interact with one or more client applications, which in the context of MEC, is application software running on a device, computing system, etc. that utilizes functionality provided by one or more specific MEC application(s) 1136. The user application lifecycle management proxy ("user app LCM proxy") 1125 may authorize requests from UE applications 1105 in the UE and interacts with the OSS 1122 and the MEC-O 1121 for further processing of these requests. The term "lifecycle management," in the context of MEC, refers to a set of functions required to manage the instantiation, maintenance and termination of a MEC application 1136 instance. The user app LCM proxy 1125 may interact with the OSS 1122 via the Mm8 reference point, and is used to handle UE applications 1105 requests for running applications in the MEC system 1100. A user application 1105 may be an MEC App 1136 that is instantiated in the MEC system 1100 in response to a request of a user via an application running in the UE 1120 (e.g., UE application 1105). The user app LCM proxy 1125 allows UE applications 1105 to request on-boarding, instantiation, termination of user applications and when supported, relocation of user applications in and out of the MEC system 1100. It also allows informing the UE applications 1105 about the state of the user applications 1105. The user app LCM proxy 1125 is only accessible from within the mobile network, and may only be available when supported by the MEC system 1100. A UE application 1105 may use the Mx2 reference point between the user app LCM proxy 1125 and the UE application 1105 to request the MEC system 1100 to run an application in the MEC system 1100, or to move an application in or out of the MEC system 1100. The Mx2 reference point may only be accessible within the mobile network and may only be available when supported by the multi-access edge system.

In order to run an MEC App 1136 in the MEC system 1100, the MEC-O 1121 receives requests triggered by the OSS 1122, a third-party, or a UE application 1105. In response to receipt of such requests, the MEC-O 1121 selects a MEC server 836 to host the MEC App 1136 for computational offloading. These requests may include information about the application to be run, and possibly other information, such as the location where the application needs to be active, other application rules and requirements, as well as the location of the application image if it is not yet on-boarded in the MEC system 1100.

In various embodiments, the MEC-O 1121 selects one or more MEC servers 836 for computational intensive tasks. The selected one or more MEC servers 836 may offload computational tasks of a UE application 1105 based on various operational parameters, such as network capabilities and conditions, computational capabilities and conditions, application requirements, and/or other like operational parameters. The application requirements may be rules and requirements associated to/with one or more MEC Apps 1136, such as deployment model of the application (e.g., whether it is one instance per user, one instance per host, one instance on each host, etc.); required virtualized resources (e.g., compute, storage, network resources, including specific hardware support); latency requirements (e.g., maximum latency, how strict the latency constraints are, latency fairness between users); requirements on location; multi-access edge services that are required and/or useful for the MEC Apps 1136 to be able to run; multi-access edge services that the MEC Apps 1136 can take advantage of, if available; connectivity or mobility support/requirements (e.g., application state relocation, application instance relocation); required multi-access edge features, such as VM relocation support or UE identity; required network connectivity (e.g., connectivity to applications within the multi-access edge system, connectivity to local networks, or to the Internet); information on the operator's MEC system deployment or mobile network deployment (e.g., topology, cost); requirements on access to user traffic; requirements on persistent storage; traffic rules 1137b; DNS rules 1137c; etc.

The MEC-O 1121 considers the requirements and information listed above and information on the resources currently available in the MEC system 1100 to select one or several MEC servers 836 within the MEC system 1100 to host MEC Apps 1136 and/or for computational offloading. After one or more MEC servers 836 are selected, the MEC-O 1121 requests the selected MEC host(s) 836 to instantiate the application(s) or application tasks. The actual algorithm used to select the MEC servers 836 depends on the implementation, configuration, and/or operator deployment. In various embodiments, the selection algorithm may be based on the task offloading embodiments discussed herein, for example, by taking into account network, computational, and energy consumption requirements for performing tasks of application tasks, as well as network functionalities, processing, and offloading coding/encodings, or differentiating traffic between various RATs. Under certain circumstances (e.g., UE mobility events resulting in increased latency, load balancing decisions, etc.), and if supported, the MEC-O 1121 may decide to select one or more new MEC servers 836 to act as a master node, and initiates the transfer of an application instance or application-related state information from the one or more source MEC servers 836 to the one or more target MEC servers 836.

As mentioned previously, the MEC system architecture 1100 provides support for applications. In the context of FIG. 11, the UE app 1105 is an application instance running on a UE 1120, which may subscribe to LPP services/notifications from the LPPS 1300 and/or request and receive LPP services to/from the system. Additionally, the UE app 1105 is an application instance running on a UE 1120, which may be used by the LPPS 1300 to collect real-time and spatio-historical data from the UE 1120 (or from components therein). These application instances obtain or otherwise interact with a LPP service via MEC LPP API 1151a and 1151b (collectively referred to as "MEC LPP API 1151"). MEC hosts 836 may be co-located with edge infrastructure (e.g., NANs 831, 832, and 833 of FIG. 8) and may communicate with each other through the Mp3 interface.

In embodiments, LPP Information Services (LPP-IS) 1152-1 and 1152-2 (collectively referred to as "MEC LPP-IS 1152") permits information exposure pertinent to the support of link quality/performance prediction use cases to MEC app 1136 instances. The LPP-IS 1152 may be produced by the MEC platform 1137 or by the MEC Apps 1136. In the framework of LPPS 1300, the UE 1120 is hosting an LPP client application, and is connected to a certain MEC host 836 and a related MEC App 1136 operating within that MEC host 836. In presence of multiple MEC hosts 836, the LPP-IS 1152 permits exposure of LPP information between MEC Apps 1136 running on different MEC hosts 836, and exposure of LPP information with remote systems/services via the LPP API 1151. The remote systems/services may be remote application server instances (e.g., server(s) 850 of FIG. 8), which can be located outside the Edge system 835 (e.g., private clouds owned by the operator or by the OEM such as cloud 844) and may access the LPP notifications via the LPP API 1151.

LPP-IS 1152 also permits a single network operator to offer a LPP service(s) over a region that may span different countries and involve multiple networks, MEC systems 1100, and MEC app 1136 providers. For that purpose, the MEC LPP-IS 1152 includes the following functionalities.

In some aspects, the MEC platform 1137 can include a MEC LPP API 1151 and provide MEC LPP-IS 1152, which can include the following functionalities: (a) gathering of relevant UE information from an access network for purposes of performing UE authorization for LPP services (e.g., obtaining a list of LPP authorized UEs 1120, obtaining relevant information about the authorization based on UE subscription information/data, and obtaining UE configuration parameters such as a common set of radio link configuration parameters and/or UE capabilities, if available); (b) gathering of relevant radio link and/or backhaul link information from the access network for determining and providing LPPs to the UEs 1120; (c) exposure of the information obtained in (a)-(b) to MEC apps 1136 in the same MEC host 836 or MEC apps 1136 in other MEC hosts 836 via the MEC LPP API 1151; (d) for core network based implementations, enablement of MEC apps 1136 to communicate securely with the LPP-related core network functions (e.g., enabling communication between the MEC host and an "LPP control function" in the core network); (e) enablement of MEC apps 1136 in different MEC systems 1100 to communicate securely with each other; and (d) gathering and processing information available in other MEC hosts 836 via one or more other MEC APIs 1153 (e.g., gathering and processing information obtained from the RNI API, LS API, BWM API, a WLAN API, and/or other APIs that may be implemented within the MEC platform 1137 such as those discussed herein) in order to predict radio network congestion, BW measurements/resources, UE 1120 location(s)/mobility, and provide suitable notifications (e.g., LPP notifications) to the UE 1120.

From that perspective, the LPP-IS 1152 is relevant to Mp1 and Mp3 reference points in the MEC architecture 1100. In particular, the relevant information is exposed to MEC apps 1136 via the Mp1 reference point, and the Mp3 reference point may enable the possibility to transfer this information between different MEC platforms 1137. The MEC LPP API 1151 provides information to MEC apps 1136 in a standardized way, which provides interoperability in multi-vendor scenarios. Nevertheless, MEC apps 1136 may communicate in a direct way (e.g., without the use of MEC platform 1137). Inter-system communication may be realized between MEC Orchestrators 1121. As an alternative, or, in addition to that, possible Mp3 enhancements (or new reference points between MEC systems 1100) may be defined.

In some aspects, the MEC host 836-2 in FIG. 11 can also implement a MEC LPP API 1151-2, which can provide an interface to one or more of the apps instantiated within MEC host 5, such as MEC App 1136-2b. In this regard, MEC host 836-1 and MEC host 836-2 can communicate with each other via the Mp3 interface as well as the MEC LPP APIs 1151-1, 1151-2. Additionally, one or more of the MEC apps 1136-1 instantiated within MEC host 836-1 can communicate with one or more of the MEC apps 1136-2 instantiated within MEC host 836-2 via the MEC LPP APIs 1151-1, 1151-2 as well as the Mp3 interface between the MEC host 836-1 and MEC host 836-2.

In some aspects, each of the MEC hosts 836 can be owned/managed by a different mobile services operator (while it can be operated directly by a MEC vendor or a third party). In some aspects, MEC apps 1136 instantiated on MEC host 836-1 and MEC host 836-2 can be used to provide LPP-related services, and can be operated by the mobile services operator, by a MEC vendor, or by a third party (e.g., OEM, or OEM supplier, or system integrator).

In some aspects, the MEC LPP APIs 1151 can be provided as a general middleware service, providing information gathered from UEs 1120 and other network elements (e.g., NANs 831, 832, and/or 833 of FIG. 8), and exposed as a service within the MEC hosts 836 (e.g., as a RESTful API) for the higher layers (e.g., the MEC apps 1136 instantiated within the MEC hosts 836). In some aspects, the MEC LPP APIs 1151 can be configured to gather information and data from various sensors. In this regard, the deployment of the MEC LPP APIs 1151 is ensuring continuity of the service across different mobile networks, for the same OEM (e.g., UE manufacturer) and/or mobile network operator (MNO).

In some embodiments, MEC apps 1136 can be configured to host and/or store LPP-related data and/or configuration parameters, such as collected measurement data, UE operational/performance data (e.g., application usage statistics, processor and/or memory utilization, and/or other like data such as those disused herein), UE capability information, and/or the like. The availability of this LPP-related data and/or configuration parameters also in absence of network coverage is ensured by the usage of an Mp3 interface (or another type of interface) between the MEC hosts 836.

In some embodiments, MEC apps 1136 can be configured to host one or more prediction layers as discussed herein, such as a data collection layer (or UE feedback layer), cell load layer (or cell model layer), an intra-cell layer, a cell mobility layer (or cell transition layer), a geoposition layer (or geographical position layer), a network topology layer, and/or other like prediction layers. The various prediction layers may provide respective predicted performance metrics in absence of network coverage by the usage of an Mp3 interface (or another type of interface) between the MEC hosts 836.

In the aforementioned embodiments, MEC app 1136-1 can be configured to connect to MEC host 836-2 (through MEC LPP API 1151-2 in MEC host 2), and MEC app 1136-2 can be configured to connect to MEC host 836-1 (through V2X MEC API 1151-1 in MEC host 1). In case of a multi-operator architecture, multiple MEC hosts 836 can be configured to communicate with each other via the MEC LPP APIs 1151 and synchronize in order to transfer the relevant LPP-related data (e.g., real-time data and/or spatio-historical data) and/or predicted performance metrics so that they can be available across the multi-operator architecture in absence of network coverage or during network infrastructure/equipment failures. In this way, the LPP service (e.g., LPPS 1300 of FIG. 13) can have access to the LPP-related data and/or the predicted performance metrics even when the UEs 1120 are not in network coverage or when failures or overload situations occur at different parts of the network.

In some embodiments, one or more MEC apps 1136 within a MEC host 836 can be instantiated to perform functionalities of an LPP engine (e.g., LPP layer 1302 of FIG. 13), which may provide the LPP-IS 1152. Additionally, MEC hosts 836 can use MEC LPP APIs 1151 to perform various LPP-IS 1152 functions. In particular, these one or more MEC apps 1136 can be instantiated within a MEC host 836 to perform various aspects of the LPP embodiments discussed herein, as well as the following functionalities: obtaining LPP subscription information for UE 1120; determining whetherthe UE 1120 is authorized to obtain LPP notifications, which may or may not be in response to a request for LPP services; communicating LPP-related data and/or configuration parameters; and so forth.

### Link Performance Prediction Embodiments

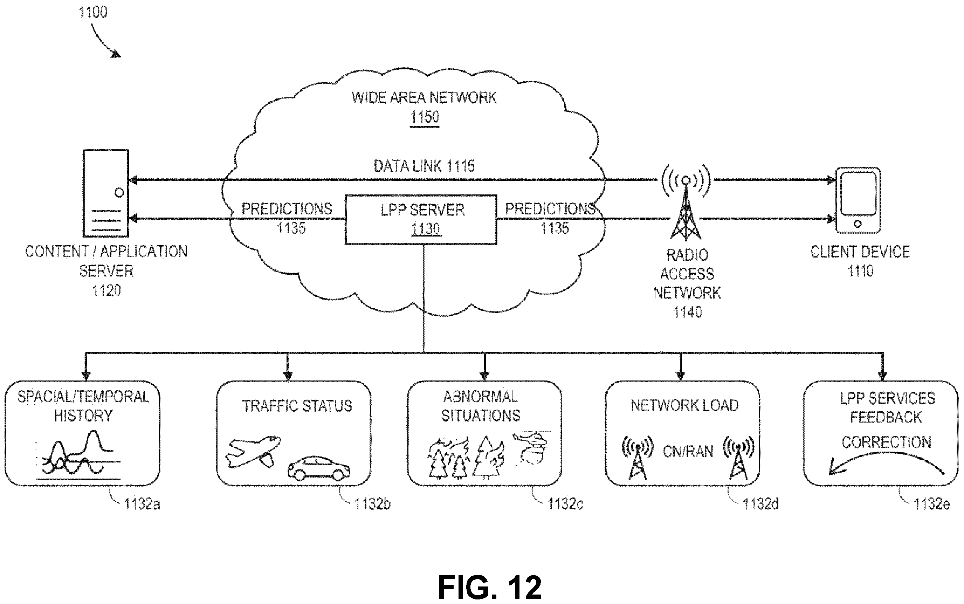

**FIG. 12** illustrates an example embodiment of a system 1200 that leverages link performance prediction (LPP) technology. In the illustrated embodiment, system 1200 includes a client device 1210, a content or application provider server 1220, a link performance prediction (LPP) server 1230, a radio access network (RAN) 1240, and a wide area network 1250 (WAN). The client device 1210 and the content provider server 1220 are connected to each other via a data link 1215 established over networks 1240 and 1250, and data (e.g., media or video content) is streamed from the content provider server 1220 to the client device 1210 over the data link 1215. The LPP server 1230 generates predictions 1235 regarding the performance of the data link 1215 established with the client device 1210, and those predictions 1235 are then provided to the client device 1210 and/or the content provider server 1220 in order to optimize performance by proactively adapting to variations in link quality before they occur, as described further below.

In various embodiments, for example, the content/application server 1220 may include any type and/or combination of computing components and/or infrastructure used to provide a service over a network (e.g., content delivery, application services, etc.).

For example, a content provider server 1220 may stream media content to the client device 1210 over the data link 1215 established between them, such as video (e.g., television shows, movies, sports, online video content, video games), images, audio, and so forth. For example, the content provider may provide a media streaming service, such as a video streaming service (e.g., YouTube, Netflix), a video game streaming service, an audio or radio streaming service, and so forth.

Moreover, the client device 1210 may include any type and/or combination of computing device and/or input/output (I/O) device, such as desktops, laptops, tablets, mobile phones, loT devices, audio/video (A/V) devices, display devices (e.g., monitors, televisions, smart displays and/or interactive whiteboards, VR/AR glasses or headsets), speakers, and so forth.

In the illustrated embodiment, the data link 1215 between the client device 1210 and the content provider server 1220 is established over a radio access network 1240 and a wide area network 1250. For example, the radio access network 1240 may include a cellular network (e.g., a 2G, 3G, 4G, or 5G cellular network), and the wide area network 1250 may include the Internet. The client device 1210 may be wirelessly connected to a base station of the cellular network 1240, which may then be connected to the Internet 1250, and the content provider server 1220 may also be connected to the Internet 1250. In other embodiments, however, the data link 1215 between the client device 1210 and the content provider server 1220 may be established over any type and/or number of communication networks.

The LPP server 1230 generates predictions 1235 regarding the performance of the data link 1215 established with the client device 1210, and those predictions 1235 are then provided to the client device 1210 and/or the content provider server 1220 in order to optimize the performance of the service. For example, based on the link performance predictions 1235, the behavior of the underlying service may be proactively tuned or adjusted in order to adapt to variations in link quality before they occur.

In some embodiments, for example, the LPP server 1230 may use artificial intelligence to predict the network performance that applications and services will experience over time. In particular, predictions regarding network performance may be generated by processing a comprehensive collection of historical and real-time data feeds using advanced machine learning techniques.

For example, the historical data 1232a may include network performance data collected across a wide range of mobile devices, such as the network performance experienced in different locations at specific times on specific days and under specific conditions. The real-time data may include a collection of data associated with real-time conditions, such as live traffic status 1232b, abnormal events 1232c, network performance 1232d (e.g., current network load, radio conditions), client device information (e.g., location, motion, and/or routing information for client or end-user devices), and so forth. The LPP server 1230 may also receive feedback 1232e from client devices regarding link performance predictions provided by the server (e.g., indicating whether and/or to what extent the predictions were correct), which the LPP server 1230 may use to tune or optimize future predictions.

Based on the various types of data 1232a-e provided as input (e.g., historical, real-time, and feedback data), the LPP server 1230 can predict future link performance for client devices with a high level of confidence and accuracy. For example, the LPP server 1230 may generate a prediction 1235 regarding the future performance of a network link 1215 to a particular client device 1210. In some embodiments, a prediction 1235 generated by the LPP server 1230 may include or indicate a time (e.g., time at which the predicted behavior will occur), a type of prediction (e.g., bandwidth or latency prediction), a predicted value (e.g., predicted amount of bandwidth or latency), an expected deviation (e.g., expected amount of deviation from the predicted bandwidth or latency value), and/or a probability (e.g., the likelihood or confidence of the prediction being correct), among other types of information.

Moreover, in some embodiments, services can subscribe to predictions that have direct relevance to their performance (e.g., applications running on the client device 1210 and/or content provider server 1220), and the LPP server 1230 will then send predictions to those services to inform them of any significant changes in link performance over time. In some embodiments, the LPP server 1230 may provide information regarding current link performance as well as forecasted link performance.

Link performance prediction (LPP) technology is described in further detail in the following patent application, the content of which is hereby expressly incorporated by reference: U.S. Patent Application Serial No. 15/857,123, filed on December 28, 2017, entitled "RADIO LINK QUALITY PREDICTION."

In the illustrated embodiment, for example, the client device 1210 and/or the content provider server 1220 may subscribe to predictions 1235 from the LPP server 1230 regarding the performance of the link 1215 to the client device 1210. The LPP server 1230 then provides relevant predictions 1235 to the client device 1210 and/or the content provider server 1220, which may use the predictions 1235 to guide their behavior and optimize the performance and user experience. For example, based on the link performance predictions 1235, the behavior of the underlying service may be proactively tuned or adjusted in order to adapt to variations in link quality before they occur.

As an example, based on predictions regarding poor coverage areas that will likely be encountered en-route, media streaming parameters relating to content buffering, resolution, and/or compression may be adjusted to ensure that media playback continues without stalling even while the client device 1210 has little or no coverage. Content providers and mobile operators can also leverage link performance predictions to perform optimizations relating to the content distribution network (CDN). For example, based on link performance predictions, required content can be pre-fetched to a mobile edge computing (MEC) node closer to the client device's anticipated point of consumption.

Referring now to **FIG. 13****,** wherein example logical components and interaction points of an LPP service (LPPS) 1300, in accordance with various embodiments, is illustrated. As shown, for the illustrated embodiments, the LPPS 1300 includes an LPP layer 1302 and a plurality of prediction layers 1325-1 to 1325-N (collectively referred to as "prediction layers 1325" or the like). In the illustrated embodiment, the components of the LPPS 1300 interact with one or more elements in the edge computing environment 800 discussed previously with respect to FIG. 8.

The LPPS 1300 predicts how network performance (e.g., performance of environment 800) changes over time with a relatively high degree of confidence. For example, the LPPS 1300 is capable of predicting link performance in time and space, which allows applications, UEs 811, 821, and/or network infrastructure able to shift delay tolerant traffic in time and/or space in order to smooth out peak demand and improve overall network resource utilization. The ability to forecast and communicate link performance predictions can also help applications, UEs 811, 821, and/or network infrastructure modify their behavior to account for congested or otherwise sub-optimal network conditions.

In embodiments, the LPPS 1300 uses spatial and temporal (spatio-temporal) historical data and/or real-time data to predict link quality. The spatio-temporal historical data is data related to the performance experienced over multiple locations (e.g., space) and at multiple time instances (e.g., temporal). The spatio-temporal historical data provides ability to locate performance at specific location and time. Real-time data includes data/information such as live traffic status (e.g., vehicles on a given roadway or the like), abnormal events (e.g., natural disasters and the like), network load (e.g., resource utilization of NANs 831, 832, 833, edge compute nodes 836, and the like), radio conditions (e.g., amount of occupied radio resources, amount of signaling taking place over the radio links 803, 805, 807, interference measurements, etc.), UE 811, 821 location (e.g., geographic position within a given cell), UE 811, 821 motion/mobility (e.g., speed and direction of travel within a given cell or between cells), and/or routing information (e.g., number and types of hops between source and destination nodes or the like), if known. The LPPS 1300 uses the historical and real-time data collected across a wide range of mobile devices (e.g., UEs 811, 821) and network elements (e.g., NANs 831, 832, and 833, edge compute nodes 836, core network elements in CN 842, etc.), allowing the LPPS 1300 to build a view of the network performance that users and services will likely experience over time. Consumers (e.g., UEs 811, 821 and NANs 831, 832, 833, application/service providers, etc.) can subscribe to predictions that have direct relevance to network performance and/or their service performance. The LPPS 1300 responds to the consumer indicating any significant changes in performance over time.

Each of the prediction layers 1325 provide functionality independent of functionality provided by other layers 1325, as well as different functionality of the LPP layer 1302. For example, the LPP layer 1302 may implement a data fusion engine (also referred to as an "LPP engine") (discussed in more detail infra), the prediction layer 1325-1 may implement one or more first ML models/algorithms to generate a first type of predicted performance metrics, the prediction layer 1325-2 may implement one or more second ML models/algorithms to generate a second type of predicted performance metrics, and so forth to the prediction layer 1325-*N*, which may implement one or more *N*th ML models/algorithms to generate an *N*th type of predicted performance metrics (where N is a number).

In various embodiments, each prediction layer 1325 runs one or more ML models to determine respective predicted performance metrics, and provides their respective predicted performance metrics to the LPP layer 1302. Machine learning algorithms build mathematical models, referred to as a "machine learning model" or simply "model", based on sample data, known as "training data", in order to make predictions or decisions without being explicitly programmed to perform such tasks. Generally, an MLalgorithm is a computer program that learns from experience with respect to some task and/or some performance measure, and an ML model is an object or data structure created after an ML algorithm is trained with one or more training datasets. After training, the ML model may be used to make predictions on new datasets. Although the term "ML algorithm" refers to different concepts than the term "ML model," these terms as discussed herein may be used interchangeably for the purposes of the present disclosure. In embodiments, specific ML algorithms, or combinations of ML algorithms, are used at individual prediction layers 1325 to determine respective predicted performance metrics, and one or more layers 1325 may use different ML algorithms (or combinations of ML algorithms) than those used by other prediction layers 1325.

In some embodiments, at least one of the layers 1325 is responsible for collecting data from one or more UEs 811/821 and/or NANs 831-833 in environment 800, which may be processed by that layer 1325 and provided to other layers 1325 for determining their respective predicted performance metrics. In such embodiments, the layers 1325 that are responsible for data collection may obtain data from applications, components, or the like at the data sources (e.g., the UEs 811, 821, NANs 831-833, etc.) that collect data from system software (e.g., operating systems, device drivers, firmware, utility applications, etc.) and/or various user/client applications operating on those devices via a suitable API, middleware, software glue, proxy applications, trusted applications, etc., and provide the collected data to the data collection layer(s) 1325. In some embodiments, these applications, components, etc., may be custom plugins configured to interact with, and collected data/metrics from the system software, other applications, etc.

The LPP layer 1302 obtains the predicted performance metrics from the prediction layers 1325 and fuses the predicted performance metrics together to obtain an LPP for an LPPS consumer (not shown by FIG. 13). The LPP layer 1302 may include any suitable technology to fuse the predicted performance metrics provided by the prediction layers 1325. Data fusion is a process of integrating and/or combining data collected from multiple sources at different spatial and temporal scales in order to make inferences about that data. In some embodiments, these "inferences" may be the link performance predictions, while in other embodiments, the LPP layer 1302 implements suitable ML model(s)/algorithm(s) to generate the link performance predictions based on the inferences.

For example, the LPP layer 1302 may be trained during a training phase using predetermined data inputs to establish model parameters (e.g., initial state distribution) and to associate at least some of the states with inferences having meaningful significance. The established model parameters are stored in memory (e.g., memory circuitry 920 of FIG. 9 or the like). Then during an operational phase, the LPP layer 1302 performs data fusion on real (live) data from the prediction layers 1325, and in order to increase the accuracy of the model, continually modifies the established model parameters as necessary based on a comparison between a prediction and what is actually received.

In various embodiments, the LPP layer 1302 (or the LPP engine) is configured to perform Multi-Cell Multi-Layer (MCML) data fusion techniques. In such embodiments, the LPP layer 1302 takes data from one or more prediction layers 1325 and combines that data with data from one or more other prediction layers 1325 to derive the link performance prediction for corresponding LPPS consumers. In one MCML example, the LPP layer 1302 may take an output from a cell transition prediction layer, which is in the form of expected cells a UE 811, 821 will visit, and pairs that output with outputs provided by a cell load prediction layer to predict a performance of individual cells based on mobility of the UE 811, 821. In a second MCML example, network data and/or parameters (e.g., a mobile network associated with CN 842 of FIG. 8), data from traffic and/or mobility patterns, subscriber information, and data from GPS are fed in to different prediction layers 1325 for training and prediction of performance metrics from those prediction layers 1325 are fused to predict final network performance at a particular time/date. As mentioned previously, each prediction layer 1325 can be trained with data from different sources (network, traffic, GPS, subscriber information).

In various embodiments, MCML data fusion accounts for different operational states, operational contexts, and/or mobility states. For example, as discussed in more detail infra, a cell transition prediction layer may be used to predict the cells that a UE 811, 821 will visit at particulartime instances based on a current cell in which the UE 811, 821 is camping, a previous cell visited by the UE811, 821, and travel direction and velocity measurements. When the UE 811, 821 is stationary (not moving), the link performance prediction is based on a current cell's behavior, and the LPP layer 1302 fuses the current cell's characteristics and cell load, including real-time and predicted future behavior(s) and/or load(s), to obtain the LPP. When the UE 811, 821 is moving in a relatively dense area (e.g., where cell sizes are relatively small, such as in a city), and the predicted cell behaviors and predicted cell load(s) of each cell predicted to be visited by the UE 811, 821 is combined (fused) together for the LPP. When the UE 811, 821 is moving in a relatively sparse area (e.g., where cell sizes are relatively large, such as in a rural area), the link performance prediction is based on intra-cell behavior(s) (e.g., predicted signal strength, signal quality, power changes, etc., within individual cells) for each cell predicted to be visted by the UE 811, 821, and the intra-cell behavior(s) of each predicted cell is combined (fused) with respective predicted cell behaviors and respective predicted cell load(s). When the UE 811, 821 is moving using a navigation application, the cell transition prediction layer predicts the cell transitions using a cell movement/mobility pattern determined from obtained route/journey data, navigation settings, and/or other information from the navigation application, and each cell predicted to be visted by the UE 811, 821 is combined (fused) with respective predicted cell behaviors and respective predicted cell load(s). In these embodiments, if network topology information and/or backhaul link performance predictions are available, then the predicted cell behavior(s) and/or load(s) may be combined (fused) with these additional network topology predictions and/or backhaul link predictions.

In some embodiments, MCML data fusion involves the LPP layer 1302 (or LPP engine) requesting, from the cell transition prediction layer for a UE 811, 821, a prediction of various cell that the UE 811, 821 may visit given a current cell. These predictions may be based on spatio-temporal history data associated with the UE 811, 821 (e.g., mobility data) and/or the current cell. The cell transition prediction layer returns data including the expected future cells the UE 811, 821 may visit, the expected probability of visiting each cell in a given region, a predicted time interval (or amount of time) for the UE 811, 821 to travel to each cell, and an predicted amount time that the UE 811, 821 will remain in each cell. Then, the LPP layer 1302 requests predicted cell/link characteristics and/or behaviors for each cell indicated by the cell transition prediction layer at the time interval the UE 811, 821 is expected to enter each cell and the amount of time the UE 811, 821 is predicted to be in each cell. The LPP layer 1302 combines (fuses) the returned predicted cell/link characteristics and/or behaviors for each cell to determine a predicted link performance (e.g., the LPP) given the current and future cell load as well as expected deviation(s). The LPP layer 1302 now knows the probability that the UE 811, 821 will enter or travel through a particular cell, the predicted amount of time the UE 811, 821 will take to enter the particular cell, the amount of predicted time to be spent in the particular cell, as well as the LPP for each cell at each time instance. The LPP layer 1302 then looks at a time window from a current time to some future time instance (e.g. 30 seconds, 1 minutes, 2 minutes, etc., from the current time depending on how steady the link is), and breaks this time window into time intervals (e.g. 1 second). The time interval for the UE 811, 821 to reach respective cells is added to the time window with respective characteristics/loads, and the probability that the UE 811, 821 will visit the respective cells. Then, the LPP layer 1302 runs through the time window, and filters out probabilities that are deemed to be too low for consideration. As an example, changes detected to be larger than a certain level (e.g., 5%, 10% deviation, etc.) may be filtered out. The determined LPP for each remaining portions of the time window may be sent to the UE 811, 821 or other LPPS consumer, taking into account the amount of delay and predicted location of the UE 811, 821 (or other LPPS consumer).

Additionally or alternatively, one or more other data fusion techniques may be used to combine orfuse the predicted performance metrics. Examples of these known data fusion techniques may include, but are not limited to, data association techniques (e.g., Nearest Neighbors, K-Means Probabilistic Data Association (PDA) and/or PDA Filter (PDAF), Principle Component Analysis (PCA), Joint Probabilistic Data Association (JPDA), Distributed JPDA (JPDA-D), Multiple Hypothesis Test (MHT), Distributed MHT (MHT-D), graphical modeling, and/or the like), state estimation techniques (e.g., maximum likelihood, maximum posterior, Kalman filter, distributed Kalman filter, particle filter, distributed particle filter, covariance intersection, covariance union, Optimal Theory, Regularization, Uncertainty Ellipsoids, and/or the like), decision fusion techniques (e.g., Bayesian methods (e.g., evidence theory, robust statistics, recursive operators, etc.), Dempster-Shafer Inference, Abductive Reasoning, Semantic methods, and/or the like), intelligent aggregation techniques (e.g., one or more ML techniques such as neural networks (including any neural network discussed herein), genetic algorithms, fuzzy logic, etc.), and/or any other suitable data fusion techniques.

The link performance predictions are used to generate the LPP notifications that the LPPS 1300 provides to LPPS consumers such as applications, UEs 811/821, and/or NANs 831-833, which allow the LPPS consumers to tailor their operations accordingly. The LPP notifications, in one embodiment, are conceptually similar to traffic notifications provided by a navigation application or vehicular driving applications. While the traffic notifications provide up-to-date information about current and forecasted traffic conditions, the LPP notifications provide information about current and forecasted link quality or performance.

In some embodiments, the LPPS 1300 may provide intelligent network management services to network operators. For example, network operators may use the LPP notifications to autonomously manage transmitter power, antenna direction, angle, and tilt; and other parameters of the NANs 831, 832, 833. Additionally or alternatively, the link performance predictions in the LPP notifications may be fed into for Self-Organizing Network (SON) functions in LTE or 5G/NR implementations. In some embodiments, the LPPS 1300 may be used for network degradation control, which entails identifying instances of poor performance and troubleshooting. (e.g., identifying when equipment should be repaired or replaced).

In some embodiments, the LPPS 1300 may be used for efficient small cell backhaul planning. For example, the link performance predictions in the LPP notifications may be used to identify locations to deploy small cells (e.g., RAN nodes 832, AP 833, or the like) to enhance coverage and/or capacity while taking into account the associated backhaul and power requirements for such deployments. Additionally or alternatively, in some embodiments, the LPPS 1300 may be used for backhaul link resource allocation. In these embodiments, the link performance predictions may indicate the load or usage of different backhaul links at different time periods on different days, and network operators can reduce operating costs by powering down backhaul links which are expected to require low usage at particular times before powering them back up at predicted peak usage times.

By providing the LPP notifications to users, network operators, and service providers, network operators and service providers may tailor their applications/services to utilize network resources in a more efficient manner than using conventional technologies. As an example, individual NANs 831, 832, 833 may schedule background traffic (e.g., paging, control signaling, heartbeat signaling, and/or other like traffic/signaling that takes place even when there is no user or application interaction with a UE 811, 821) for transmission during peaks in network performance. In this example, the peaks in network performance may be based on a predicted time and/or mobility when a UE 811, 821 will be proximate to a serving NAN 831, 832, 833 or a predicted period during which the network should have sufficient capacity headroom.

The LPP notifications may also be used by network operators and service providers to improve Quality of Service (QoS) and/or Quality of Experience (QoE), which are traditionally associated with network performance metrics. Static network performance metrics only provide a partial, snapshot view of the QoS and/or QoE. Using the LPP notifications, network operators and service providers can adjust traffic routes, mode of operation, and/or other parameters to optimize QoS and QoE since they will have advance warning regarding any significant changes in expected network performance.

The LPPS 1300 itself may be an abstraction layer between service providers (e.g., operators/owners of server(s) 850 of FIG. 8) and the underlying mobile access network (e.g., an owner/operator of CN 842 and/or some or all of the NANs 831, 832) giving an abstracted view of the access network link quality, which allows service providers and/or application developers to make proactive decisions to improve QoS/QoE.

In a first example, a service provider is a content streaming service and/or platform that uses CDN edge compute nodes 830 to stream content to UEs 821. In this example, the service provider uses the LPP notifications to adapt streaming buffers operated by the CDN edge compute nodes 830 to cover for poor coverage areas (e.g., coverage holes) that will likely be encountered by travelling UEs 821. Using the LPP notifications from the LPPS 1300, the CDN edge compute nodes 830 may pre-fetch and stream required content (e.g., for storage in a local buffer at the UEs 821) prior to a UE 821 entering or travelling through a poor coverage area (or coverage hole). Additionally or alternatively, content may be pre-fetched an loaded to CDN edge compute nodes 830 along a predicted travel path/route of a UE 821 (e.g., closer to the UE's 821 anticipated point of consumption), and the amount of content streamed to the UE 821 at different points along the predicted path/route may be based on predicted network performance at those different points.

In a second example, a service provider provides over-the-top (OTT) real-time services including, for example, television, messaging (e.g., instant messaging, online chats, etc.), and voice calling. In this example, the service provider uses the LPP notifications to provide advance warnings to users indicating when an OTT connection will likely be lost, and how long the connection may take to be reconnected.

In a third example, a service provider provides interactive map and navigation services, which provides to UEs 821a turn-by-turn directions for a selected route. In this example, the service provider may use the LPP notifications to optimize the travel routes based on physical traffic (e.g., volume of vehicles travelling in a certain road or highway) and/or predicted network connectivity, which may be useful for semi-autonomous or fully-autonomous vehicle systems. Furthermore, these optimizations may be useful in industrial contexts, such as in "smart factories" or manufacturing plants, where mobile loT devices 811 can use LPP notifications for route optimization purposes.

In a fourth example, a mobile network operator (e.g., an owner/operator of CN 842 and/or some or all of the NANs 831, 832) uses to guarantee a certain level of network performance (e.g., Service Level Guarantees) for enterprise-level customers. In this example, the mobile network operator may use the LPP notifications and/or the LPPS 1300 to quantify their network performance at varying levels of granularities showing their customers that they can provide a consistent high-quality QoS/QoE.

In some embodiments, the layers 1325/1302 may communicate with one another through one or more connectors 1306. The connectors 1306 may be software connectors that connect the various layers 1302/1325 of the LPPS 1300 to one another so each layer 1302/1325 does not need to know the underlying details of other layers 1302/1325. The connectors 1306 facilitate message passing/routing between individual layers 1302/1325, which may include encapsulating data from one layer 1302/1325 for consumption by an intended destination layer 1302/1325 or components thereof. As an example, the connectors 1306 may be an exogenous connector, which coordinates and controls a totality of interactions/communications of the layers 1302/1325 where the connectors 1306 perform the method or procedure calls on behalf of a requesting/calling layer 1302/1325. Additionally or alternatively, the connectors 1306 may be middleware or "software glue," which connects two or more separate components by translating or adapting instructions/commands obtained from one layer 1302/1325 into instructions/commands that can be understood by another layer 1302/1325. In these ways, individual layers 1325/1302 may be replaced with new/different layers 1325/1302 without requiring each remaining layer 1325/1302 to be updated to communicate with the new/different layers 1325/1302. Therefore, the LPPS 1300 may provide relatively easy abstraction since each layer 1325/1302 is loosely coupled from one another. Additionally, in some embodiments (e.g., where one or more of the layers 1325 are operated by different edge servers 830), the connectors 1306 may operate on top of one or more communication protocols, such as those discussed herein.

In some embodiments, the LPPS 1300 may be implemented as a centralized service wherein the various prediction layers 1325 and/or the LPP layer 1302 are located in one or more servers in one or more server farms or data centers (e.g., individual servers 850 of FIG. 8). In other embodiments, the LPPS 1300 may be implemented as an edge computing service wherein the various prediction layers 1325 and/or the LPP layer 1302 are located in one or more edge servers 836 deployed at the edge of a network (e.g., CN 842, cloud 844, or the like). In one example implementation, the plurality of prediction layers 1325 and the LPP layer 1302 are operated by the cloud 844 of FIG. 8, such as by individual cloud compute nodes in the cloud 844. In another example implementation, each of the prediction layers 1325 are operated by individual edge compute nodes 836, and the LPP layer 1302 is operated by the cloud 844. In another example implementation, each of the prediction layers 1325 are distributed across multiple edge compute nodes 836. In another example implementation, each edge compute node 836 operates a respective LPPS 1300. In any of the aforementioned implementations, each prediction layer 1325 and the LPP layer 1302 may be operated in respective VMs and/or isolated user-space instances (e.g., docker^{®} containers, Kubernetes^{™} provided by the Cloud Native Computing Foundation^{™}, Linux Containers (LXC), etc.) in one or more cloud servers and/or edge compute nodes 836. Other implementations are possible in other embodiments.

### Software Distribution

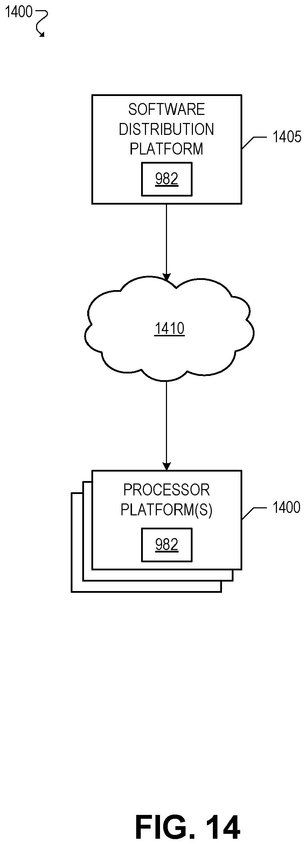

**FIG. 14** illustrates an example software distribution platform 1405 to distribute software, such as the example computer readable instructions 1082 of FIG. 10, to one or more devices, such as example processor platform(s) 1400 and/or example connected edge devices described throughout this disclosure. The example software distribution platform 1405 may be implemented by any computer server, data facility, cloud service, etc., capable of storing and transmitting software to other computing devices (e.g., third parties, example connected edge devices described throughout this disclosure). Example connected edge devices may be customers, clients, managing devices (e.g., servers), third parties (e.g., customers of an entity owning and/or operating the software distribution platform 1405). Example connected edge devices may operate in commercial and/or home automation environments. In some examples, a third party is a developer, a seller, and/or a licensor of software such as the example computer readable instructions 1082 of FIG. 10. The third parties may be consumers, users, retailers, OEMs, etc. that purchase and/or license the software for use and/or re-sale and/or sub-licensing. In some examples, distributed software causes display of one or more user interfaces (Uls) and/or graphical user interfaces (GUIs) to identify the one or more devices (e.g., connected edge devices) geographically and/or logically separated from each other (e.g., physically separated loT devices chartered with the responsibility of water distribution control (e.g., pumps), electricity distribution control (e.g., relays), etc.).

In the illustrated example of FIG. 14, the software distribution platform 1405 includes one or more servers and one or more storage devices. The storage devices store the computer readable instructions 1082, which may implement the video processing functionality described throughout this disclosure. The one or more servers of the example software distribution platform 1405 are in communication with a network 1410, which may correspond to any one or more of the Internet and/or any of the example networks described throughout this disclosure. In some examples, the one or more servers are responsive to requests to transmit the software to a requesting party as part of a commercial transaction. Payment for the delivery, sale and/or license of the software may be handled by the one or more servers of the software distribution platform and/or via a third-party payment entity. The servers enable purchasers and/or licensors to download the computer readable instructions 1082 from the software distribution platform 1405. For example, software comprising the computer readable instructions 1082 may be downloaded to the example processor platform(s) 1400 (e.g., example connected edge devices), which is/are to execute the computer readable instructions 1082 to implement the functionality described throughout this disclosure. In some examples, one or more servers of the software distribution platform 1405 are communicatively connected to one or more security domains and/or security devices through which requests and transmissions of the example computer readable instructions 1082 must pass. In some examples, one or more servers of the software distribution platform 1405 periodically offer, transmit, and/or force updates to the software (e.g., the example computer readable instructions 1082 of FIG. 10) to ensure improvements, patches, updates, etc. are distributed and applied to the software at the end user devices.

### Examples

Illustrative examples of the technologies described throughout this disclosure are provided below. Embodiments of these technologies may include any one or more, and any combination of, the examples described below. In some embodiments, at least one of the systems or components set forth in one or more of the preceding figures may be configured to perform one or more operations, techniques, processes, and/or methods as set forth in the following examples.
Example 1 includes at least one non-transitory machine-readable storage medium having instructions stored thereon, wherein the instructions, when executed on processing circuitry, cause the processing circuitry to: receive, via interface circuitry, a link performance elevation (LPE) request, wherein the LPE request is a request to temporarily boost performance of a network link between an endpoint and a service provider for a finite duration; activate a temporary performance boost for the network link at a start of the finite duration; and deactivate the temporary performance boost for the network link at an end of the finite duration.
Example 2 includes the storage medium of Example 1, wherein the temporary performance boost includes a temporary increase in one or more quality of service (QoS) parameters for the network link.
Example 3 includes the storage medium of Example 2, wherein the one or more QoS parameters include: bandwidth; latency; consistency; priority; or error rate.
Example 4 includes the storage medium of any of Examples 2-3, wherein: the instructions that cause the processing circuitry to activate the temporary performance boost for the network link at the start of the finite duration further cause the processing circuitry to: adjust a network configuration to activate the temporary increase in the one or more QoS parameters for the network link; and the instructions that cause the processing circuitry to deactivate the temporary performance boost for the network link at the end of the finite duration further cause the processing circuitry to: adjust the network configuration to deactivate the temporary increase in the one or more QoS parameters for the network link.
Example 5 includes the storage medium of Example 4, wherein the network configuration includes one or more network configuration parameters, wherein the one or more network configuration parameters include: a number of hops for traffic on the network link; a traffic classification for the traffic on the network link; a scheduling priority for the traffic on the network link; a guaranteed flow bit rate (GFBR) for the traffic on the network link; or a delay critical GFBR for the traffic on the network link.
Example 6 includes the storage medium of any of Examples 4-5, wherein the instructions that cause the processing circuitry to adjust the network configuration to activate the temporary increase in the one or more QoS parameters for the network link further cause the processing circuitry to: adjust the network configuration based on a link performance of the network link, wherein the link performance includes: an actual link performance; or a predicted link performance.
Example 7 includes the storage medium of any of Examples 1-6, wherein the finite duration includes: a temporal duration; a spatial duration; or a data consumption limit.
Example 8 includes the storage medium of Example 7, wherein the temporal duration includes: a time period; or a session duration.
Example 9 includes the storage medium of any of Examples 7-8, wherein the spatial duration is based on a location of the endpoint.
Example 10 includes the storage medium of Example 9, wherein the spatial duration includes a period in which the endpoint is located within: a particular geographical area; or a coverage area of one or more wireless base stations.
Example 11 includes the storage medium of any of Examples 1-10, wherein the LPE request is received from the endpoint or the service provider.
Example 12 includes the storage medium of any of Examples 1-11, wherein the instructions further cause the processing circuitry to: determine a cost associated with the LPE request; and charge the cost to the endpoint or the service provider.
Example 13 includes the storage medium of any of Examples 1-12, wherein the network link includes: a wireless link; or a wired link.
Example 14 includes the storage medium of any of Examples 1-13, wherein: the endpoint includes an end user, an end user device, a user device, an endpoint device, a user equipment (UE) device, a mobile device, a mobile phone, a mobile station, a tablet, a wearable device, a laptop, a personal computer, a camera, a server, a data center, a roadside unit, equipment, or infrastructure; and the service provider includes a network service provider, an Internet service provider, a cellular service provider, a content delivery network, a media streaming service, a video streaming service, an online gaming service, a video call service, a voice call service, a web service, an edge service, a cloud service, an edge server, a cloud server, or a data center.
Example 15 includes a method, comprising: receiving, via interface circuitry, a request to boost performance of a network link between an endpoint and a service provider for a finite duration; activating a temporary performance boost for the network link at a start of the finite duration; and deactivating the temporary performance boost for the network link at an end of the finite duration.
Example 16 includes the method of Example 15, wherein the temporary performance boost includes a temporary increase in one or more quality of service (QoS) parameters for the network link, wherein the one or more QoS parameters include: bandwidth; latency; consistency; priority; or error rate.
Example 17 includes the method of any of Examples 15-16, wherein: activating the temporary performance boost for the network link at the start of the finite duration comprises: adjusting one or more network configuration parameters to activate the temporary performance boost, wherein the one or more network configuration parameters include: a number of hops for traffic on the network link; a traffic classification for the traffic on the network link; a scheduling priority for the traffic on the network link; a guaranteed flow bit rate (GFBR) for the traffic on the network link; or a delay critical GFBR for the traffic on the network link; and deactivating the temporary performance boost for the network link at the end of the finite duration comprises: adjusting the one or more network configuration parameters to deactivate the temporary performance boost.
Example 18 includes the method of any of Examples 15-17, wherein the finite duration is based on: time; location; or data consumption.
Example 19 includes the method of any of Examples 15-18, further comprising: determining a cost associated with the request; and charging the cost to the endpoint or the service provider.
Example 20 includes a computing device, comprising: interface circuitry; and processing circuitry to: receive, via the interface circuitry, a link performance elevation (LPE) request, wherein the LPE request is a request to temporarily boost performance of a network link between an endpoint and a service provider for a finite duration; activate a temporary performance boost for the network link at a start of the finite duration; and deactivate the temporary performance boost for the network link at an end of the finite duration.
Example 21 includes the computing device of Example 20, wherein the temporary performance boost includes a temporary increase in one or more quality of service (QoS) parameters for the network link, wherein the one or more QoS parameters include: bandwidth; latency; consistency; priority; or error rate.
Example 22 includes the computing device of any of Examples 20-21, wherein: the processing circuitry to activate the temporary performance boost for the network link at the start of the finite duration is to: adjust one or more network configuration parameters to activate the temporary performance boost, wherein the one or more network configuration parameters include: a number of hops for traffic on the network link; a traffic classification for the traffic on the network link; a scheduling priority for the traffic on the network link; a guaranteed flow bit rate (GFBR) for the traffic on the network link; or a delay critical GFBR for the traffic on the network link; and the processing circuitry to deactivate the temporary performance boost for the network link at the end of the finite duration is to: adjust the one or more network configuration parameters to deactivate the temporary performance boost.
Example 23 includes the computing device of any of Examples 20-22, wherein the finite duration is based on: time; location; or data consumption.
Example 24 includes a system, comprising: one or more base stations associated with a network; and one or more network devices to: receive a link performance elevation (LPE) request, wherein the LPE request is a request to temporarily boost performance of a network link within the network for a finite duration, wherein the network link is between an endpoint and a service provider, and wherein the endpoint is connected to the network via one of the one or more base stations; activate a temporary performance boost for the network link at a start of the finite duration; and deactivate the temporary performance boost for the network link at an end of the finite duration.
Example 25 includes the system of Example 24, wherein: the network includes a cellular network; the one or more base stations include one or more cellular base stations; and the one or more network devices include a link performance elevation (LPE) server.
Example 26 includes a method, comprising: receiving, via interface circuitry, a link performance elevation (LPE) request, wherein the LPE request is a request to temporarily boost performance of a network link between an endpoint and a service provider for a finite duration; activating a temporary performance boost for the network link at a start of the finite duration; and deactivating the temporary performance boost for the network link at an end of the finite duration.
Example 27 includes the method of Example 26, wherein the temporary performance boost includes a temporary increase in one or more quality of service (QoS) parameters for the network link.
Example 28 includes the method of Example 27, wherein the one or more QoS parameters include: bandwidth; latency; consistency; priority; or error rate.
Example 29 includes the method of any of Examples 26-28, wherein: activating the temporary performance boost for the network link at the start of the finite duration comprises: adjusting a network configuration to activate the temporary performance boost; and deactivating the temporary performance boost for the network link at the end of the finite duration comprises: adjusting the network configuration to deactivate the temporary performance boost.
Example 30 includes the method of Example 29, wherein the network configuration includes one or more network configuration parameters, wherein the one or more network configuration parameters include: a number of hops for traffic on the network link; a traffic classification for the traffic on the network link; a scheduling priority for the traffic on the network link; a guaranteed flow bit rate (GFBR) for the traffic on the network link; or a delay critical GFBR for the traffic on the network link.
Example 31 includes the method of any of Examples 29-30, wherein adjusting the network configuration to activate the temporary performance boost comprises: adjusting the network configuration based on a link performance of the network link, wherein the link performance includes: an actual link performance; or a predicted link performance.
Example 32 includes the method of any of Examples 26-31, wherein the finite duration includes: a temporal duration; a spatial duration; or a data consumption limit.
Example 33 includes the method of Example 32, wherein the temporal duration includes: a time period; or a session duration.
Example 34 includes the method of any of Examples 32-33, wherein the spatial duration is based on a location of the endpoint.
Example 35 includes the method of Example 34, wherein the spatial duration includes a period in which the endpoint is located within: a particular geographical area; or a coverage area of one or more wireless base stations.
Example 36 includes the method of any of Examples 26-35, wherein the LPE request is received from the endpoint or the service provider.
Example 37 includes the method of any of Examples 26-36, further comprising: determining a cost associated with the LPE request; and charging the cost to the endpoint or the service provider.
Example 38 includes the method of any of Examples 26-37, wherein: the network link includes a wireless link or a wired link; the endpoint includes an end user, an end user device, a user device, an endpoint device, a user equipment (UE) device, a mobile device, a mobile phone, a mobile station, a tablet, a wearable device, a laptop, a personal computer, a camera, a server, a data center, a roadside unit, equipment, or infrastructure; and the service provider includes a network service provider, an Internet service provider, a cellular service provider, a content delivery network, a media streaming service, a video streaming service, an online gaming service, a video call service, a voice call service, a web service, an edge service, a cloud service, an edge server, a cloud server, or a data center.
Example 39 includes an apparatus comprising means to perform a method as claimed in any preceding example.
Example 40 includes at least one machine-accessible storage medium having instructions stored thereon, wherein the instructions, when executed on processing circuitry, cause the processing circuitry to perform a method or realize an apparatus as claimed in any preceding example.

While the concepts of the present disclosure are susceptible to various modifications and alternative forms, specific embodiments thereof have been shown by way of example in the drawings and are described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one of A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

## Claims

1. A method, comprising:
receiving, via interface circuitry, a link performance elevation (LPE) request, wherein the LPE request is a request to temporarily boost performance of a network link between an endpoint and a service provider for a finite duration;
activating a temporary performance boost for the network link at a start of the finite duration; and
deactivating the temporary performance boost for the network link at an end of the finite duration.

2. The method of Claim 1, wherein the temporary performance boost includes a temporary increase in one or more quality of service (QoS) parameters for the network link.

3. The method of Claim 2, wherein the one or more QoS parameters include:
bandwidth;
latency;
consistency;
priority; or
error rate.

4. The method of any of Claims 1-3, wherein:
activating the temporary performance boost for the network link at the start of the finite duration comprises:
adjusting a network configuration to activate the temporary performance boost; and
deactivating the temporary performance boost for the network link at the end of the finite duration comprises:
adjusting the network configuration to deactivate the temporary performance boost.

5. The method of Claim 4, wherein the network configuration includes one or more network configuration parameters, wherein the one or more network configuration parameters include:
a number of hops for traffic on the network link;
a traffic classification for the traffic on the network link;
a scheduling priority for the traffic on the network link;
a guaranteed flow bit rate (GFBR) for the traffic on the network link; or
a delay critical GFBR for the traffic on the network link.

6. The method of any of Claims 4-5, wherein adjusting the network configuration to activate the temporary performance boost comprises:
adjusting the network configuration based on a link performance of the network link, wherein the link performance includes:
an actual link performance; or
a predicted link performance.

7. The method of any of Claims 1-6, wherein the finite duration includes:
a temporal duration;
a spatial duration; or
a data consumption limit.

8. The method of Claim 7, wherein the temporal duration includes:
a time period; or
a session duration.

9. The method of any of Claims 7-8, wherein the spatial duration is based on a location of the endpoint.

10. The method of Claim 9, wherein the spatial duration includes a period in which the endpoint is located within:
a particular geographical area; or
a coverage area of one or more wireless base stations.

11. The method of any of Claims 1-10, wherein the LPE request is received from the endpoint or the service provider.

12. The method of any of Claims 1-11, further comprising:
determining a cost associated with the LPE request; and
charging the cost to the endpoint or the service provider.

13. The method of any of Claims 1-12, wherein:
the network link includes a wireless link or a wired link;
the endpoint includes an end user, an end user device, a user device, an endpoint device, a user equipment (UE) device, a mobile device, a mobile phone, a mobile station, a tablet, a wearable device, a laptop, a personal computer, a camera, a server, a data center, a roadside unit, equipment, or infrastructure; and
the service provider includes a network service provider, an Internet service provider, a cellular service provider, a content delivery network, a media streaming service, a video streaming service, an online gaming service, a video call service, a voice call service, a web service, an edge service, a cloud service, an edge server, a cloud server, or a data center.

14. An apparatus comprising means to perform a method as claimed in any preceding claim.

15. At least one machine-accessible storage medium having instructions stored thereon, wherein the instructions, when executed on processing circuitry, cause the processing circuitry to perform a method or realize an apparatus as claimed in any preceding claim.
